# EUROPEAN PATENT APPLICATION

(11) **EP 1 022 400 A1**
(43) Date of publication of application: **26.07.2000**
(21) Application number: 98914107.2
(22) Date of filing: 20.04.1998
(51) Int. Cl.: E04B 1/94, B32B 5/18, B32B 5/24

(54) **COMPOSITE REFRACTORY BUILDING MATERIAL, METHOD OF MANUFACTURING THE SAME, GYPSUM BOARD, AND RESIN COMPOSITION**

(30) Priority: 26.09.1997 JP 27992297; 17.02.1998 JP 5280698; 17.02.1998 JP 5280798; 17.02.1998 JP 5280898; 17.02.1998 JP 5280998; 18.02.1998 JP 5442898; 18.02.1998 JP 5442998; 18.02.1998 JP 5443098; 19.02.1998 JP 5617498; 25.02.1998 JP 6227598
(71) Applicant: IBIDEN CO., LTD., Ogaki-shi Gifu-ken 503-8604 (JP)
(72) Inventor: MATSUNO, Yoshimi, Ibi-gun Gifu-ken 501-0695 (JP); OGAWA, Tetsuji, Ibi-gun Gifu-ken 501-0695 (JP); SATO, Kenji, Ibi-gun Gifu-ken 501-0695 (JP); NISHIMURA, Tetsuya, Ibi-gun Gifu-ken 501-0695 (JP)
(74) Representative: Kramer, Reinhold, Dipl.-Ing.
(86) International application number: JP9801809
(87) International publication number: WO9916984

(57) **Abstract**

Since a refractory composite constructional material is a material in which a reinforcing layer composed of a thermosetting resin and a mineral fiber is provided on at least one side of a porous inorganic core material such as a plasterboard, it is excellent in the refractory properties, the processing properties, the laying properties, the nail endurance force and the strength, is light and low cost. A plurality of plasterboards may be laminated. A covering layer for preventing a plaster powder from flying may be formed on a butt end surface of a refractory composite constructional material. A patterned layer or an electromagnetic wave shielding layer may be provided on a refractory composite constructional material. A resin composition comprising a thermosetting resin and an elastic polymer has the nail endurance force. This resin composition may be impregnated into a porous substrate or a fibrous substrate and cured to make a molded sheet which may be laminated on a core material to make a molded plate.

## Description

### TECHNICAL FIELD

The present invention relates to a refractory composite constructional material and a process for producing the same as well as a plasterboard and a resin composition used therefor, particularly, a constructional material which is light and has the processing characteristics, the constructional properties, refractory properties and the strength.

### BACKGROUND ART

### (Prior Arts)

As a constructional material, there have hitherto been proposed various practical constructional materials having the excellent strength using an inorganic material and an organic material as follows:
1) Since a plasterboard has the heat resistance and the thermal insulating properties and is low cost, it is used as a constructional material such as a wall material. A prepreg of a thermoplastic resin is applied to a plasterboard to obtain a composite material which is used as a wall material or a partitioning material. Since a plasterboard imparts the water resistance and the strength, it is used by applying a water-resistant paper on both sides of a plaster plate.
2) JP-A-2-231135 discloses the techniques by which an expanding graphite sheet also having the refractory properties is laminated on a substrate comprising a plaster plate.
3) JP-A-2-17867 proposes a composite material comprising a substrate formed by hot-pressing a mineral aggregate containing a thermosetting resin composite and a surface resin layer which was forming-integrated on the surface of this substrate by hot pressing upon forming the substrate. When this composite material was actually manufactured, it was confirmed that the material is excellent in the impact strength and practical.
4) Recently, with an inclination of electronizing business apparatuses, an attention is paid to a free access floor (hereinafter referred to as "FA floor") provided with a wiring takeout port of a business apparatus. A substrate for the FA floor is required to endure the weight of a computer and not to break even when a computer or the like is fallen at earthquake and, since a wiring is provided on an underside of a floor, it is also required to be excellent in the refractory properties so as to endure even a cable fire. As a substrate for such the FA floor, there are (i) a substrate using a metal such as steel and aluminum, (ii) a substrate made of a resin such as polyvinyl chloride, ABS resin and polypropylene, (iii) a substrate made of a concrete reinforced with fibers, (iv) a calcium silicate plate to which a metal plate is applied, and (v) a wooden substrate such as a particleboard.
5) JP-A-6-182917 discloses proposes a fiber plate for construction to which the acoustical properties are imparted by laminating a phenol resin foam on a mixture of a mineral fiber plate such as glass wool and a synthetic resin.
6) JP-A-7-329235 discloses a constructional material in which a reinforcing layer comprising a thermoplastic resin with fibers blended is applied to the surface of a plasterboard.

### (Problem to be solved)

However, the aforementioned constructional materials have the following problems:
1) As regards a plasterboard, there is a problem that since a plaster plate itself is soft and, additionally, a water-resistant paper has the low strength, when an object is hit, a recess is produced and a plasterboard is cracked. There is also a problem that once a wall paper is applied on the surface of a plasterboard, the application can not be performed again. Further, there is a need that since a plasterboard is low in the water resistance, some improvement is tried. Plaster powders are flown from a butt end surface of a plasterboard, staining the surroundings in some cases. Further, there is also a problem that since a plasterboard is low in the nail holding force, a struck nail comes off.
2) In the techniques of laminating an expanding graphite sheet on a plaster plate which is described in JP-A-2-231135, there is a problem that a plaster plate itself is low cost as about 300 yen/m² while an expanding graphite sheet to be laminated thereon is very high cost as 20 to 30 thousands yen/m² which results in an extremely expensive constructional material as a whole. There is also a problem that since a graphite sheet is used for the surface, graphite is attached to stain a hand when touch it and, thus, the disclosed constructional material is not suitable for using a wall material which constitutes a human residence space.
3) In the techniques described in JP-A-2-17867, since an amount of fibers of a core material is small, the disclosed constructional material is of high specific gravity, heavy, and difficult to process and, thus, there is room for improvement.
4) (i) A substrate using a metal such as steel and aluminum, (iii) a substrate made of a concrete reinforced with fibers, and (iv) a calcium silicate plate to which a metal plate is applied are heavy and inferior in the processing properties. (ii) A substrate made of a resin such as polyvinyl chloride, ABS resin and polypropylene and (v) a particleboard are inferior in the refractory properties. For this reason, a floor covering material which is high in the strength, light, and excellent in the refractory properties and the processing properties has never developed.
5) In the techniques described in JP-A-6-182917, since a phenol resin foam plate is used as a substrate, there is a problem that the cost is remarkably high as compared with the case where a plaster plate is used.
6) In the techniques of JP-A-7-329235, since a reinforcing layer is thermoplastic, there is a problem that the disclosed constructional material is inferior in the heat resistance and the fire resistant properties.

### (Object of Invention)

A main object of the present invention is to provide a refractory composite constructional material which is excellent in the refractory properties, the processing properties, the constructional properties, the resistance to nail force and the strength, is light and low cost, and a process for producing the same, as well as a plasterboard and a resin composition.

### DISCLOSURE OF INVENTION

The present invention is a refractory composite constructional material which comprises a reinforcing layer comprising a thermosetting resin and a mineral fiber provided on at least one side of a porous inorganic core material.

In general, a porous inorganic core material is low cost and excellent in the compression strength but, on the other hand, when a force is applied, the pulling force is generated on the side opposite to the side on which a force was applied, in a porous inorganic core material, and breakage occurs from a point where a force is generated as a start point.

Then, in the refractory composite constructional material of the present invention, the strength relative to the pulling force of a porous inorganic core material is improved by adhering a reinforcing layer on at least one side of a porous inorganic core material. For this reason, even when the pulling force is applied to a refractory composite constructional material of the present invention, the breakage dose not occur.

A reinforcing layer is composed of a thermosetting resin and a mineral fiber and is excellent in the processing properties.

Further, since a refractory composite constructional material of the present invention is composed of a porous inorganic core material, a thermosetting resin, and an mineral fiber, it is light, excellent in the processing properties and low cost.

A reinforcing layer is composed of a thermosetting resin and a mineral fiber. Different from a thermoplastic resin, since a thermosetting resin is excellent in the refractory properties and is not softened at an elevated temperature, the function of a reinforcing layer to reinforce a porous inorganic core material is not lost even when exposed to an elevated temperature.

Then, the present invention is explained in detail.

As the aforementioned porous inorganic material, a plasterboard, a calcium silicate plate, a slag plaster plate, a cement plate, a pearlite plate, an asbestos cement plate, and a light foamed concrete plate are desirable because they are relatively light and low cost. Among them, a plasterboard is particularly preferable. The reason is that a plasterboard is high in the compression strength, particularly light and low cost.

A plasterboard refers to a plate in which a board base paper is attached to the surface of a plaster plate. As a board base paper, a cardboard having the thickness of 0.3 to 0.5 mm obtained by adding a water repellent to a main raw material such as wastepaper and pulp can be used.

A plaster plate refers to a plate body comprising a plaster, and a slag plaster plate refers to a non-combustible material by growing a crystal (etolite, 3CaO, Al₂O₃, 3CaSO₄/31-32H₂O) by especially catalytic-treating a blast furnace slag and plaster dihydrate. An asbestos cement plate refers to a cement article obtained by mixing an asbestos with a cement, kneading with water, pressing strongly into a plate to remove water and curing.

A pearlite plate refers to, generally, an asbestos cement pearlite plate, that is, a plate obtained by adding water to a main raw material such a cement asbestos and/or pearlite to mix, which is molded and cured.

It is desirable that the thickness of a porous inorganic core material is 15 mm to 30 mm. The reason is that, in this range, the sufficient stiffness, anti-impact properties and the processing properties are obtained and when used as a substrate for a FA floor, a wiring space under a floor can be sufficiently maintained.

A plurality of porous inorganic core materials having the thickness of less than 15 mm may be laminated to adjust to the above thickness.

The thickness of the above porous inorganic core material refers to the thickness including that of a board base paper when the board base paper is applied.

A reinforcing layer is adhered to at least one side of the above porous inorganic core material. When a refractory composite constructional material of the present invention is used as a floor covering material, a reinforcing layer is preferably formed at least on the back side (side opposite to the above floor level side) of a porous inorganic core material.

Alternatively, a reinforcing layer may be formed only on one side of a porous inorganic core material or both sides thereof.

Further, preferably, a reinforcing layer is adhered to the back side of a porous inorganic core material. Thereby, when a refractory composite constructional material is used as a floor covering material, it can exert the excellent strength relative to the pushing pressure applied from above a floor covering material, that is, from the surface side.

A reinforcing layer is composed of a thermosetting resin and a mineral fiber.

It is good that a thermosetting resin is one or more selected from the group consisting of phenol resin, melamine resin, epoxy resin, polyimide resin and urea resin.

As a mineral fiber, a glass fiber, a rock wool and a ceramic fiber are desirable because they are low cost and excellent in the heat resistance and the strength.

As a mineral fiber, a discontinuous fiber may be formed in the form of a mat, or a continuous long fiber may be cut into pieces of 3 to 7 cm to form a mat (chopped strand mat), or a continuous long fiber may be laminated in the form of vortex to form a mat, or a continuous long fiber may be woven.

Alternatively, a reinforcing layer may be obtained by impregnating a mineral fiber comprising a glass fiber sheet with a thermosetting resin and, followed by curing.

The content of a thermosetting resin contained in the reinforcing layer is desirably 10 to 65% by weight. The reason is that, in this range, the sufficient stiffness and anti-impact properties can be obtained and the high refractory properties can be maintained.

The thickness of the reinforcing layer is desirably 0.3 mm to 3.5 mm. The reason is that, in this range, the sufficient stiffness and anti-impact properties can be obtained and the high processing properties can be maintained.

When the above board base paper is used, a ratio of a reinforcing layer relative to a board base paper is preferably 0.01 to 0.63, more preferably 0.03 to 0.36. Thereby, the refractory properties and the strength of a refractory composite constructional material are improved.

A flame-retardant such as aluminum hydroxide and magnesium hydroxide, and the mineral binder which is generally used such as silica sol, alumina sol and water glass may be added to the reinforcing layer. Alumina sol are a sol in which Al₂O₃ particles having the size of 10 to 100 nm are dispersed in water and its concentration is preferably 20 to 40% by weight.

Thereby, a reinforcing layer may be formed uniformly.

Preferably, a reinforcing layer contains one or more elastic polymer selected from the group consisting of rubber latex, acrylic latex, acrylate latex and urethane latex in order to impart the nail endurance force thereto.

The thickness of the refractory composite constructional material is preferably 9.8 to 37.0 mm. When it is less than 9.8 mm, there is a possibility that the strength is lowered.

When it exceeds 37.0 mm, the effects can not be expected.

A refractory composite constructional material of the present invention can be use as a constructional material such as a floor covering material, a wall material, a partitioning material, a ceiling material, a furniture and a door. When a refractory composite constructional material of the present invention is used as a floor covering material, it is preferred that it is cut into the suitable size pieces and panelized. Thereby, construction of a floor covering material becomes easy, the degree of freedom of a combination of floor covering materials upon construction is increased and construction can be performed by combining into an arbitrary shape depending upon a shape of a floor. It may be used a substrate for a FA floor.

### (Process for producing a refractory composite constructional material)

As a process for producing the above refractory composite constructional material, for example, upon producing a refractory composite constructional material comprising a reinforcing layer comprising a thermosetting resin and a mineral fiber provided on at least one side of the face side and the back side of a porous inorganic core material, there is a process for producing a refractory composite constructional material, which comprises:
a step of impregnating a mat comprising a mineral fiber with a thermosetting resin and a curing agent in advance, and drying to prepare a mat impregnated with a resin, and
a step of laminating the mat impregnated with a resin one at least one side of the face side and the back side of a porous inorganic core material, and pressing under heating.

In this process, a mineral fiber is impregnated with a thermosetting resin and a curing agent in advance, and dried to prepare a mat impregnated with a resin, which is laminated on a porous inorganic core material, and pressed under heating.

For the reason, the adhesive properties between a mineral fiber and an impregnated thermosetting resin are improved. Since mineral fibers are easily adhered mutually, an impregnation rate of a thermosetting resin can be improved, leading to the advantages.

Since a mat impregnation with a resin is laminated on a porous inorganic core material and applied to a porous inorganic core material by heat pressing, it is not necessary to use an adhesive separately. Further, a manufacturing process can be simplified.

According to a process of the present invention, a refractory composite constructional material having the same excellent properties as those of the aforementioned refractory composite constructional material can be obtained. That is, a refractory composite constructional material which is excellent in the refractory properties, the processing properties and the compression strength, dose not break even when the pulling force is applied, and is light can be obtained.

Then, the present invention is explained in detail.

A mat impregnated with a resin comprising a mat comprising the above mineral fiber impregnated with a thermosetting resin and a curing agent forms a reinforcing layer.

As the above mineral fiber, a glass fiber, a rock wool and a ceramic fiber are desirable because they are low cost and high in the heat resistance and the strength.

As a mat comprising the above mineral fiber, a discontinuous fiber may be formed in the form of a mat, or a continuous long fiber may be cut into 3 to 7 cm pieces to form a mat (chopped strand mat), or a continuous long fiber may be laminated in the form of a vortex to form a mat, or further a continuous long fiber may be woven.

As the above thermosetting resin, a phenol resin, a melamine resin, an epoxy resin, a polyimide resin and an urea resin are good.

The above curing agent can cure the above thermosetting resin upon heating. As such the curing agent, for example, an alkali or acid curing agent is used. More particularly, ammonia, sodium hydroxide, an inorganic acid such as sulfuric acid and hydrochloric acid, various organic acids such as sulfonic acid, naphthenic acid and carboxylic acid, hydrogen peroxide and the like can be used. The kind of the curing agent is appropriately selected depending upon the kind of a thermosetting resin.

In the above mat impregnated with a resin, the content of the thermosetting resin is preferably 20 to 200 parts by weight relative to 100 parts by weight of the above mineral fiber.

Thereby, the sufficient stiffness and the anti-impact properties can be obtained, and the high refractory properties can be maintained. On the other hand, the content is less than 20 parts by weight, there is a possibility that the tensile strength, the bending strength and the anti-impact properties are lowered. On the other hand, when the content exceeds 200 parts by weight, there is a possibility that the refractory properties of a refractory composite constructional material is lowered.

The content contained in the mat impregnated with a resin is appropriately selected depending upon the content and the kind of a thermosetting resin.

The above mat impregnated with a resin has desirably such the thickness that the thickness of a reinforcing layer formed by the laminating heat pressing is 0.3 mm to 3.5 mm. Thereby, the sufficient stiffness and the anti-impact properties and the high prosessing properties can be maintained.

A flame-retardant such as aluminum hydroxide and magnesium hydroxide, as well as an inorganic binder which is generally used such as silica sol, alumina sol and water glass maybe added to the mat impregnated with a resin. Silica sol and alumina sol are a sol in which a particle comprising SiO₂, Al₂O₃ having the size of 10 to 100 nm is dispersed in water and the concentration thereof is preferably 20 to 40% by weight.

When a refractory composite constructional material is used as a floor covering material, it is preferred that the mat impregnated with a resin is laminated at least on the back side (for example, opposite to the interior of a room) of a porous inorganic core material. Thereby, a floor covering material having the excellent resistance to the pulling force from the upper direction to the down direction can be obtained.

As the porous inorganic core material, a plasterboard is desirably used as explained above. As the porous inorganic material, a calcium silicate plate, a slag plaster plate, a cement plate, a pearlite plate, a asbestos cement plate, a light formed concrete plate and the like can be used in addition thereto.

The conditions where a reinforcing layer is laminated on the porous inorganic core material and pressed under heat pressing are preferably at 70 to 130 °C and a pressure of not greater than 10 kg/cm². Alternatively, in order to make better the adhesive properties between the surface of a porous inorganic core material and a mat impregnated with a resin than before lamination, a dilute solution of a phenol, epoxy or melamine resin may be coated thereon.

Alternatively, between a step of making the mat impregnated with a resin and a step of laminating the mat impregnated with a resin, a step of applying a solution of an uncured thermosetting resin on the reinforcing layer forming surface of the porous inorganic core material in advance and drying it is preferably carried out.

Like this, by coating a thermosetting resin solution on a side for forming a reinforcing layer of a porous inorganic material in advance, drying, and laminating a mat impregnated with a resin thereon to heat pressing, a thermosetting resin solution is sufficiently soaked into a side for forming a reinforcing layer of a porous inorganic material and the soaked thermosetting resin adhere firmly a side for forming a reinforcing layer and a mat impregnated with a resin. Therefore, a reinforcing layer integrated firmly with a porous inorganic material can be formed.

In particular, when a porous inorganic core material is a plasterboard in which a board base paper is applied to a plaster plate, since a board base paper has the water resistance, even when a mat impregnated with a resin is heat-pressed, a resin is not sufficiently soaked into a board base paper, and the adhesion properties of a mat impregnated with a resin to a porous inorganic core material was insufficient. However, in the present invention, since a thermosetting resin solution is coated also on a side for forming a reinforcing layer and dried in advance, a thermosetting resin is sufficiently soaked into a board base paper having the low resin permeability. Therefore, a mat impregnated with a resin can be adhered firmly to a side for forming a reinforcing layer.

A thermosetting resin and a curing agent are soaked into a mineral fiber in advance, and dried to make a mat impregnated with a resin which is laminated on a porous inorganic core material and heat-pressed. For this reason, the adhesive properties between a mineral fiber and a soaked thermosetting resin are improved. Mineral fibers are easily adhered mutually and an impregnation rate of a thermosetting resin can be improved, being advantageous.

Since a mat impregnated with a resin is applied to a porous inorganic core material by laminating on a porous inorganic core material and heat-pressing, it is not necessary to separately use an adhesive and a manufacturing process can by simplified.

A thermosetting resin solution which is coated on a side for forming a reinforcing layer of the above porous inorganic core material in advance is, for example, a liquid in which a thermosetting resin is dispersed or dissolved in a solvent. As such the thermosetting resin, a phenol resin, a melamine resin, an epoxy resin, a polyimide resin, an urea resin and the like are better. A thermosetting resin in a thermosetting resin solution may be the same as or different from a thermosetting resin to be soaked into a mat described below. The kind of a curing agent may be the same as or different from that to be soaked into a mat.

In viewpoint of the adhesive properties, an amount of a thermosetting resin solution is preferably such that the whole reinforcing layer forming side is covered.

As a method of applying a thermosetting solution to a reinforcing layer forming side, there are a method of soaking a porous inorganic core material into the thermosetting resin solution, a method of coating the thermosetting resin solution on a porous inorganic core material with sprayer or a roller, and a method of soaking a porous inorganic core material in a thermosetting resin solution.

To the above manufacturing process, the following methods for manufacturing a refractory composite constructional material:
(i) There is a method of forming a mineral fiber into which an inorganic or organic binder is soaked, into a plate in advance, soaking a thermosetting resin composition therein, drying and curing, which is applied to a porous inorganic core inorganic material via a surface adhesive.
(ii) There may be a method of soaking a resin composition into a mat of a mineral fiber and drying and, thereafter, heat-pressing to cure a thermosetting resin to form, which is applied to a porous inorganic core material via a surface adhesive.
(iii) Alternatively, there may be a method of soaking a resin composition into a mat of a mineral fiber and, if necessary, drying, which is laminating on a porous inorganic core material and heat-pressed to cure a thermosetting resin to form.
(iv) Alternatively, there may be a method of coating a thermosetting resin on a porous inorganic core material, and placing a mat of a mineral fiber thereon and heat-pressing it.
(v) There may be adapted a method of coating a thermosetting resin such as a phenol resin on the fiber surface of a glass fiber, a rock wool or a ceramic fiber at a B stage, which is laminated on a porous inorganic core material and heat-pressed.

In a method of coating a thermosetting resin on the fiber surface at a B stage, the adhesive properties to the soaked resin are improved, fibers are easily adhered mutually and an impregnation rate of a resin can be improved, being advantageous.

In such the coating method, a raw material melt of a glass fiber, a rock wool or a ceramic fiber is flown out from a nozzle, fiberized by a blowing method or a centrifugation method and, at the same time with this fiberization, a solution of a thermosetting resin such as a phenol resin is sprayed to aggregate fibers. When a glass fiber, a rock wool or a ceramic fiber is used, a silane coupling agent may be coated thereon.

Then, a preferable aspect if the refractory composite constructional material is explained.

### (The case where a porous inorganic core material is a laminate of a plurality of plasterboards)

It is preferred that the porous inorganic core material is obtained by laminating and adhering a plurality of plasterboards.

A thin plasterboard is more productive and lower cost than a thick plasterboard. For this reason, it is lower cost in the production to laminate a plurality of thin plasterboards and which is used as a porous inorganic core material than to use single layer of a thick plasterboard as a porous inorganic core material.

It is preferable that the thickness of a porous inorganic core material is 9.5 to 30.0 mm. The reason is that, in this range, the sufficient stiffness and anti-impact properties can be obtained and a wiring space under a floor can be sufficiently maintained and, additionally, the high processing properties can be obtained. On the other hand, when the thickness is less than 9.5 mm, there is a possibility that the sufficient stiffness and anti-impact properties can not be obtained. When the thickness exceeds 30.0 mm, the effects can be obtained with difficulty.

In particular, it is preferred that the thickness of a porous inorganic core material is 19 to 25 mm. Thereby, the more excellent stiffness, anti-impact properties and processing properties can be obtained.

It is preferred that the specific gravity of a porous inorganic core material is 0.9 to 1.5. Thereby, the relatively light weight as well as the excellent stiffness and anti-impact properties can be exerted. On the other hand, when the specific gravity is less than 0.9, there is a possibility that a porous inorganic core material becomes fragile. When the specific gravity exceeds 1.5, there is a possibility that weight-saving is prevented.

The specific gravity of the porous inorganic core material refers to the specific gravity including the thickness of a board base paper described below when it is applied thereto.

The above specific gravity refers to a value expressed by a ratio of a volume specific gravity as compared with a standard of the volume specific gravity of water at 4 °C.

When a porous inorganic core material is a laminate of a plurality of plaster plates, the number of lamination vary depending upon the thickness of each plaster plate but it is preferably 2 to 10 layered. Thereby, the strength of a refractory composite constructional material is further improved.

It is preferred that a board base paper is applied to at least one side of the face side and the back side of the porous inorganic core material. Thereby, the mechanical strength such as the bending strength, the stiffness, the anti-impact properties and the water resistance of a refractory constructional material is improved. As the board base paper, for example, a cardboard in which a wastepaper and a pulp are used as a main component and a water repellant is added thereto and which has the thickness of around 0.3 to 0.5mm can be used.

A board base paper may also be provided between respective plaster plates. A board base paper is applied to each surface and/or the back side of each plaster plate to make a plasterboard which is laminated and the laminate can be used as a porous inorganic core material. A plaster plate is different from a plasterboard in which a board base paper is applied to a plaster in that the plaster plate is composed of a plaster.

Respective plaster plates are adhered by an interlayer adhesive therebetween. It is preferred that the interlayer adhesive is one or more selected from the group consisting of a phenol resin, an epoxy resin, an urethane resin, a melamine resin, a resorcinol resin and a vinyl acetate resin. Thereby, the deflection of the whole refractory composite constructional material can be prevented.

When the board base paper is used, a ratio of the thickness of a reinforcing layer relative to that of the board base paper is preferably 0.01 to 0.63, more preferably 0.03 to 0.36.

Thereby, the refractory properties and the strength can be improved.

The reinforcing layer may be adhered to the porous inorganic core material by a surface adhesive. Thereby, a reinforcing layer is firmly adhered to a porous inorganic core material.

As the surface adhesive, either of the same resin as a thermosetting resin contained in a reinforcing layer or a different resin from the thermosetting resin may be used. It is preferred that a surface adhesive is one or more selected from the group consisting of a phenol resin, an epoxy resin, a resorcinol resin and a melamine resin. Since these surface adhesives have the small deflection after adhesion, the whole refractory composite constructional material can be inhibited.

As a surface adhesive, an urethane resin and a vinyl acetate may be used besides those described above.

### (The thickness when a porous inorganic core material is a plasterboard or a plaster plate)

It is preferred that the porous inorganic core material is a plasterboard or a plaster plate having the thickness of 9.5 to 25.0 mm.

Since the thickness of a plasterboard or a plaster plate is 9.5 to 25.0 mm, a refractory composite constructional material using this exerts the excellent strength. This is because, in this range, the sufficient stiffness and anti-impact properties are obtained and the high processing properties are obtained.

When a refractory composite constructional material is used as a floor covering material, a wiring space under floor can be sufficiently maintained. On the other hand, when the thickness is less than 9.5 mm, the strength required for a refractory composite constructional material can not be imparted in some cases. The thickness exceeds 25.0 mm, the effects can not be obtained.

It is preferable that the thickness of a plasterboard or a plaster plate is 19 to 25 mm. Thereby, more excellent stiffness, anti-impact properties and processing properties are obtained.

It is preferred that the specific gravity of a plasterboard or a plaster plate is 0.9 to 1.5. Thereby, the relatively light weight as well as the excellent stiffness and anti-impact properties can be obtained. On the other hand, when the specific gravity is less than 0.9, a plasterboard or a plaster plate may be fragile. When the specific gravity exceeds 1.5, there is a possibility that weight-saving is prevented.

It is preferred that the plasterboard has the bending strength of 80 to 350 kgf/cm², the bending Young's modulus of 35,000 to 70,000 kgf/cm². Thereby, the strength of a refractory composite constructional material is further improved.

On the other hand, when the bending strength is less than 80 kgf/cm² or the bending Young's modulus is less than 35,000 kgf/cm², there is a possibility that the strength of a refractory composite material becomes insufficient. The bending strength exceeds 350 kgf/cm² or the bending Young's modulus exceeds 70,000 kgf/cm², the strength becomes excess as a floor covering material and the effects can not be expected.

### (The specific gravity when a porous inorganic core material is plasterboard or a plaster plate)

It is preferred that the porous inorganic core material is a plasterboard or a plaster plate having the specific gravity of 0.9 to 1.5. Thereby, a refractory composite constructional material using a plasterboard or a plaster plate as a core material has the excellent strength. On the other hand, when the specific gravity is less than 0.9, the strength required for a refractory composite constructional material can not be imparted in some cases. When the specific gravity exceeds 1.5, weight-saving of a refractory composite constructional material is prevented.

A plasterboard or a plaster plate is excellent in the refractory properties and the compression strength.

Since the surface of a porous inorganic core material is covered with a reinforcing layer, the pulling force can be further enhanced. Other refractory composite constructional materials having the above specific gravity can exert, in the present invention, the same effects as those of the case where the thickness of the plasterboard or a plaster plate is 9.5 to 25.0 mm.

In a refractory composite constructional material having the above specific gravity, it is preferred that the above plasterboard or plaster plate is 9.5 to 25.0 mm. It is preferred that the plasterboard has the bending strength of 80 to 350 kgf/cm² and the bending Young's modulus of 35,000 to 70,000 kgf/cm². Both are due to the same reason as that for the first invention.

### (The strength of a refractory composite constructional material when a porous inorganic core material is plasterboard)

It is preferred that the porous inorganic core material is a plasterboard and the plasterboard has the bending strength of 80 to 350 kgf/cm² and the bending Young's modulus of 35,000 to 70,000 kgf/cm². Thereby, a refractory composite constructional material can exert the excellent strength. On the other hand, when the bending strength of the plasterboard is less than 80 kgf/cm² or the bending Young's modulus is less than 35,000 kgf.cm², there is a possibility that the strength of a refractory composite constructional material becomes insufficient. When the bending strength exceeds 350 kgf/cm² or the bending Young's modulus exceeds 70,000 kgf/cm², the strength becomes excess as a floor covering material and the effects can not be expected.

A plasterboard is excellent in the refractory properties and the compression strength.

Since the surface of a porous inorganic core material is covered with a reinforcing layer, the pulling force can be further enhanced.

Also in other refractory composite constructional materials having the above strength, the same effects as those of a refractory composite constructional material having the thickness can be exerted.

In a refractory composite constructional material, it is preferred that the plasterboard has the thickness of 9.5 to 25.0 mm. It is preferred that the specific gravity of the plasterboard is 0.9 to 1.5. Both are due to the same reason as that for a refractory composite constructional material having the above thickness.

### (The case where the content of a thermosetting resin of a reinforcing layer is not greater than 20% by weight)

It is preferred that the content of a thermosetting resin in the reinforcing layer is not greater than 20% by weight.

In this case, a water resistant paper may be further provided between the both sides of the above plasterboard and the above reinforcing layer, or alternatively, a patterned layer comprising a pattern paper impregnated with a thermosetting resin or patterned layer in which a core material impregnated with a thermosetting resin and pattern paper impregnated with a thermosetting resin are successively laminated may be further provided on the above reinforcing layer. As the above water resistant paper, for example, the above board base paper can be used.

In the present invention, the above patterned layer may be embossed, or the above patterned layer is provided on a reinforcing layer on one side of the above plasterboard and a backer layer comprising a core material impregnated with a thermosetting resin may be provided on a reinforcing layer on the other side of the above plasterboard.

And as a method of manufacturing a refractory composite constructional material having a reinforcing layer having the resin content, there is a method of heat-pressing a mineral fiber mat in which a thermosetting resin is attached to a mineral fiber to form a reinforcing layer containing a mineral fiber and not greater than 20% by weight of a thermosetting resin on both sides of a plasterboard, respectively.

According to refractory composite constructional material having a reinforcing layer having the above resin content, since a reinforcing layer containing a thermosetting resin and a mineral fiber is formed on both sides of a plasterboard, a reinforcing layer has the high strength and, thus, even when an object hits the constructional material, a recess or a crack can be prevented from occurring. Since the reinforcing layer contains a thermosetting resin and mineral fiber, even when a wall paper is applied thereon, it can be peeled and, since the content of a thermosetting resin is not greater than 20% by weight, the fireproofing properties can be improved and the material cost can be suppressed to the relatively low and weight-saving can be performed and, further, since a reinforcing layer containing a thermosetting resin and mineral fiber covers both sides of a plasterboard, the water resistance and the refractory properties of a constructional material provided with a plasterboard can be enhanced.

When the content of a thermosetting resin is less than 15% by weight, it is more suitable.

When according to this refractory composite constructional material, when a water resistant paper is further provided between both sides of a plasterboard and a reinforcing layer, the further high strength can be obtained. And when a patterned layer comprising a pattern paper impregnated with a thermosetting resin or a patterned layer in which a core material impregnated with a thermosetting resin and a pattern paper impregnated with a thermosetting resin are successively laminate is further provided, on a reinforcing layer, it comprises not greater than 20% by weight of a phenol resin as a thermosetting resin in order to decorate the surface of a mounted constructional material. As a glass fiber for forming this reinforcing layer, a mat-like glass fiber in which an uncured phenol resin is attached to the surface of the fiber in advance is used. Since it is not necessary to apply a pattern paper or the like, the construction properties can be improved.

Further, when the patterned layer is embossed, the higher decorating effects can be obtained. When a patterned layer is provided on a reinforcing layer on only one side of a plasterboard and a backer layer comprising a core material impregnated with a thermosetting resin is further provided on a reinforcing layer on the other side of the plasterboard, the shrinking force upon curing of a patterned layer can be counteracted with the shrinking force upon curing of a backer layer to prevent warpage of the constructional material from occurring.

According to a method of manufacturing a refractory composite constructional material having a reinforcing layer of the above resin content, since a mineral fiber mat in which a thermosetting resin is attached to a mineral fiber is heat-pressured to form a reinforcing layer containing a mineral fiber and not greater than 20% by weight of a thermosetting resin on both sides of a plasterboard, respectively, a reinforcing layer containing a mineral fiber and not greater than 20% by weight of a thermosetting resin which can not be formed previously can be formed and a refractory composite constructional material of the present invention described above, therefore, the various advantageous effects described above can be obtained.

### (The case where the content of a thermosetting resin in a reinforcing layer is 20 to 200 parts by weight relative to 100 parts by weight of a mineral fiber)

It is preferred that the content of the above thermosetting resin is 20 to 200 parts by weight relative to 100 parts by weight of the mineral fiber. Thereby, the tensile strength, the bending strength, the anti-impact properties and the refractory properties can be further enhanced. On the other hand, when a thermosetting resin is less than 20 parts by weight, there is a problem that the tensile strength, the bending strength and the anti-impact properties are lowered. When the thermosetting resin exceeds 200 parts by weight, the refractory properties are lowered in some cases.

A reinforcing layer contains a thermosetting resin and a mineral fiber at the aforementioned rate. It is further preferable that a reinforcing layer contains 40 to 120 parts by weight of a thermosetting resin relative to 100 parts by weight of a mineral fiber. Thereby, the aforementioned properties of a reinforcing layer can be exerted more effectively.

It is desirable that the thickness of the above reinforcing layer is 0.3 mm to 3.5 mm. The reason is that, in this range, the sufficient stiffness and anti-impact properties can be obtained and the high processing properties can be maintained.

It is preferred that a ratio of the thickness t of the above reinforcing layer relative to that T of the above porous inorganic core material (t/T) is 0.01 to 0.7. Thereby, the strength of a refractory composite constructional material is further enhanced. On the other hand, when the ratio is less than 0.01, there is possibility that the anti-pulling properties is lowered. When the ratio exceeds 0.7, there is a possibility that the refractory properties and the processing properties are lowered.

More preferably, a ratio of the thickness t of the reinforcing layer relative to that T of the above porous inorganic core material (t/T) is 0.03 to 0.36. Thereby, the strength of a refractory composite constructional material is further enhanced.

It is preferred that the specific gravity of the above reinforcing layer is 0.5 to 4.0. Thereby, the tensile strength, the bending strength, the anti-impact properties and the heat resistance of a refractory composite constructional material are enhanced. On the other hand, when the specific gravity is less than 0.5, there is a possibility that the tensile strength, the bending strength and the anti-impact properties are lowered.

The specific gravity exceeds 4.0, there is a possibility that the processing properties are lowered.

More preferably, the specific gravity of the above reinforcing layer is 0.77 to 1.95. Thereby, the effects of the reinforcing layer can be effectively exerted.

It is preferable that, as the porous inorganic core material, a plasterboard is used as described above. Besides, a calcium silicate plate, a slag plaster plate, a cement plate, a pearlite plate, an asbestos plate and a light foamed concrete plate can be used.

### (The case where an elastic polymer is contained in a reinforcing layer)

It is preferred that the above reinforcing layer contains a composite resin comprising a thermosetting resin and an elastic polymer, and a mineral fiber.

Thereby, the nail endurance force can be imparted to a refractory composite constructional material. That is, an elastic polymer is brought into the structure where "island" of an elastic polymer is dispersed in "sea" of a thermosetting resin matrix, the strength of a resin can improved and the toughness can be imparted. For this reason, even when a nail is struck into a refractory composite constructional material, a crack dose not occur. An elastic polymer can improve the anti-friction properties of a refractory composite constructional material against a nail and can improve the nail holding force.

It is preferred that the above elastic polymer is, for example, a rubber latex, an acryic latex, an acrylate latex, or an urethane latex. Since they are dispersed in an uncured thermosetting resin solution as a liquid state, they are easily soaked into a porous inorganic core material or a mineral fiber.

As the above rubber latex, nitrile-butadiene (NBR) or styrene-butadiene (SBR) is good.

It is preferred that the above elastic polymer is contained in the composite resin at an amount of 5 to 35% by weight. On the other hand, when the content exceeds 35% by weight, the toughness of a reinforcing layer is lowered and a crack easily occurs and there is a possibility that the nail holding force is lowered. When the content is less than 5% by weight, the resin strength is lowered and there is a possibility that the nail holding force is lowered.

### (The case where a patterned layer is provided on a refractory composite constructional material)

It is preferred that a patterned layer is provided on the uppermost layer of the above refractory composite constructional material. Thereby, the design properties of the above refractory composite constructional material are enhanced.

The above patterned layer is, for example, a melamine patterned plate. A melamine patterned plate refers to a patterned layer comprising a melamine resin and, generally, is composed of an over layer comprising a paper impregnated with a melamine resin, a pattern layer, a backer layer, and a core layer on which a paper impregnated with a phenol resin is laminated. It is preferred that a melamine patterned plate has a melamine backer layer on its back side. Thereby, a melamine patterned layer can be prevented from warping and peeling off a reinforcing layer.

The above patterned layer may be, for example, a carpet. A carpet refers to a rug which is laid on the surface of a floor and examples thereof are a vinyl chloride tile, a cloth carpet and the like.

The above patterned layer may be a natural tree, a patterned plywood, a natural stone or an artificial marble. Thereby, the design properties are further enhanced. Further, the above patterned layer may be a tatami.

A method of covering the patterned layer varies depending upon a material of a patterned layer and an example thereof is a method of fixing a patterned layer to a porous inorganic core material by a method of adhering using an adhesive, or a method of laminating a paper impregnated with an uncured melamine resin and hot-pressing it.

### (The case where an electromagnetic wave shielding layer is provided)

It is preferred that the above refractory composite constructional material has an electromagnetic wave shielding layer. Thereby, a refractory composite constructional material can absorbs an electromagnetic wave. In particular, in a business room provided with a number of computers, it absorbs an electromagnetic wave effectively. For this reason, according to a refractory composite constructional material of the present invention, an influence on human body can be suppressed.

It is preferred that the above electromagnetic wave shielding layer is composed of an electrically-conductive sheet substance.

Thereby, the electromagnetic wave absorbing effect can be enhanced.

It is preferred that the above electromagnetic wave shielding layer is a metal foil. This is because a metal foil not only effectively absorb an electromagnetic wave but also is high in the strength, light and better in the processing properties.

It is preferred that the above metal foil is one or more selected from the group consisting of an aluminum foil, a copper foil, a zinc foil, a stainless foil, a gold foil and a silver foil.

This is because they have the nature of particularly effectively absorbing an electromagnetic wave.

It is preferred that the electromagnetic wave shielding layer is a composite sheet composed of an electrically-conductive filler and a resin. This is because such the composite sheet not only effectively absorbs an electromagnetic wave but also is light, high in the processing properties and also excellent in absorbing a sound and a vibration. An electrically-conductive filler in the composite sheet is powder comprising one or more selected from the group consisting of iron, copper, aluminum, stainless, brass, zinc and carbon. As a resin, for example, phenol, epoxy, polyurethane, urea, polyester, polypropylene and polyethylene can be used.

When the above electromagnetic shielding layer may be an electrically-conductive sheet material such as a composite sheet composed of a metal foil, an electrically-conductive filler and a resin, or an electrically-conductive paint.

An electromagnetic wave shielding layer can be provided on at least one side of a refractory composite constructional material. Since a patterned layer is generally formed on the surface of a refractory composite constructional material, an electromagnetic wave shielding layer is preferably provided on the back.

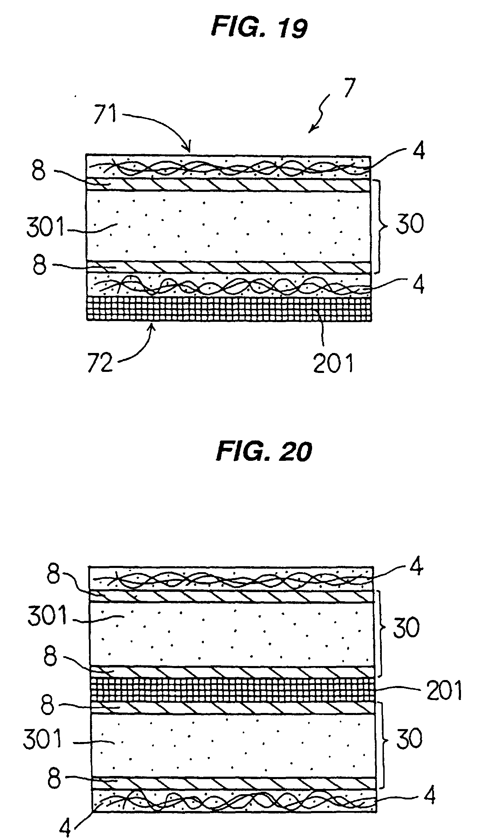

An electromagnetic wave shielding layer may be embedded in a refractory composite constructional material. When embedded, an electromagnetic wave shielding layer may be put between porous inorganic materials as shown in Fig. 20.

The surface of an electromagnetic wave shielding layer may be roughening-treated in order to improve the adhesive properties to a refractory composite constructional material. The depth of the roughened surface is desirably around 0.1 to 100 µm. When a metal foil is used as an electromagnetic wave shielding layer, the thickness is desirably 10 to 500 µm. This is because a metal foil can be thinned since it is excellent in the electrical conductivity. When a composite sheet containing an electrically-conductive filler is used, the thickness thereof is desirably 0.5 to 5 mm. This is because the above composite sheet is required to be made thick since it is inferior in the electrically-conductivity as compared with a metal foil.

A method of covering the above electromagnetically shielding layer varies depending upon a material thereof, and there are a method of adhesion by coating an adhesive, for example, an adhesive selected from at least one or more selected from a phenol resin, an epoxy resin, a resorcinol resin, a melamine resin, an urethane resin and a vinyl acetate resin on a side of a porous inorganic core material or on a side of an electromagnetic wave shielding layer and joining the both to cure, and a method of coating a mixture with an electrically-conductive filler and a resin.

### (The shape of a refractory composite constructional material)

It is preferable that the above refractory composite constructional material has a penetrated hole. A penetrated hole can be used as, for example, a hole for fixing a fitment for construction, as an electrical wiring takeout port, an air-conditioning blow-off port or the like. Therefore, a refractory composite constructional material can be applied to many uses.

A penetrated hole for construction may has any shape and any size. For example, the shape is circle, polygon or the like.

The size is generally 10 to 25 mm and this varies depending upon the use. When a penetrated hole is used as an air-conditioning blow-off port, the size is preferably 50 to 200mm.

A penetrated hole can be perforated with a punching processing, a drill processing, router processing or the like.

The above refractory composite constructional material has preferably a step part.

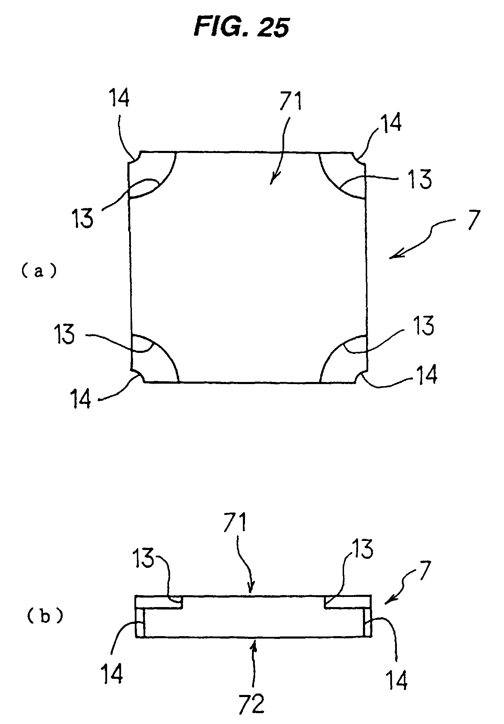

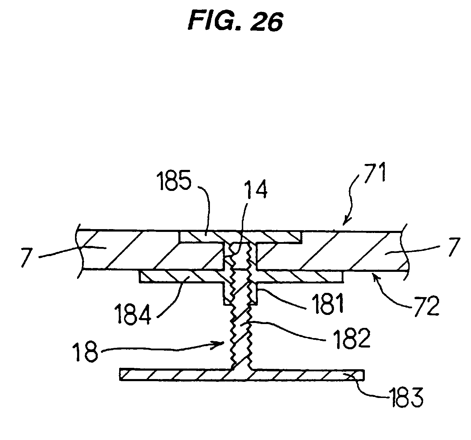

A step part is formed by removing a part of a reinforcing layer and a porous inorganic core material of a refractory composite constructional material. It is desirable that a step part is formed as a circular arc by cutting four corners of a refractory composite constructional material having the shape of a rectangular such as a square or an oblong into a fan-like shape as shown in Fig.25 (a). This is because, in a case of such the shape, an upper support plate 185 of Example 2 of embodiment 9 (Fig. 26) can be fitted.

A step part can be utilized as a hole for fixing a fitment for construction, a fitment for taking out an electrical wiring, a fitment for an air-conditioning blow-off or the like.

Therefore, by provision of a step part, a refractory composite constructional material can be applied to many uses and can be easily handled.

The above step part may be any shape and any size and is appropriately selected depending upon the use. A step part can be formed, for example, with a router processing or the like.

It is preferable that the above refractory composite constructional material has a notch part. A notch part is desirably formed by notching a part of a side surface of a refractory composite constructional material as shown in Example 3 of embodiment 9.

Alternatively, a vertical angle of a refractory composite constructional material having a shape of a rectangular such as a square and an oblong into a circular arc as shown in Fig. 25 (a). In this case, a notch part is engaged with a support such as a support volt.

A notch part can be used as a hole for fixing a fitment for construction, a hole for taking out an electrical wiring, an air-conditioning blow-off or the like. Therefore, a refractory composite constructional material can be applied to many uses and can be well handled.

The step part may be any shape and any size and is appropriately selected depending upon the use. A step part can be formed with a router processing, a drill processing or the like.

A combination of the above penetrated hole, the step part and the notch part is arbitral.

### (The case where a covering layer is formed on a butt end surface of a plasterboard)

There is a plasterboard comprising a plaster plate comprising a plaster and a board base paper applied to at least one of the face side and the back side thereof,
wherein a covering layer for preventing a plaster powder from flying is formed on a butt end surface of the plasterboard.

A butt end surface of a plasterboard refers to an exposed cut surface obtained by cutting and exposing a plasterboard.

A covering layer for preventing a plaster powder from flying is formed on a butt end surface of a plasterboard. A plasterboard is obtained by applying a board base paper on the face side or the back side of a plasterboard. For that reason, there arises no problem that a plaster powder flies from a butt end surface upon use and stain the surroundings. A butt end surface is not chipped. Even when a plasterboard is touched, a hand is not stained with a plaster powder. Therefore, a plasterboard of the present invention is excellent in the handling properties and the constructional properties.

Further, since a main material for a plasterboard is a plaster, a plasterboard is light, excellent in the processing properties and low cost.

The above covering layer is an inorganic material. As an inorganic material, for example, a sodium silicate solution, a silica sol, an alumina sol and the like are preferably used.

Thereby, a plaster powder can be effectively prevented from flying. A silica sol and an alumina sol are obtained by dispersing particles comprising SiO₂ or Al₂O₃ having the size of 10 to 100 nm and the concentration is preferably 20 to 40% by weight.

Alternatively, the above covering layer is an organic material.

In this case, it is preferable that various resin emulsions such as a rubber emulsion, an acrylic emulsion and the like are used as an organic material. Thereby, a plaster powder can be effectively prevented from flying. As a rubber emulsion, it is desirable an emulsion in which a nitrile-butandiene rubber solution is dispersed in water, or an emulsion in which a styrene-butanediene rubber solution dispersed in water. The concentration of various emulsions is desirably 30 to 60% by weight. Thereby, a covering layer can be formed uniformly.

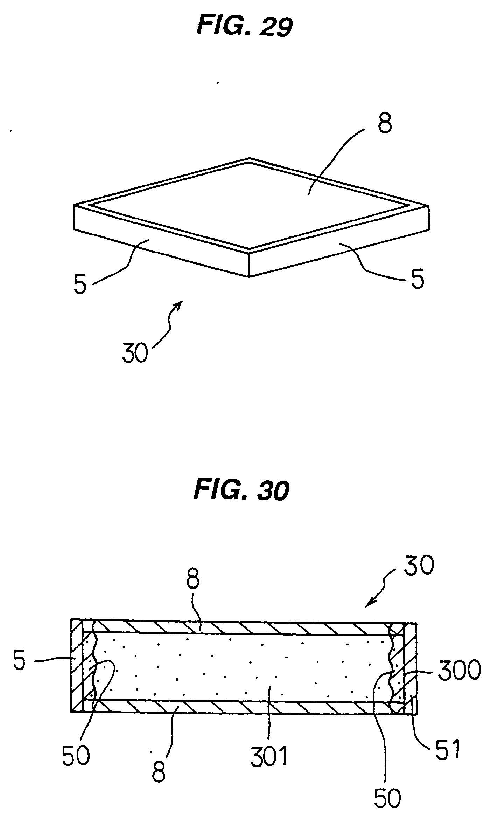

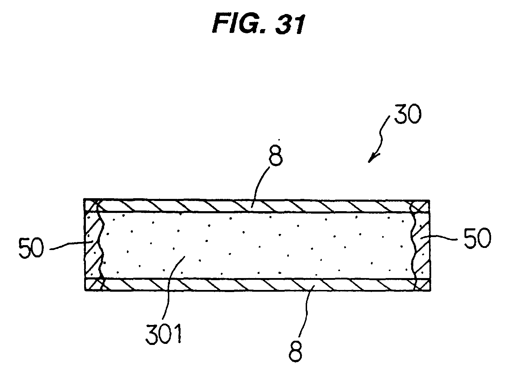

It is preferable that the above covering layer forms an impregnated layer which is impregnated into the surface of the above butt end surface (see Figs. 30 and 31) . Thereby, a plaster powder can be prevented from flying.

It is preferred that the thickness of the above covering layer is 0.01 to 4.5 mm in an either case where it is or is not the impregnated layer. Thereby, a plaster powder can be effectively prevented from flying. On the other hand, when the thickness is less than 0.01 mm, there is a possibility that a plasterboard flies. When the thickness exceeds 4.5 mm, the effects can not be expected.

It is preferred that the above covering layer covers the whole of a butt end surface of a plasterboard. Thereby, a plaster powder can be almost completely prevented from flying.

Next, when a covering layer is formed on a butt layer of a plasterboard, for example, there are a method of preparing a solution of various materials for forming the above covering layer, respectively, and coating this solution on a butt end of a plasterboard to dry, and a method of soaking a plasterboard in the above solution to dry. A temperature for drying is a normal temperature to 100 °C. Thereby, a material of a covering layer can be effectively dried without changing the properties.

A board base paper refers to a paper, a raw material of which is, for example, a wastepaper, a pulp or the like. It is preferred that a water repellent or the like is added to a board base paper. Thereby, the water resistance can be imparted to a plasterboard. A board base paper is a cardboard having the thickness of around 0.3 to 0.5 mm.

It is preferred that a part of a needle crystal of a plaster of a plaster plate is entered into voids of a board base paper.

Thereby, the anti-impact properties are enhanced.

When a board base paper is applied to a plaster plate, for example, it is preferred that a mixture of a plaster of Paris and water is flown on a board base paper, and a plaster is dried and cured. In a case of one layer of a plaster plate, it is preferred that an another board base paper is further place on the flown mixture and a plaster is dried and cured in that state.

Thereby, a needle crystal is grown in voids of a board base paper and the anti-impact properties of a plasterboard are enhanced.

Although a board base paper may be applied to an either of the face surface or the back surface of a plaster plate, it is preferred that it is applied to both face surface and back surface. Thereby, plaster can be completely prevented from flying.

The above plaster plate is preferably laminated and adhered in the form of two or more layers. Thereby, the anti-impact properties and the stiffness of a plasterboard are further enhanced. The plaster plate is preferably laminated and adhered in the form of two or more layers via a board base paper.

Thereby, the strength of a plasterboard is improved. A ratio of the thicknesses of respective plasterboards is desirably 1/2 to 1/1. When the thicknesses are different from the range, it becomes difficult to improve the anti-impact properties of a plasterboard.

The above plasterboard can be used, for example, for a construction material such as an external cladding substrate material, a roof substrate material, a floor material, a floor substrate material, an interior substrate material, a ceiling material, an interior cladding material.

It is preferred that the above reinforcing layer is adhered to the surface of the above plasterboard, a butt end surface of which is covered with a covering layer. That is, it is preferred that a reinforcing layer comprising a thermosetting resin and a mineral fiber is adhered to on at least one of the face surface and the back surface of the above plasterboard.

Thereby, the refractory properties, the anti-pulling properties and the processing properties of a plasterboard can be improved. The details for a reinforcing layer are as described above.

The above covering layer is formed into a butt end surface by cutting a plasterboard to which a reinforcing layer is adhered into the desired size. As a method of forming a covering layer, there is a method of preparing a solution of various materials for forming a covering layer and coating this solution on a butt end surface of a plasterboard to dry, or a method of soaking a plasterboard into the above solution and drying. It is preferred that a drying temperature is a normal temperature to 100 °C. Thereby, a material for a covering layer can be effectively dried without changing the quality.

It is preferred that the specific gravity of the above plasterboard is 0.9 to 1.5. When the specific gravity is less than 0.9, there is a possibility that the tensile strength, the bending strength, the anti-impact properties and the heat resistance are lowered. When the specific gravity exceeds 1.5, there is a possibility that the processing properties and the handling properties are lowered.

The above plasterboard is suitable for using as the above refractory composite constructional material.

### (A resin composition, a molded sheet and a molded plate for imparting the nail endurance force)

A material having the nail endurance force is as follows:

That is, there is a resin composition for imparting the nail endurance force which comprises a thermosetting resin and an elastic polymer.

This resin composition is a resin composition for imparting the nail endurance force which comprises a thermosetting resin and an elastic polymer. That is, the resin composition is a composition in which an emulsion of an elastic polymer is dispersed in a solution of uncured thermosetting resin.

By curing such the resin, there arises a structure in which "island" of an elastic polymer is dispersed in "sea" of a thermosetting resin matrix and, thus, the strength of a resin can be maintained and the toughness can be imparted. For this reason, even when a nail striked, a crack dose not occur from an origin of a nail.

An elastic polymer maintains the frictional force and the nail holding force can be improved.

It is desirable that the above elastic polymer is a rubber latex, an acrylic latex, an acrylate latex, or an urethane latex.

This is because these latecis can be dispersed in an uncured thermosetting resin solution as a liquid. An elastic polymer can be dispersed in an uncured thermosetting resin as an emulsion solution and, thereby, since a thermosetting resin and an elastic polymer are both liquid, they are easily soaked in a porous substrate or a fibrous substrate.

It is good that the above rubber latex is nitrile-butadiene rubber (NBR), or styrene-butadiene rubber (SBR).

It is good that the above thermosetting resin is a phenyl resin, a melamine resin, an epoxy resin or a polyimide resin.

It is desirable that a weight ratio of a solid of the above thermosetting resin and that of the elastic polymer is 95/5 to 65/35.

The reason is that, when an amount of a thermosetting resin is too great, the toughness is lowered and, thus, a crack easily occurs and the nail holding force is lowered while when an amount of an elastic polymer is too great, the strength of a resin is lowered and the nail holding force is lowered.

Like this, for the nail holding force, weight ratio of a solid of a thermosetting resin and that of an elastic polymer of 95/5 to 65/35 is optimal.

The above resin composition is used by coating on a porous substrate or a fibrous substrate or impregnating such the substrate therewith and heating to cure.

Next, a molded sheet using the above resin composition is explained. The molded sheet comprises a porous substrate or a fibrous substrate impregnated with a resin composition comprising a thermosetting resin and an elastic polymer wherein the composition is cured.

This molded sheet is more excellent in the strength and the toughness than a case where a resin composition is cured as it is because a porous substrate or a fibrous substrate functions as a reinforcing material. Since a molded sheet itself acts as a reinforcing material, a plasterboard or a calcium silicate plate can be reinforced. Although a plasterboard and a calcium silicate has no nail endurance force and even when a nail striked, it is pulled out, it becomes possible to hold a nail by applying a molded sheet of the present invention.

Further, by applying the above molded sheet, a nail can be striked into a cement or metal board into which a nail could not be striked previously.

By applying the above molded sheet on a material into which a nail could be striked previously such as a wood, the nail endurance force can be improved, a nail can be firmly maintained and the refractory properties and the strength upon moisture absorption can be improved.

The above molded sheet can be applied not only to a board material but also to a wall of a house such a light foamed concrete and a mortal to form a nail holding layer.

Since the above molded sheet reinforces a calcium silicate plate or a plaster plate and it functions as a nail holding layer, the holding of a nail which was difficult previously can be realized.

When a cement plate, an asbestos cement plate, a pearlite plate or a light cement plate is used as a porous core material as described below, a molded sheet functions as a nail holding layer, a nail striking which was impossible previously can be realized.

Although a plaster plate, a porous ceramic an and urethane foam can be used as the above porous substrate, in particular, a plaster plate is suitable. The reason is as follows: although a plaster plate is low cost and is a widely used material, since it has originally small nail endurance force, by applying the above molded sheet to such the plaster plate, the nail endurance force can be most effectively imparted to a plaster plate which has originally small nail endurance force.

As the fibrous substrate, a glass fiber, a rock wool, a ceramic fiber, a paper and a wood can be used. These fibrous substrates can be easily impregnated with a resin composition comprising a thermosetting resin and an elastic polymer for imparting the nail endurance force and, since a fiber has the reinforcing action, the strength and the toughness of a resin can be maintained and the nail endurance force can be improved.

As a method for manufacturing such the molded sheet, there are a method of forming a fibrous substrate impregnated with an inorganic or organic binder into a plate in advance, which is impregnated with a resin composition for imparting the nail endurance force as described above, a method of molding by impregnating a fibrous substrate with a resin composition for imparting the nail endurance force as described above and heat-pressing it to cure a thermosetting resin and, when a glass fiber, a rock wool or a ceramic fiber is used, a method of coating a thermosetting resin such as a phenol resin on the surface of the fiber at a B stage and heat-pressing it. In a method of coating a thermosetting resin on the surface of the fiber at a B stage, the adhesive properties with an impregnated resin is improved, fibers are easily adhered mutually and an impregnation rate of a resin can be improved, being advantageous.

In such the coating method, a raw material melt of a glass fiber, a rock wool or a ceramic fiber is flown through a nozzle, fiberized by a blowing method or a centrifugation method and, at the same time with this fiberization, a solution of a thermosetting resin such as a phenol resin is spraied to aggregate fibers.

When a glass fiber, a rock wool or a ceramic fiber is used, a silane coupling agent may be coated.

A molded plate using the above resin composition is explained.

For example, a molded plate comprises a molded sheet comprising a porous substrate or a fiber substrate impregnated with a resin composition comprising a thermosetting resin and an elastic polymer wherein the composition is cured, said molded sheet being laminated on at least one porous core material.

A molded sheet acting as a nail holding layer and a reinforcing layer is applied to a porous inorganic core material and the fragility and the lack of the nail endurance force of a porous inorganic core material can be improved.

The above molded sheet may be laminated on an organic core material mainly composed of a woody material. Thereby, the strength upon moisture absorption and the refractory properties can be improved.

As the above porous core material, a calcium silicate plate, a plaster plate, a cement plate, a pearlite plate, an asbestos cement plate, a light foamed concrete plate, a particle board, a intermediate fiber plate, OSB, or a plywood can be used.

Since the above molded sheet reinforces a porous core material such as a calcium silicate plate, a plaster plate or the like and functions as a nail holding layer, the nail holding which was impossible previously can be realized.

When a cement plate, an asbestos cement plate, a pearlite plate, or a light cement plate is used, a molded sheet functions as a nail holding layer and the nail striking which was impossible previously can be realized.

As the above porous substrate, fibrous substrate, thermosetting resin and elastic polymer, it is preferred that those described above can be used.

The above molded plate can be used for a refractory composite constructional material.

As a method of manufacturing the above molded plate, there are (i) a method of applying a cured molded sheet via an adhesive such as a phenol resin which is heat-pressed, (ii) a method of impregnating a porous substrate or a fibrous substrate with a resin composition for imparting the nail endurance force as described above to obtain a B stage, which is laminated on a mineral core material and heat-pressed to cure a thermosetting resin to integrally mold, and (iii) a method of impregnating a porous substrate or a fibrous substrate with a resin composition for imparting the nail endurance force, which is laminated on a mineral material as it is and heat-pressed to cure a thermosetting resin to integrally mold.

The above molded plate may have a pattern paper impregnated with a melamine resin, a patterned layer comprising a pattern paper impregnated with a melamine resin and a core paper impregnated with a phenol resin, or a patterned layer composed of various organic or inorganic paints on its surface.

Alternatively, the above molded plate may have a backer layer composed of a paper impregnated with a melamine resin on the back surface of a patterned layer in order to prevent warpage.

### (A composite constructional material, a core material of which is composed of a mineral fiber and a thermosetting resin)

There is a core material for a constructional material which is composed of a thermosetting resin and a mineral fiber. That is, there is a composite constructional mineral which comprises a core material composed of a thermosetting resin and a mineral fiber.

Since a thermosetting resin and a mineral fiber in a core material are excellent in the refractory properties and are a low cost material, a composite constructional material using this is excellent in the refractory properties and is low cost.

The composite constructional material can be easily processed with cutter knife and the like, and is excellent in the processing properties and the handling properties.

Since a composite constructional material contains a mineral fiber, it is also excellent in the strength.

It is desirable that the specific gravity of a core material is 0.2 to 1.0. The reason is that the specific gravity is smaller than the specific gravity 1.8 of the previous mineral patterned plate of JU-B-2-17867.

When the specific gravity of a core material is less than 0.2, the strength of a composite constructional material is lowered in some cases. Reversely, when the specific gravity exceeds 1.0, the weight of a composite constructional material is larger in some cases.

The above specific gravity refers to a ratio relative to the volume of water at 4°C.

It is preferred that a mineral fiber used in a core material is, for example, one or more selected from a glass fiber, a rock wool, and a ceramic fiber. This is because they are low cost and excellent in the refractory properties and the strength.

As a mineral fiber, a discontinuous fiber may be formed into a mat, or a continuous long fiber may be cut into 3 to 7 cm pieces to obtain a mat (chopped strand mat), or a continuous long fiber may be laminated in the form of a vortex to obtain a mat, further a continuous long fiber may be woven.

It is preferred that an amount of a mineral fiber in a core material is 30 to 95% by weight. Thereby, the material is light and the strength thereof is high, and becomes easy to be processed. On the other hand, when an amount exceeds 95% by weight, since the specific gravity of a mineral fiber is generally larger than that of a thermosetting resin, there is a possibility that the specific gravity of a core material becomes too high and weight-saving of a composite constructional material is prevented. When an amount is less than 30% by weight, there is a possibility that the strength is lacked.

It is preferred that the content of a thermosetting resin in a core material is 5 to 70% by weight. Thereby, the material is light, the strength thereof is high, and it becomes easy to be processed. On the other hand, when the content is less than 5% by weight, the specific gravity of a core material becomes too high and there is a possibility that weight-saving of a composite constructional material is prevented. When the content exceeds 30% by weight, an amount of a mineral fiber becomes relatively smaller and there is a possibility that the strength is lacked.

It is preferred that the above thermosetting resin is one or more selected from an epoxy resin, a phenol resin, a polyimide resin, a melamine resin and an urea resin. This is because these resins have the high refractory properties.

An elastic polymer may be added to the above core material in addition to the thermosetting resin. For example, a rubber latex, an acrylic latex, an acrylate latex and an urethane latex are desirable as an elastic polymer. As a rubber latex, a nitrile-butadiene rubber (NBR), and styrene-butadiene (SBR) can be used. It is desirable that the thickness of the above core material is 1.0 to 10 mm. The reason is that, in this range, the sufficient stiffness and the anti-impact properties can be obtained and the material has the high processing properties.

There are methods of the above mineral fiber core material as below:
(i) A mineral fiber impregnated with an inorganic or organic binder is formed into a plate, which is impregnated with a thermosetting resin composition, dried and cured.
(ii) A mineral mat is impregnated with a resin composition and dried, which is heat-pressed to cure a thermosetting resin. Alternatively, after a mineral mat is impregnated with a resin composition and dried, it is laminated on a mineral fiber mat and heat-pressed to cure a thermosetting resin to mold.
(iii) A method of coating a thermosetting resin such as a phenol resin at a B stage on the fiber surface of a glass fiber, a rock wool or a ceramic fiber, which is laminated on a porous inorganic core material and heat-pressed can be adopted. A method of coating a thermosetting resin on the fiber surface at a B stage improves the adhesive properties with the impregnated resin, makes easy fibers to be adhered mutually and can improve an impregnation rate of a resin being advantageous.

As such the coating method, there is a method of flowing a raw material melt of a glass fiber, a rock wool or a ceramic fiber, fiberizing by a blowing method or a centrifugation method and, at the same time with this fiberization, spraying a solution of a thermosetting resin such as a phenyl resin to aggragate fibers.

As the above mineral fiber, a glass fiber, a rock wool or a ceramic fiber can be used. In this case, a silane coupling agent may be coated. As the above porous inorganic core material, for example, there are a plasterboard, a calcium silicate plate and a slag plaster plate.

A mineral fiber may be formed on at least one side of the above composite constructional material. As a mineral fiber, there are a melamine resin paint, a paper impregnated with a melamine resin, a polyester resin paint, a paper impregnated with a diallyl phthalate resin, an ultraviolet curing resin paint, a vinyl chloride resin film, an urethane resin paint, polyacrylic urethane, a vinyl fluoride resin film, a natural wood alone (rose, teak, pine, tamo, Japanese oak, Japan cidar).

It is preferred that the specific gravity of the above core material is 0.2 to 1.0. When the specific gravity is less than 0.2, there is a possibility that the strength of a core material is lowered. When the specific gravity exceeds 1.0, there is a possibility that the weight of the composite constructional material becomes larger.

The above refractory composite constructional material composed of a core material comprising the above thermosetting resin and mineral fiber can be used, for example, in a wall material.

It is preferred that a reinforcing layer composed of a thermosetting resin and a mineral fiber is provided on at least one side of the above core material.

In the present invention, a reinforcing layer is provided on at least one side of the similar core material to that described above. A reinforcing layer is composed of a thermosetting resin and a mineral fiber. For this reason, the strength of a composite constructional material can be further improved while holding the composite constructional material light. The same effects as those of the above composite constructional material can be obtained.

As a thermosetting resin and a mineral fiber contained in the reinforcing layer, the same thermosetting resin and mineral fiber as those contained in the above core material can be used, provided that the same or different material may be used.

It is desirable that the content of a mineral fiber contained in the reinforcing layer is 35 to 90% by weight. The reason is that, in this range, the sufficient stiffness and the anti-impact properties can be obtained and the high refractory properties can be maintained.

It is desirable that the content of a thermosetting resin contained in the above reinforcing layer is 10 to 65% by weight.

The reason is that, in this range, the sufficient stiffness and the anti-impact properties can be obtained and the high refractory properties can be obtained.

It is desirable that the thickness of the reinforcing layer is 0.3 mm to 3.5 mm. The reason is that, in this range, the sufficient stiffness and the anti-impact properties can be obtained and the high processing properties can be maintained.

A fire-retardant such as aluminum hydroxide and magnesium hydroxide as well as a mineral binder which is generally used such as silica sol, alumina sol and water glass may be added to the reinforcing layer.

As the above thermosetting resin contained in the above core material and reinforcing layer, one or more selected from the group consisting of an epoxy resin, a phenol resin, a polyimide resin, a melamine resin and an urea resin can be used. As a mineral fiber contained in the core material and the reinforcing layer, at least one or more selected from a glass fiber, a rock wool and a ceramic fiber can be used.

It is preferred that the specific gravity of the core material is 0.2 to 1.0 and the specific gravity of the above reinforcing layer is 0.1 to 0.5. When the specific gravity of a core material is less than 0.2, there is a possibility that the strength of a core material is lowered. When the specific gravity exceeds 1.0, there is a possibility that the weight of the composite constructional material becomes larger. When the specific gravity of a reinforcing layer is less than 0.1, there is a possibility that a reinforcing layer dose not play a role on imparting the strength. Reversely, when the specific gravity of a reinforcing layer exceeds 0.5, the weight of a composite constructional material becomes larger in some cases.

The above composite constructional material can be used, for example, as a wall material. Additionally, it can be used as a floor covering material, a wall material, a partitioning material, a ceiling material, a furniture, a door or a fitting material.

The above reinforcing layer can be manufactured according to the same method as that for the above core material. The above mineral fiber may be provided on at least one side of the above composite constructional mineral.

Various embodiments of the present invention are shown as described above but the present invention is not limited to them. These embodiments can be combined arbitrarily.

### BRIEF DESCRIPTION OF THE DRAWINGS

Fig. 1 is a schematic cross-sectional view of a refractory composite floor covering material of embodiment 1.
Fig. 2 is a schematic cross-sectional view of a refractory composite floor covering material of embodiment 1.
Fig. 3 is a view for explaining a process for manufacturing a refractory composite material of embodiment 2.
Fig. 4 is a view for explaining a process for manufacturing a refractory composite material of embodiment 3.
Fig. 5 is a schematic cross-sectional view of a refractory composite floor covering material in which a reinforcing layer is provided on both sides thereof, in Example 1 of embodiment 4.
Fig. 6 is a schematic cross-sectional view of a refractory composite floor covering material in which a reinforcing layer is provided on the back side thereof, in Example 1 of embodiment 4.
Fig. 7 is a schematic cross-sectional view of a refractory composite floor covering material in Example 2 of embodiment 4.
Fig. 8 is a schematic cross-sectional view of a refractory composite floor covering material in Example 3 of embodiment 4.
Fig. 9 is a schematic cross-sectional view of a refractory composite material of embodiment 5.
Fig. 10 is a cross-sectional view showing one fundamental embodiment of a refractory composite constructional material of embodiment 6.
Fig. 11 is a cross-sectional view showing the other fundamental embodiment in which a patterned layer is provided on a composite constructional material of a fundamental embodiment shown in Fig. 10.
Fig. 12 is a cross-sectional view showing a plasterboard reinforced with a glass fiber as one practical embodiment of a refractory composite constructional material of embodiment 6.
Fig. 13 is a cross-sectional view showing the other practical embodiment of a composite constructional material in which a patterned layer is provided on a plasterboard reinforced with a glass fiber shown in Fig. 12.
Fig. 14 is a cross-sectional view showing the other practical embodiment in which a patterned layer of a plasterboard reinforced with glass fiber as a composite constructional material of a practical embodiment shown in Fig. 13 is embossed.
Fig. 15 is a schematic cross-sectional view of a refractory composite floor covering material of Example 1 of embodiment 8.
Fig. 16 is a perspective of a refractory composite floor covering material of Example 1 of embodiment 8.
Fig. 17 is a schematic cross-sectional view of a refractory composite floor covering material of Example 2 of embodiment 8.
Fig. 18 is a schematic cross-sectional view of a refractory composite floor material of Example 3 of embodiment 8.
Fig. 19 is a schematic cross-sectional view of a refractory composite floor covering material of Example 1 of embodiment 9.
Fig. 20 is a schematic cross-sectional view of a refractory composite floor covering material of Example 2 of embodiment 9.
Fig. 21 is a schematic cross-sectional view of a refractory composite floor covering material of Example 1 of embodiment 10.
Fig. 22 is a plane view of a refractory composite floor covering material of Example 1 of embodiment 10.
Fig. 23 is a front view of a refractory composite floor covering material having a supporting leg of Example 1 of embodiment 10.
Fig. 24 is a view for explaining showing the use of a refractory composite floor covering material of Example 1 of embodiment 10.
Fig. 25 is a plane view (a) and a front view (b) of a refractory composite floor covering material of Example 2 of embodiment 10.
Fig. 26 is a cross-sectional view of a refractory composite floor material which is fixed by a supporting leg, in Example 2 of embodiment 10.
Fig. 27 is a plane view (a) and a front view (b) of a refractory composite floor covering material of Example 3 of embodiment 10.

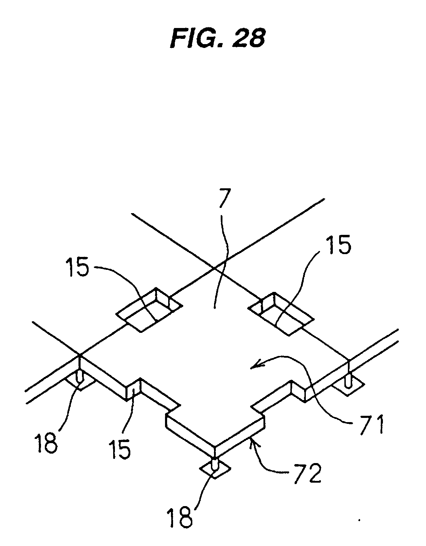

Fig. 28 is view for explaining the use of a refractory composite floor covering material of Example 3 of embodiment 10.
Fig. 29 is a perspective of a plasterboard of embodiment 11.
Fig. 30 is a cross-sectional view of a plasterboard of embodiment 11.
Fig. 31 is a cross-sectional view of a plasterboard in which the whole of a covering layer is soaked into a butt end surface, in embodiment 11.
Fig. 32 is a cross-sectional view of a refractory composite floor covering material of embodiment 12.
Fig. 33 is a views showing a step of manufacturing a molded sheet of embodiment 13.
Fig. 34 is a schematic view of a molded plate of embodiment 13.

### Explanation of Symbol

- 1: thermosetting resin solution,
- 11, 12: penetrated hole,
- 13: step part,
- 14, 15: notch,
- 161: wiring code,
- 18: supporting leg,
- 19: floor,
- 2, 20: patterned layer,
- 21: patterned plate,
- 22: paper layer with a resin impregnated,
- 23: over layer,
- 24, 28: pattern layer,
- 25: core layer,
- 26, 29: backer layer,
- 27: phenol core layer,
- 200: wood-finish pattern,
- 201: electromagnetic shielding layer,
- 289: recess,
- 3: porous inorganic core material,
- 30, 31, 32: plasterboard,
- 300: butt end surface,
- 301: plaster plate,
- 341: resin composition,
- 342: fibrous substrate or porous substrate,
- 343: stainless plates,
- 34: molded sheet,
- 35: mineral core material,
- 36: molded plate,
- 4: reinforcing layer,
- 40: mat with a resin impregnated,
- 41: thermosetting resin,
- 42: mineral fiber,
- 43, 62: curing agent,
- 5: covering layer,
- 50: impregnation layer,
- 60: interlayer adhesive,
- 61: normal temperature curing resin,
- 65: surface adhesive,
- 66: thermosetting resin solution,
- 7: reinforcing composite floor covering material,
- 71: face side surface,
- 72: back side surface,
- 8: board base paper,
- 80: water-resistant paper,

### Best mode for carrying out the present invention

### Embodiment 1

Embodiment 1 is a refractory composite floor covering material in which a porous inorganic core material is covered with a reinforcing layer. As regards this, Examples 1 to 9 are explained by comparing with Comparative Example 1.

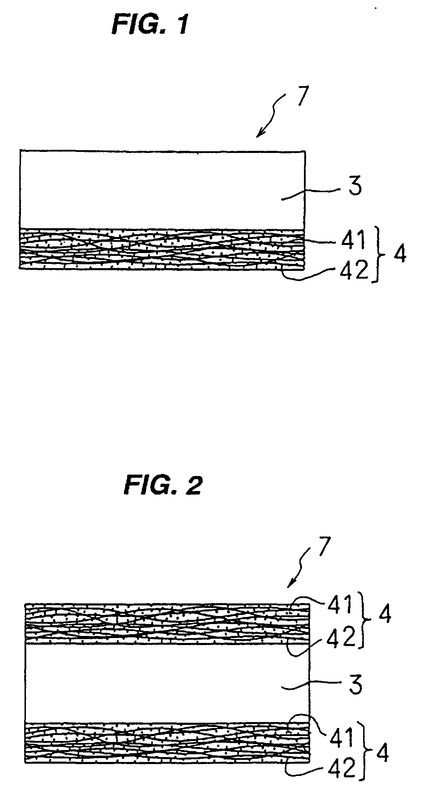

In refractory composite floor covering materials of Example 1 to 8 and Comparative Example 1, a reinforcing layer 4 composed of a thermosetting resin 41 and a mineral fiber 42 is provided on one side of a porous inorganic core material 3 as shown in Fig. 1. In a reinforcing composite floor covering material 7 of Example 9, the above reinforcing layer 4 is provided on both sides of the face side surface and the back side surface of a porous inorganic core material 3 as shown in Fig. 2. A process for manufacturing them is explained below.

### (Example 1)

(1) A mat-like glass fiber (weight 500g/m²) with an uncured phenol resin attached (attached amount; term of solid 13%) was pressed at a temperature of 200 °C for 5 minutes to obtain a sheet-like glass fiber having the thickness of 1.5 mm.
(2) After this sheet-like glass fiber was impregnated with a phenol resin solution with a curing agent added (impregnation amount; term of solid 5%), it was pressed at a temperature of 80°C for 20 minutes to obtain a sheet impregnated with a phenol resin having the thickness of 1.5 mm.
(3) A phenol resin solution with a curing agent added was coated on one side of a calcium silicate plate (specific gravity 1.0, thickness 20 mm) at a rate of 250 g/m² (term of solid) and the sheet impregnated with a phenol resin made in the above (2) was overlaid thereover. Further, after a phenol resin solution with a curing agent added was coated thereon at a rate of 250 g/m² (term of solid) thereon, a commercially available glass fiber chopped strand mat (weight 450 g/m²) was overlaid thereon, which was pressed at a temperature of 80 °C for 20 minutes to obtain a composite floor covering material having the thickness of 22 mm.

### (Example 2)

(1) A mat-like glass fiber (weight 500 g/m²) with an uncured phenol resin attached (attached amount; term of solid 13%) was pressed at a temperature of 200 °C for 5 minutes to obtain a sheet-like glass fiber having the thickness of 1.5 mm.
(2) After this sheet-like glass fiber was impregnated with a phenol resin solution with a curing agent added (impregnation amount; term of solid 15%), it was pressed at a temperature of 80 °C for 20 minutes to obtain a sheet impregnated with a phenol resin having the thickness of 1.5 mm.
(3) A phenol resin solution with a curing agent added was coated on one side of a calcium silicate plate (specific gravity 0.8, thickness 22 mm) at a rate of 250 g/m² (term of solid) and the sheet impregnated with a phenol resin made in the above (2) was overlaid thereover. Further, after a phenol resin solution with a curing agent added was coated thereon at a rate of 250 g/m² (term of solid) thereon, a commercially available glass fiber chopped strand mat (weight 450 g/m²) was overlaid thereon, which was pressed at a temperature of 80 °C for 20 minutes to obtain a composite floor covering material having the thickness of 24 mm.

### (Example 3)

(1) A mat-like glass fiber (weight 500 g/m²) with an uncured phenol resin attached (attached amount; term of solid 13%) was pressed at a temperature of 200 °C for 5 minutes to obtain a sheet-like glass fiber having the thickness of 1.5 mm.
(2) After this sheet-like glass fiber was impregnated with a phenol resin solution with a curing agent added (impregnation amount; term of solid 20%), it was pressed at a temperature of 80 °C for 20 minutes to obtain a sheet impregnated with a phenol resin having the thickness of 1.5 mm.
(3) A phenol resin solution with a curing agent added was coated on one side of a slag plaster board (specific gravity 1.0, thickness 20 mm) at a rate of 250 g/m² (term of solid) and the sheet impregnated with a phenol resin made in the above (2) was overlaid thereover. Further, after a phenol resin with a curing agent added was coated thereon at a rate of 250 g/m² (term of solid) thereon, a commercially available glass fiber chopped strand mat (weight 450 g/m²) was overlaid thereon, which was pressed at a temperature of 80 °C for 20 minutes to obtain a composite floor covering material having the thickness of 22 mm.

### (Example 4)

(1) A mat-like glass fiber (weight 500 g/m²) with an uncured phenol resin attached (attached amount; term of solid 13%) was pressed at a temperature of 200 °C for 5 minutes to obtain a sheet-like glass fiber having the thickness of 1.5 mm.
(2) After this sheet-like glass fiber was impregnated with a phenol resin solution with a curing agent added (impregnation amount; term of solid 25%), it was pressed at a temperature of 75 °C for 20 minutes to obtain a sheet impregnated with a phenol resin having the thickness of 1.5 mm.
(3) A phenol resin solution with a curing agent added was coated on one side of a plasterboard (specific gravity 1.2, thickness 25 mm) at a rate of 250 g/m² (term of solid) and the sheet impregnated with a phenol resin made in the above (2) was overlaid thereover. Further, after a phenol resin solution with a curing agent added was coated thereon at a rate of 250 g/m² (term of solid) thereon, a commercially available glass fiber chopped strand mat (weight 450 g/m²) was overlaid thereon, which was pressed at a temperature of 80 °C for 20 minutes to obtain a composite floor covering material having the thickness of 24 mm.

### (Example 5)

A composite floor covering material was produced according to a similar manner to that of Example 1, except that the following step was performed instead of the step(3) in Example 1.

A phenol rein solution with a curing agent added was coated on one side of a plasterboard (specific gravity 1.2, thickness 25mm) at a rate of 500g/m² (term of solid), and a commercially available glass fiber chopped strand mat (weight 900g/m²) was overlaid thereon, which was pressed at a temperature of 75°C for 20 minutes to obtain a composite floor covering material having the thickness of 26 mm.

### (Example 6)

A composite floor covering material was produced according to a similar manner to that of Example 1, except that the following step was performed instead of the step(3) in Example 1.

A phenol resin solution with a curing agent added was coated on one side of a calcium silicate plate (specific gravity 1.0, thickness 20 mm) at a rate of 350 g/m² (term of solid), and a commercially available glass fiber chopped strand mat (weight 600 g/m²) was overlaid thereon, which was pressed at a temperature of 80 °C for 20 minutes to obtain a composite floor covering material having the thickness of 26 mm.

### (Example 7)

A composite floor covering material was produced according to a similar manner to that of Example 1, except that the following step was performed instead of the step(3) in Example 1.

A phenol resin solution with a curing agent added was coated on one side of a plasterboard (specific gravity 0.8, thickness 25 mm) at a rate of 500 g/m² (term of solid), and a commercially available glass fiber roving cloth (weight 580 g/m²) was overlaid thereon, which was pressed at a temperature of 75 °C for 20 minutes to obtain a composite floor covering material having the thickness of 26 mm.

### (Example 8)

A composite floor covering material was produced according to a similar manner to that of Example 1, except that the following step was performed instead of the step(3) in Example 1.

A phenol resin solution with a curing agent added was coated on one side of a slag plasterboard (specific gravity 1.0, thickness 22 mm) at a rate of 500 g/m² (term of solid), and a commercially available glass fiber chopped strand mat (weight 600 g/m²) was overlaid thereon, which was pressed at a temperature of 80 °C for 20 minutes to obtain a composite floor covering material having the thickness of 23 mm.

### (Example 9)

A composite floor covering material was produced according to a similar manner to that of Example 1, except that the sheet impregnated with a phenol resin was overlaid on the face side and the back side of a calcium silicate plate, which was heat-pressed to obtain a composite floor covering material.

### (Comparative Example 1)

(1) A propylene sheet having the thickness of 1.0 mm and a glass fiber chopped strand mat (weight 450 g/m²) were laminated, which was heat-pressed at a temperature of 180 °C for 15 minutes, and cooled to obtain a sheet impregnated with a propylene resin (resin impregnation amount 33% by weight).
(2) The sheet made in (1) was overlaid on one side of a slag plasterboard (specific gravity 1.0, thickness 22 mm), which was pressed at a temperature of 170 °C and cooled to obtain a composite floor covering material having the thickness of 23 mm.

Regarding composite floor covering materials, the impact loading test was performed in which a sand bag was fallen from a height of 500 mm according to a method of free access floor constituting test method, and the results are shown in Table 1.

The same impact loading test was performed in the state where the back surface of a test sample was heated to a temperature of 80 °C, and the results are shown in Table 1.

**Table 1**

| Examples | 1 | 2 | 3 | 4 | 5 | 6 | 7 | 8 | 9 | C1 | C2 |
|---|---|---|---|---|---|---|---|---|---|---|---|
| Final weight (kgf) at normal temperature | 1130 | 830 | 720 | 750 | 680 | 880 | 730 | 650 | 1210 | 610 | 16 |
| Final weight (kgf) at 80°C | 1120 | 810 | 710 | 730 | 650 | 860 | 710 | 640 | 1180 | 13 | 6 |

### Embodiment 2

This embodiment relates to a process for manufacturing a refractory floor covering material and, in brief, a mat with a resin impregnated in which a mineral fiber is impregnated with a thermosetting resin and a curing agent is laminated on a porous inorganic core material, which is pressed under heating. This is explained in detail below.

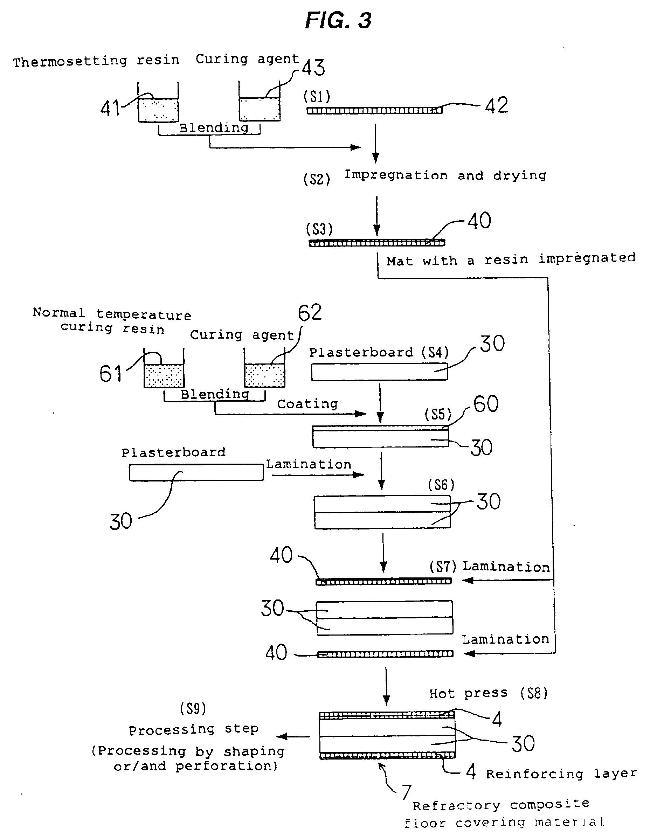

As shown Fig. 3, in a S1 step, a mineral fiber 42 composed of a glass fiber chopped strand mat (weight 450 g/m²) is prepared.

In a S2 step, 420 parts by weight of a thermosetting resin 41 and 126 parts by weight of a curing agent 43 are blended and this blended raw material is impregnated into a mineral fiber to a mat with a resin impregnated 40. A thermosetting resin 41 is a phenol resin. A curing agent 43 is a mixture of an aromatic hydrocarbon sulfonated compound and sulfuric acid.

In a S3 step, a mat with resin impregnated 40 is dried using a hot air heater. The thickness of a mat with resin impregnated 40 is 0.8 mm.

In a S4 step, a mixture of a plaster of Paris and water is placed on a board base paper, which is further covered with a board base paper. Then, this was dried and cured to obtain a plasterboard 30 having the thickness of 12.5 mm and the specific gravity of 1.3.

In a S5 step, an interlayer adhesive 60 obtained by blending 100 parts by weight of a normal temperature curing resin (61) and 15 parts by weight of a curing agent (62) is coated on one side of a plasterboard 30. As a normal temperature curing agent, a phenol resin is used and, as a curing agent, a mixture of aromatic hydrocarbon sulfonic acid and sulfuric acid is used.

In a S6 step, an another plasterboard 30 made according to the same manner as that of a S4 step is laminated on a side of a plasterboard 30 on which a interlayer adhesive 60 is coated, to adhesive them.

In a S7 step, a mat with a resin impregnated 40 made in the above S3 step is laminated on the face side surface and the back side surface of a plasterboard 30 having the two-layered structure, respectively.

In a S8 step, they are heat-pressed for 10 minutes under the condition of temperature of 100°C and a pressure of 1 kg/cm² By the above steps, a refractory composite floor covering material 7 in which a reinforcing layer 4 is formed on the face side surface and the back side surface of a plasterboard 30 having the two-layered structure is obtained.

Thereafter, in a S9 step, a refractory composite floor covering material 7 is processed by shaping, perforation and the like to panelize it into a few tens cm² square.

A supporting leg is fixed to the back side surface of a panelized refractory composite floor covering material, a plurality of which are combined for use in a floor covering material. When a refractory composite floor covering material is used for a floor of a business room, a business apparatus can be arranged on its face side surface and a wiring apparatus of a business apparatus and an air-conditioning apparatus can be arranged on its back side surface. A penetrated hole formed by perforation processing can be utilized as a hole for taking out a wiring cord and cooling and heating air blown from an air-conditioning apparatus.

Then, the action and effects of the present invention are explained.

A method of producing a refractory composite floor covering material 7 of this Example is that a mineral fiber 42 is impregnated with a thermosetting resin 41 and a curing agent 43 in advance (S2), and dried to prepare a mat with a resin impregnated (S3), which is laminated on a porous inorganic core material (S7), and heat-pressed (S8). For that reason, the adhesive properties between a mineral fiber and an impregnated thermosetting resin are improved. Mineral fibers are easily adhered mutually and, thus, an impregnation rate of a thermosetting resin can be improved, being advantageous.

A reinforcing layer composed of a mat with a resin impregnated is laminated on a porous inorganic core material and heat-pressed to a porous inorganic core material and, thus, it is not necessary to use an adhesive separately.

Further, a process for manufacturing is simplified.

Since a plasterboard 30 is used as a core material in a refractory composite floor covering material 7 of this Example, it is low cost and is excellent in the refractory properties and the compression strength.

Since the face side surface 71 and the back side surface 72 of a plasterboard 30 in a refractory composite floor covering material 7 are covered with a reinforcing layer 4 having the high strength, breakage dose not occur even when the tensile force is applied and the tensile properties are excellent.

Since a reinforcing layer 4 is composed of a thermosetting resin 41 and a mineral fiber 42, the processing properties are excellent.

Different from a thermoplastic resin, a thermosetting resin 41 is excellent in the refractory properties and is not softened even at an elevated temperature, the function as a reinforcing layer is not lost.

Further, since a refractory composite floor covering material 7 of this Example is mainly composed of a reinforcing layer 4 composed of a thermosetting resin 41 and a mineral fiber 42, it is light, excellent in the processing properties and low cost.

Although a reinforcing layer 4 is formed on the face side surface 71 and the back side surface 72 of a plasterboard 30 in a refractory composite floor covering material 7 of this Example, it may be formed on either side. Although a plasterboard is laminated in the form of two layers in this Example, it may be laminated in the form of one layer.

### Embodiment 3

### (Example 1)

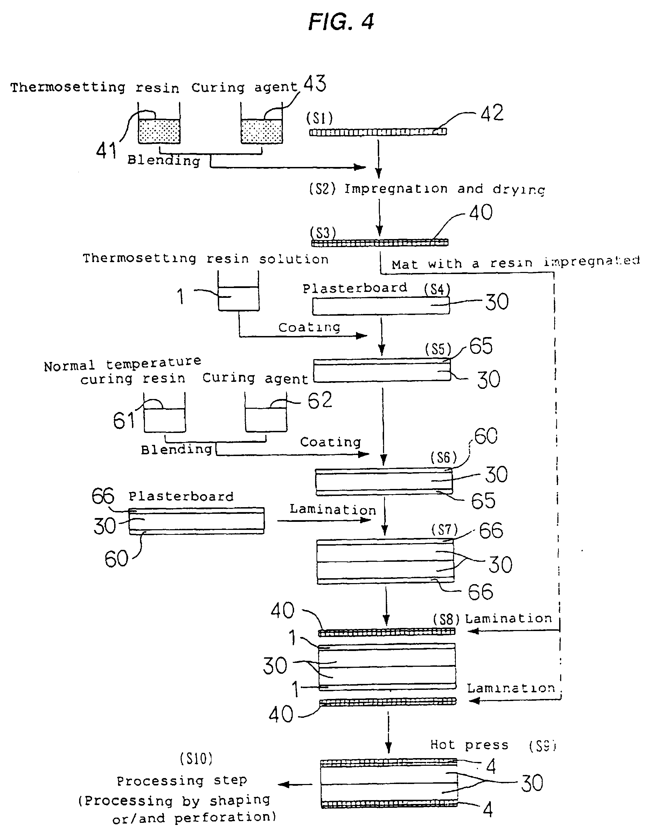

A refractory composite floor covering material relating to an embodiment of the present invention is explained using Fig. 4.

In a process of manufacturing of this Example, in brief, a mat with a resin impregnated is laminated on a porous inorganic core material in the state where it is opposed to an uncured thermosetting resin solution is coated and dried in advance, which is pressed under heating. This is explained in detail below.

As shown Fig. 4, in a S1 step, a mineral fiber 42 composed of a glass fiber chopped strand mat (weight 450 g/m²) is prepared.

In a S2 step, 420 parts by weight of a thermosetting resin 41 and 84 parts by weight of a curing agent 43 are blended and this blended raw material is impregnated into a mineral fiber to obtain a mat with a resin impregnated 40. A thermosetting resin 41 is a phenol resin. A curing agent 43 is a mixture of an aromatic hydrocarbon sulfonated compound and sulfuric acid.

In a S3 step, a mat with a resin impregnated 40 is dried using a hot air heater until the solid concentration of an impregnated thermosetting resin is 80%. The thickness of a mat with a resin impregnated 40 is 0.8 mm upon drying.

In a S4 step, a mixture of a plaster of Paris and water is placed on a board base paper, which is further covered with a board base paper. Then, this was dried and cured to obtain a plasterboard 30 having the thickness of 12.5 mm and the specific gravity of 1.3.

In a S5 step, a thermosetting resin solution 1 is coated on one side of a plasterboard 30 (surface for forming a reinforcing layer) at 200 g per 1 m², soaked into a board base paper and dried. A thermosetting resin solution 66 is composed of 100 parts by weight of an aqueous solution obtained by dissolving a 38% (% by weight, the same hereinafter) phenol resin in water, 0.2 part by weight of a surfactant and 12 parts by weight of a curing agent. The surfactant is sodium dialkylsulfosuccinate ester and a curing agent is a mixture of an aromatic hydrocarbon sulfonate and sulfuric acid.

In a S6 step, an interlayer adhesive 60 obtained by blending 100 parts by weight of a normal temperature curing resin (61) and 15 parts by weight of a curing agent (62) is coated on one side (not impregnated with a thermosetting resin solution) other than a surface for forming a reinforcing layer of a plasterboard 30. As a normal temperature curing resin, a phenol resin is used and, as a curing agent, a mixture of an aromatic hydrocarbon sulfonic acid and sulfuric acid is used.

In a S7 step, a side other than a side for forming a reinforcing layer (not impregnated with a thermosetting resin solution) of an another plasterboard 30 made according to the same manner as that of a S4 step is laminated on a side of a plasterboard 30 on which an interlayer adhesive 60 is coated, to adhesive them.

In a S8 step, a mat with a resin impregnated 40 made in the above S3 step is laminated on the face side surface and the back side surface of a plasterboard 30 having the two-layered structure, respectively.

In a S9 step, they are heat-pressed for 10 minutes under the condition of temperature of 100°C and a pressure of 3 kg/cm².

By the above steps, a refractory composite floor covering material 7 in which a reinforcing layer 4 is formed on the face side surface and the back side surface of plasterboard 30 having the two-layered structure is obtained.

Thereafter, in a S10 step, a refractory composite floor covering material 7 is processed by shaping, perforation and the like to panelize it into a few tens cm² square.

A supporting leg is fixed to the back side surface of a panelized refractory composite floor covering material, a plurality of which are combined for use in a floor covering material for a free access floor. When the refractory composite floor covering material is used for a floor of a business room, a business apparatus can be arranged on its face side surface and a wiring apparatus of a business apparatus and an air-conditioning apparatus can be arranged on its back side surface.

A penetrated hole formed by perforation processing can be utilized as a hole for taking out a wiring cord and cooling and heating air blown from an air-conditioning apparatus.

By panelizing a refractory composite floor covering material, the laying of a refractory composite constructional material becomes easy, the freedom of a combination of refractory composite materials upon laying is increased and they can be combined into an arbitral shape depending upon a shape of a floor.

Then, the action and effects of the present invention are explained.

A board base paper which is applied to the surface of a plasterboard 30 has originally the water resistance and is low in the resin impregnating properties and, for this reason, even when a mat with a resin impregnated is heat-pressed, a resin is not sufficiently soaked into a board base paper, and the adhesive properties of a mat with a resin impregnated to a porous inorganic core material was insufficient.

However, in this Example, since a thermosetting resin solution is coated on a board base paper which is a side for forming a reinforcing layer and dried (S5), a thermosetting resin is sufficiently soaked into even a board base paper having the low resin soaking properties. Therefore, a mat with a resin impregnated can be adhered firmly to a side for forming a reinforcing layer to integrate them.

A mineral fiber 42 is impregnated with a thermosetting resin 41 and a curing agent 43 in advance (S2), and dried to prepare a mat with a resin impregnated 40 (S3), which is laminated on a plasterboard 30 (S8), and heat-pressed (S9). For that reason, the adhesive properties between a mineral fiber and an impregnated thermosetting resin are improved. Mineral fibers are easily adhered mutually and, thus, an impregnation rate of a thermosetting resin can be improved, being advantageous.

A reinforcing layer composed of a mat with a resin impregnated is laminated on a porous inorganic core material and heat-pressed to be adhered to a plasterboard 30 and, thus, it is not necessary to use an adhesive separately and a manufacturing process is simplified.

Since a plasterboard 30 is used as a core material in a refractory composite floor covering material 7 of this Example, it is low cost and is excellent in the refractory properties and the compression strength.

Since the face side surface 71 and the back side surface 72 of a plasterboard 30 in a refractory composite floor covering material 7 are covered with a reinforcing layer 4 having the high strength, breakage dose not occur even when the tensile force is applied and the tensile properties are excellent.

Since a reinforcing layer 4 is composed of a thermosetting resin 41 and a mineral fiber 42, the processing properties are excellent.

Different from a thermoplastic resin, a thermosetting resin 41 is excellent in the refractory properties and is not softened even at an elevated temperature, the function as a reinforcing layer 4 is not lost.

Since a refractory composite floor covering material 7 of this Example is mainly composed of a plasterboard 30 and a reinforcing layer 4 composed of a plasterboard 30 and a thermosetting resin 41 and a mineral fiber 42, it is light, excellent in the processing properties and low cost.

Although a reinforcing layer 4 is formed on the face side surface 71 and the back side surface 72 of a plasterboard 30 in a refractory composite floor covering material 7 of this Example, it may be formed on either side. Although a plasterboard 30 is laminated in the form of two layers in this Example, it may be laminated in the form of one layer.

### (Experimental Example)

Regarding refractory composite floor covering materials, the impact loading test was performed as shown in Table 2. Test samples are refractory composite floor covering materials of Examples 1 to 5 obtained by making by varying the kind of a thermosetting resin solution, and refractory composite floor covering materials of Comparative Examples 1 and 2 obtained by making without coating a thermosetting resin solution.

Plasterboards are all in the form of two layers. A reinforcing layer is composed of 100 parts by weight of a glass chopped strand as a mineral fiber and 93 parts by weight of a phenol resin.

A curing agent which is mixed into a thermosetting resin solution in some cases is a mixture of an aromatic hydrocarbon sulfonate and sulfuric acid. A surfactant is sodium dialkylsulfonsuccinate ester.

The results of the above impact loading test are shown in Table 2. From the same Table, it can be seen that refractory composite floor covering materials of Examples 1 to 5 have the excellent strength as compared with Comparative Examples 1 and 2.

**Table 2**

| | example 1 | example 2 | example 3 | example 4 | example 5 | comparative example 1 | comparative example 2 |
|---|---|---|---|---|---|---|---|
| kinds of resin | Phenol resin | Phenol resin | Epoxy resin | Acrylic resin | Urea resin | Phenol resin | Phenol resin |
| Concentration of treating solution(wt%) | 38 | 41 | 35 | 35 | 40 | 58 | 5 |
| Kind of solvent | water | water-methanol | water | water-methanol | water | water | water |
| Surfactant*¹ (parts by weight) | 0.2 | - | 0.3 | - | 0.3 | 0.3 | 0.3 |
| Curing agent*¹ (parts by weight) | 12 | 15 | - | - | 17 | 14 | 15 |
| Final load*² (kgf) | 727 | 735 | 694 | 683 | 679 | 625 | 608 |

| | | | | | | | |
|---|---|---|---|---|---|---|---|
| *¹;relative to 100 parts by weight of treating solution | | | | | | | |
| *²; The impact loading test in which four corners of a 500mm X 500mm refractory composite floor covering material are supported with supporting legs at a distance between supporting points of 400mm, and a sand bag of the weight 30 kg is fallen from a height of 500 mm according to JIS A 1450 free access floor constituting material test method. | | | | | | | |

### Embodiment 4

The present embodiment is a refractory composite floor covering material composed of a porous inorganic core material and a reinforcing layer, characterized in that the porous inorganic core material is a laminate of a plurality layers of plasterboards. This is explained based on Example 1 to Example 3 below.

### (Example 1)

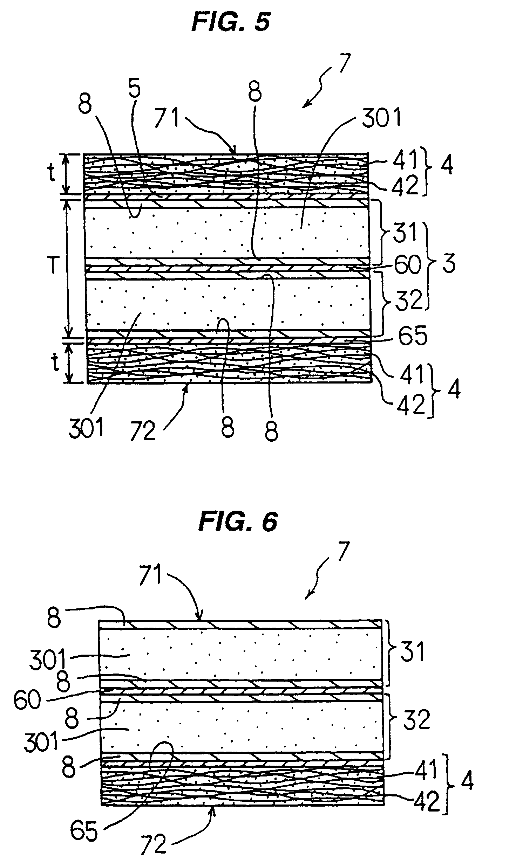

In a refractory composite floor covering layer 7 of this Example, a reinforcing layer 4 composed of a thermosetting resin 41 and a mineral fiber 42 is provided on both sides of the face side surface 71 and the back side surface 72 of a porous inorganic core material 3 as shown in Fig. 5. A porous inorganic core material 3 is a material in which two plasterboards 31 and 32 are laminated and adhered.

The thickness of respective plasterboards 31 and 32 is all 9,5 mm. The thickness T of a porous inorganic core material 3 which is a laminate of them is 19 mm and its specific gravity is 1.3.

Plasterboards 31 and 32 are a board in which a board base paper 8 is applied to the face side surface and the back side surface of a plaster plate 301. Respective plasterboard 31 and 32 are adhered by a phenol resin as an interlayer adhesive 60.

A reinforcing layer 4 is composed of 25% by weight of a thermosetting resin 41 and 75% by weight of a mineral fiber 42.

A thermosetting resin 41 is a phenol resin. As a mineral fiber 42, a mat-like glass fiber (weight 1000 g/m²) is used. the thickness t of a reinforcing layer 4 is 2 mm.

A reinforcing layer 4 is adhered to the above porous inorganic core material 3 with a surface adhesive 65. A surface adhesive 65 is composed of a phenol resin.

A process for manufacturing a refractory composite floor covering material of the present Example is explained.
(1) A mat-like glass fiber (weight 1000 g/m²) with an uncured phenol resin attached thereto (attached amount, term of solid 13%) was pressed at a temperature of 200 °C for 5 minutes to obtain a sheet-like glass fiber having the thickness of 1.5mm.
(2) After this sheet-like glass fiber was impregnated with a phenol resin solution with a curing agent added thereto (impregnation amount, term of solid 12%), it was pressed at a temperature of 80 °C for 20 minutes to obtain a sheet impregnated with a phenol resin having the thickness of 1.5 mm.
(3) As a board base paper 8, a cardboard (thickness 0.35 mm) obtained from a raw material of a wastepaper and a pulp with a water-repellant added thereto is prepared. Then, a mixture of a plaster of Paris and water is cast on a board base paper 8, a board base paper is further placed thereon, and a plaster is dried and cured. Like this, two plasterboards 31 and 32 in which a board base paper 8 is applied to a plaster plate 301 are made.
(4) Of the face side surface and the back side surface of two plasterboards (specific gravity 1.3, thickness 9.5 mm) 31 and 32, on a side where both are faced, a phenol resin solution with a curing agent attached (interlayer adhesive) was coated at a rate of 100 g/m² (term of solid) and both are laminated to obtain a porous inorganic core material 3.
(5) A phenol resin solution with a curing agent added (surface adhesive) was coated on both sides of a porous inorganic core material 3 at a rate of 100 g/m² (term of solid) and a sheet impregnated with a phenol resin made in the above (2) was overlaid. Further, after a phenol resin solution with a curing agent added was coated on this at a rate of 175 g/m² (term of solid), a commercially available glass fiber chopped strand mat (weight 450 g/m², thickness 0.5 mm) was overlaid and pressed at a temperature of 100 °C for 10 minutes. Thereby, as shown in Fig. 5, a refractory composite floor covering material 7 having the thickness of 23 mm composed of a porous inorganic core material 3 composed of two plasterboards 31 and 32 and a covering layer 4 which covers its face side surface and back side surface.

The resultant refractory composite floor covering material 7 is used, for example, by cutting into 50 cm² squares, attaching a leg to the back side surface and combining a plurality of them.

A resin emulsion may be coated on a butt end which was formed by cutting, to form a covering layer.

Then, the action and effects of this Example are explained.

While a plasterboard is low cost and excellent in the compression strength, the bending strength and the tensile strength are insufficient. Then, in this Example, as shown in Fig. 5, two plasterboards 31 and 32 are laminated and a reinforcing layer 4 is adhered on both sides of a porous inorganic core material 3 which is a laminate of plasterboards.

For that reason, in a refractory composite floor covering material 7 composed of the above porous inorganic core material 3 and a reinforcing layer 4, even when the tensile force is applied, breakage dose not occur and the excellent bending strength and the tensile strength are exerted.

Since a reinforcing layer 4 is composed of a thermosetting resin 41 and a mineral fiber 42 (glass fiber), the processing properties are excellent.

Different from a thermoplastic resin, since a thermosetting resin 41 is excellent in the refractory properties and is not softened even at an elevated temperature, the function as a reinforcing layer 4 is not lost.

Since a refractory composite floor covering material 7 of this Example is composed of a plasterboard 30, a thermosetting resin 41 and a mineral fiber 42, it is low cost, light and excellent in the processing properties.

Although in a refractory composite floor covering material of this Example as shown in Fig. 5, a reinforcing layer 4 is formed on both sides of a porous inorganic core material 3, as shown in Fig. 6, it may be formed on the back side surface.

Alternatively, it may be formed on the face side surface. Also in these cases, breakage of a refractory composite floor covering material can be prevented when the tensile force is applied.

Although plasterboards 31 and 32 of 9.5 mm are used in this Example, a plasterboard of 12.5 mm and that of 15.0 mm may be used. Two plasterboards 31 and 32 may have the different thickness. For example, a case where plasterboards 31 and 32 are 9.5 mm and 12.5 mm, respectively, where 12.5 mm and 15.0 mm, and where 9.5 mm and 15.0 mm may be used. Further, 3 or more plasterboards may be adhered for use.

A reinforcing layer may be provided on the surface of only one layer of a plasterboard. In this case, the thickness of a plasterboard is 9.5 mm, 12.5 mm or 15.0 mm but is not limited to them.

### (Example 2)

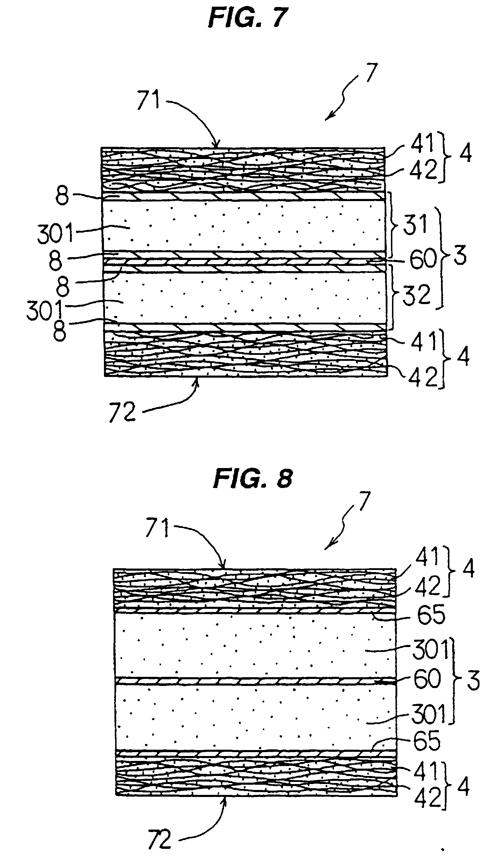

In a refractory composite floor covering material 7 of this Example, a reinforcing layer 4 is provided, directly without via a surface adhesive, on the face side surface 71 and the back side surface 72 of a porous inorganic core material 3 obtained by laminating two plasterboards 31 and 32 as shown in Fig. 7.

Plasterboards 31 and 32 are 15 mm, respectively.

Upon manufacturing a refractory composite floor covering material of this Example, as in Example 1, a porous inorganic core material 3 composed of two plasterboards 31 and 32 is prepared. Then, a mat-like glass fiber (weight 500g/m²) was impregnated with an uncured phenol resin, then dried at 50 °C to prepare a mat impregnated with 100 parts by weight of a phenol resin relative to 100 parts of a fiber amount.

Then, this mat with a resin impregnated was laminated on the face side surface 71 and the back side surface 72 of a porous inorganic core material 4 and heat-pressed at 100 °C and a pressure of 1 kg/cm² for 10 minutes. Thereby, a refractory composite floor covering material 7 having a thickness of 30 mm in which a reinforcing layer 4 is applied directly to a porous inorganic core material 3 was obtained.

Also in this Example as in Example 1, the similar effects can be obtained.

### (Example 3)

In a refractory composite floor material 7 of this Example, a porous inorganic core material 3 in which two plaster plates 301 are laminated and adhered is used.

A plaster plate 301 is composed of a plaster and the thickness of one plaster plate is 12.5mm in any case. Two plaster plates 301 are adhered with a phenol resin as an interlayer adhesive 60.

The others are as the same as those in Example 1. Also in this Example, the same effects as those of Example 1 are obtained.

### Embodiment 5

This embodiment is a refractory composite floor covering material composed of a porous inorganic core material and a reinforcing layer, characterized in that a porous inorganic core material is composed of a plasterboard having the predetermined thickness, the specific gravity and the strength.

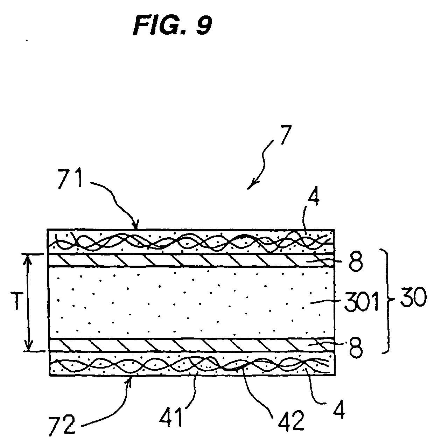

That is, in a refractory composite floor covering material 7, a reinforcing layer 4 composed of a thermosetting resin 41 and a mineral fiber 42 is adhered to both sides of the face side surface 71 and the back side surface 72 of a plasterboard 30 as shown in Fig. 9.

A plasterboard 30 is composed of one layer, the thickness thereof T is 12.5 mm and its specific gravity is 1.2 g/cm³. A plasterboard 30 has the bending strength 95 kgf/cm² and the bending Young's modulus is 47000 kgf/cm².

A reinforcing layer 4 is composed of 18% by weight of a thermosetting resin and 82% by weight of a mineral fiber. A thermosetting resin is a phenol resin. As a mineral fiber, a glass fiber chopped strand (weight 600g/m²) is used. The thickness of a reinforcing layer 4 is 0.7 mm.

A plasterboard 30 is a board in which a board base paper 8 is applied to the face side surface 71 and the back side surface 72 of a plaster plate 301. As a board base paper 8, a cardboard formed by using a wastepaper and a pulp as a main raw material and adding a water-repellant thereto is used. The above reinforcing layer 4 is adhered to the above board base paper 8 with an adhesive composed of a phenol resin.

A process for manufacturing a refractory composite floor covering material is explained.
(1) A mixture of a plaster of Paris and water is cast on a board base paper 8, a board base paper 8 is further placed thereon and a plaster is dried and cured. Thereby, a plasterboard 30 in which a board base paper 8 is applied to the face side surface 71 and the back side surface 72 of a plaster plate 301 is made.
(2) Then, after a phenol resin solution with a curing agent added thereto is coated on the face side surface of a board base appear 8 at a rate of 420 g/m² (term of solid), a commercially available glass fiber chopped strand mat (weight 600g/m², thickness 0.7 mm) is overlaid thereon and pressed at a temperature of 100 °C for 15 minutes. Thereby, a reinforcing layer 4 is formed on the face side surface 71 and the back side surface 72 of a plasterboard 30.
(3) A refractory composite floor covering material 7 is thereafter cut with a disc saw into a few tens cm² size, legs are fixed to the back side surface 72, a plurality of which are combined to use as a refractory composite floor covering material. When a refractory composite floor covering material 7 is on a floor in a business room, a business apparatus can be arranged on the face side surface thereof and a wiring apparatus for a business apparatus and an air-conditioning apparatus can be arranged on the back side surface thereof. An opening of a refractory composite floor covering material is provided for a wiring apparatus and an air-conditioning apparatus, which can be taken out onto a floor through the opening.

Then, the action and the effects of this Example are explained.

In this Example, a plasterboard 30 has the above thickness, the specific gravity, the bending strength and the bending Young's modulus. For that reason, a refractory composite floor covering material using this plasterboard as a core material exerts the excellent strength.

While a plasterboard 30 is low cost and excellent in the refractory properties and the compression strength, its tensile strength is insufficient. Then, in this Example, by adhering a reinforcing layer 4 to both sides of a plasterboard 30, the tensile strength is improved. That is, since the face side surface 71 and the back side surface 72 of a plasterboard 30 are covered with a reinforcing layer 4, breakage dose not occur even when the tensile force is applied. Since a reinforcing layer 4 is composed of a thermosetting resin and a mineral fiber, the processing properties are excellent.

Different from a thermoplastic resin, since a thermosetting resin is excellent in the refractory properties and is not softened even at an elevated temperature, the function as a reinforcing layer 4 is not lost.

Since a refractory composite floor covering material 7 of this Example is mainly composed of a reinforcing layer 4 composed of a thermosetting resin and a mineral fiber, it is light, excellent in the processing properties and low cost.

Although a reinforcing layer 4 is formed on both sides of a plasterboard 30 in this Example as shown in Fig. 9, it may be formed on either of the face side surface and the back side surface.

A butt end which was exposed by cutting a refractory composite floor covering material 7 may be covered with a covering layer for preventing a plaster powder from flying. The face side surface 71 of a refractory composite floor covering material 7 may be covered with a patterned layer and the back side surface 72 may be covered with an electromagnetic shielding layer composed of a resin impregnated with an electrically-conductive filler such as an aluminum filler.

### (Experimental Example)

In this Example, as shown in Table 3, refractory composite floor covering materials were made using plasterboards having the different thickness, the specific gravity and the strength and the anti-impact properties were measured.

Refractory composite floor covering materials relating to the invention were Examples 2 to 4 and refractory composite floor covering materials relating to comparative example were Comparative Examples 1-3. Plasterboards are all in the form of one layer. A reinforcing layer is composed of 100 parts by weight of a glass fiber chopped strand as a mineral fiber and 90 parts by weight of a phenol resin as a thermosetting resin.

Others were the same as those of Example 1.

Upon measurement, the impact loading test was performed in which a refractory composite floor covering material is cut into a 500mm X 500mm size, four corners thereof are supported with supporting legs having a distance between supporting points and a sand bag having the weight of 30 kg is fallen from a height of 500 mm according to the JIS A1450 free access floor constituting material test method.

The results thereof are shown in Table 3. From Table 3, it can be seen that Examples 2-4 to relating to the present invention are all excellent in the anti-impact properties.

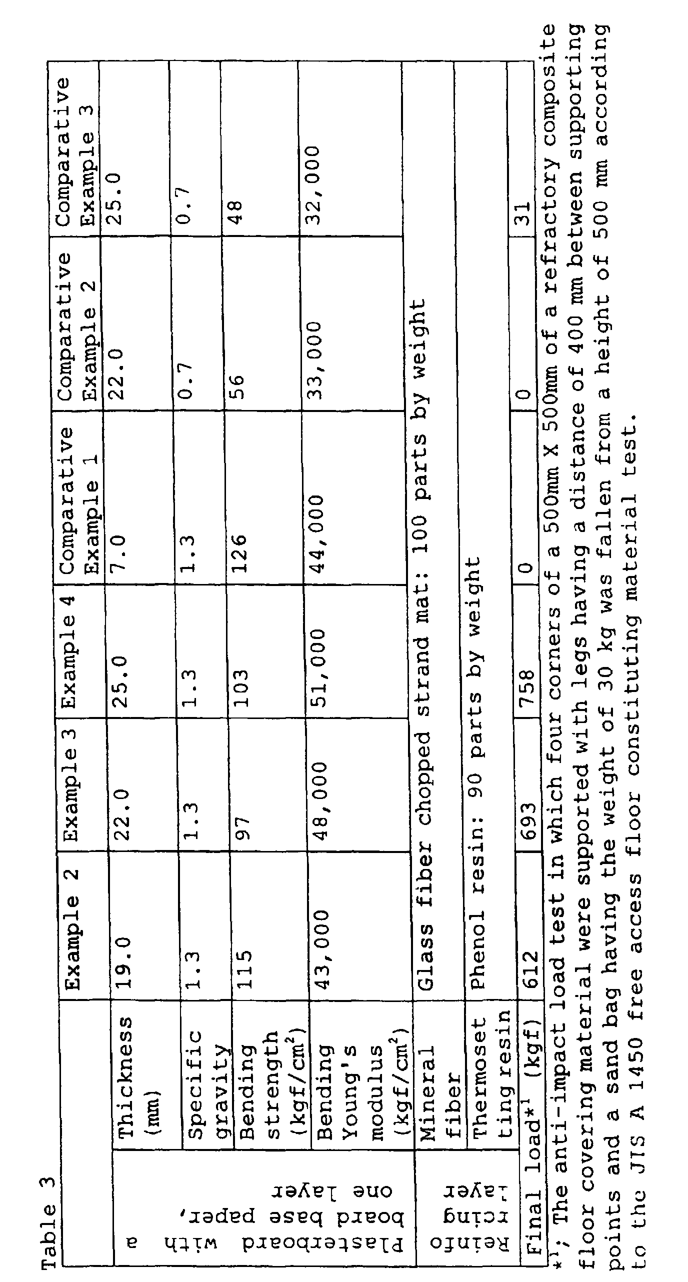

### Embodiment 6

This embodiment is a refractory composite floor covering material composed of a porous inorganic core material and a reinforcing layer, characterized in that the content of a thermosetting resin contained in a reinforcing layer is not greater than 20% by weight. An embodiment of this invention is explained in detail by Example based on the drawings.

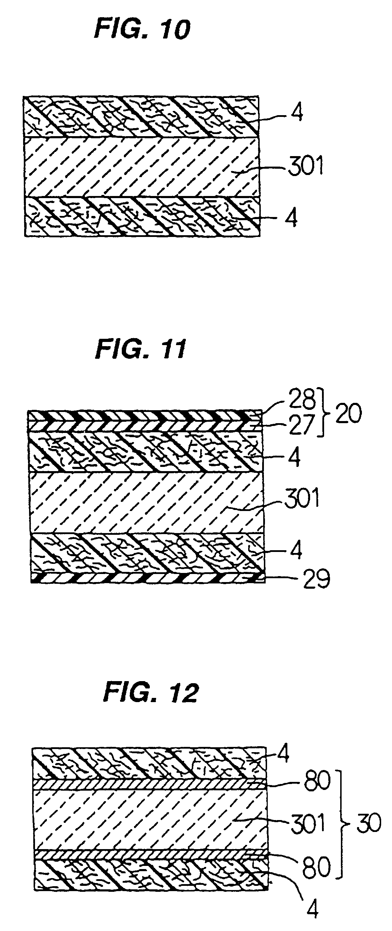

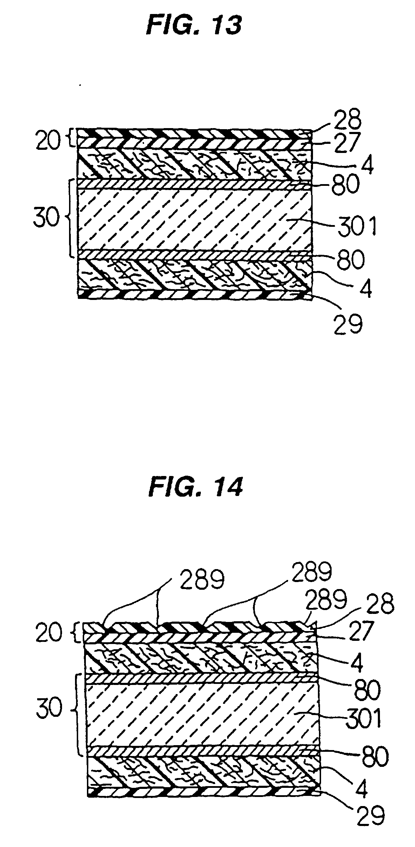

Fig. 10 is a cross-sectional view showing one fundamental embodiment of a refractory composite constructional material of the present invention, and Fig.11 is a cross-sectional view showing the other fundamental embodiment in which a patterned layer is provided on a composite constructional material of a fundamental embodiment shown in Fig. 10. And Fig. 12 is a cross-sectional view showing the other practical embodiment of a refractory composite constructional material and Fig. 13 is a cross-sectional view showing the other practical embodiment in which a patterned layer is provided on a glass fiber-reinforced plasterboard as a constructional material of the other practical embodiment shown in Fig. 12. Further, Fig. 14 is a cross-sectional view showing the other practical embodiment in which a patterned layer of a glass fiber-reinforced plasterboard as a constructional material of the practical shown in Fig. 13 is embossed.

In Figs. 10 to 14, a symbol 301 indicates a normal plaster plate, a symbol 4 indicates a reinforcing layer, respectively. A reinforcing layer 4 in composite constructional materials of these embodiments is composed of a glass fiber as a mineral fiber and not greater than 20% by weight of a phenol resin as a thermosetting resin and, as a glass fiber for forming this reinforcing layer 4, a mat-like glass fiber in which an uncured phenol resin is attached to the fiber surface in advance is used.

The above mat-like glass fiber in which an uncured phenol resin is attached to the fiber surface can be manufactured by the known method, for example, by flowing a glass raw material melt through a nozzle to fiberize with a centrifugation method or a blowing method and, at the same time, converting a phenol resin solution into a mist which is spraied and, thereafter aggregating fibers.

The weight of this mat-like glass fiber can be controlled by a flowing amount of a glass melt from a nozzle and a fiber aggregating rate. Since in this mat-like glass fiber, an uncured phenol resin is attached to the fiber surface, even when not impregnated with a phenol resin upon molding, it can be molded into a plate-like reinforcing layer 4 on the surface of a plaster plate 301 or a plasterboard 30 by heat-pressing (hot-pressing) at a temperature of 130 to 160 °C. According to the above method, an amount of a phenol resin in a mat-like glass fiber can be arbitrarily adjusted to around 30% by weight and it was adjusted to 7 to 12% by weight in a reinforcing layer 4 of the above respective embodiments.

In fundamental embodiments shown in Figs 10 and 11, a reinforcing layer 4 is provided directly on both sides of a plaster plate 301, respectively, but glass fiber-reinforced plasterboards 30 as practical embodiments shown Fig. 12 to Fig. 14, in which a water-resistant paper 80 is applied to both sides of a plaster plate 301, respectively, is used and a reinforcing layer 4 is formed on water-resistant papers 80 on both sides of the plasterboard 30, respectively.

And in embodiments shown in Fig. 11 and Fig. 13, respectively, a phenol core layer 27 in which a kraft paper as a core material is impregnated with a phenol resin as a thermosetting resin and pattern layer 28 in which a pattern paper (PA) of a kraft paper with a pattern and a color printed thereon is impregnated with a melamine resin as a thermosetting resin are successively laminated to form a patterned layer 20 and, on the other hand, a backer layer 29 in which a kraft paper as a core material is impregnated with the same kind of a thermosetting resin as that of the above patterned layer 28 is formed on a reinforcing layer 4 which is formed on the opposite side (lower side in the figure) of the plaster plate 301. The formed phenol core layer 27 exerts the function of reinforcing a pattern layer 28.

In a glass fiber-reinforced plasterboard as a practical embodiment shown in Fig. 14, a pattern layer 28 of the patterned layer 20 is embossed so as to form a cell-like recess 289 to project the surface shape of the pattern layer 28 to form a tile-like surface.

A patterned layer 20 and a backer layer 29 in embodiments shown in Fig. 11, Fig. 13 and Fig. 14 can be formed by overlaying a kraft paper for forming a phenol core layer 27, which is impregnated with a phenol resin and dried and brought into an uncured state (B stage state), and a patterned paper for forming a pattern layer, which is pregnated with a melamine resin and dried and brought into an uncured state (B stage state) succesively over one side of a constructional material of embodiments shown in Fig. 10 and Fig. 12, and overlaying a kraft paper for forming a backer layer 29, which is impregnated with a melamine resin and dried and brought into an uncured state (B stage state) over the other side of the above constructional material and, thereafter, hot-pressing at a temperature of 160 °C and a pressure of 7 to 10 kg/cm² for 10 to 20 minutes.

Then, three kinds of embodiments of a glass fiber-reinforced plasterboard as a practical embodiments of the present invention shown in Fig. 12, as well as two kinds of Comparative Examples for comparing with them were measured and the results thereof are shown. Examples 1 to 3 and Comparative Examples 1 and 2 were manufactured by the following method.

### (Example 1)

(1) A commercially available plasterboard (thickness 12.5 mm, specific gravity 0.70) in which a water-resistant paper is applied to both sides of a plasterboard is cut into 300mm X 300mm and a phenol resin solution was coated on both sides of the face and back sides of the plasterboard at a rate of 13 g (term of solid) per one side, respectively.
(2) A mat-like glass fiber (weight 350 g/m²) having 7% by weight of a phenol resin was cut two 300mm X 300mm, which were overlaid on both face and back side surfaces of a plasterboard on which the phenol resin solution and, thereafter, hot-pressed at a temperature of 150 °C and a pressure of 0.5 kg/cm² for 15 minutes to obtain a composite constructional material of this Example.

The final content of a phenol resin in a reinforcing layer in this Example was 10.2% by weight.

### (Example 2)

According to the same manner as that of Example 1 except that the weight of a mat-like glass fiber having 9% by weight of a phenol resin was 500 g/m² and an amount of a phenol resin solution to be coated was 268 g (term of solid) per one side, a composite constructional material of this Example 2 was obtained. The final content of a phenol resin in a reinforcing layer of this Example 2 was 14.8% by weight.

### (Example 3)

According to the same manner as that of Example 1 except that the weight of a mat-like glass fiber having 12% by weight of a phenol resin was 1000 g/m² and an amount of a phenol resin solution to be coated was 30g (term of solid) per one side, a composite constructional material of this Example 3 was obtained. The final content of a phenol resin in a reinforcing layer of this Example 3 was 19.7% by weight.

### (Comparative Example 1)

(1) A commercially available plasterboard (thickness 12.5 mm, specific gravity 0.70) in which a water-resistant paper was applied to both sides of a plaster plate, respectively, was cut into 300mm X 300mm.
(2) A mat-like glass fiber (weight 1000g/m²) was cut into two 300mm X 300mm, and soaked into a phenol resin solution so as to impregnate the mat-like glass fiber with a phenol resin solution, this mat-like glass fiber was overlaid on both face and back sides of a plasterboard, respectively, which was thereafter hot-pressed at a temperature of 150 °C and a pressure of 0.5 kg/cm² for 15 minutes to obtain a composite constructional material of this Comparative Example 1. The final content of a phenol resin in a reinforcing layer of Comparative Example 1 was 38% by weight.

### (Comparative Example 2)

The above commercially available plasterboard (thickness 12.5 mm, specific gravity 0.70) was cut into 300mm X 300mm, which was keep the state as it was without using a glass fiber, a phenol resin and the like, to obtain a composite constructional material of Comparative Example 2.

Regarding composite constructional materials of Examples 1 to 3 and Comparative Examples 1 and 2 of the present invention, the bending strength in the dry state and the bending strength when water is absorbed were measured according to a method prescribed in JIS A6901 and the fireproofing properties were measured according to a surface heating test method prescribed in JIS A1321 prescribed in JIS A1321. The results thereof are shown are shown in Table 4.

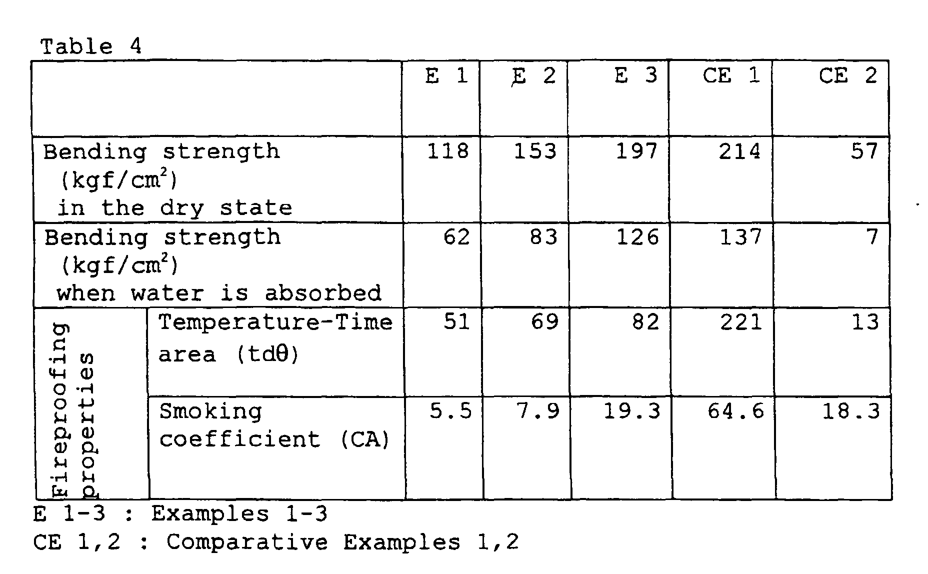

As apparent from the results of Table 4, the constructional materials of Examples 1 to 3 of the present invention are excellent in the bending strength in the dry state and in the state when water is absorbed as compared with the previous plasterboards shown in Comparative Example 2. The constructional materials of Examples 1 to 3 of the present invention having the content of a phenol resin of not greater than 20% by weight are all excellent in the fireproofing properties due to the remarkably small temperature-time area (index for easy burning) and remarkably small smoking coefficient as compared with constructional materials in which a glass fiber reinforcing having the high content of a resin is formed by impregnating a glass fiber with a phenol resin which is shown in Comparative Example 1.

As described above, according to a composite constructional materials of the above various embodiments of the present invention, since a reinforcing layer 4 composed of a phenol resin and a glass fiber is formed on a plaster plate 301, the reinforcing layer 4 has the high strength and, thus, even when an object strikes the constructional material, a recess and a crack can be prevented from occurring. Since the reinforcing layer 4 is composed of a phenol resin and a glass fiber, even when a wall paper is applied thereon, it can be peeled. Since the content of a phenol resin in the reinforcing layer 4 is not greater than 20% by weight, the fireproofing properties can be improved ant the material cost can be suppressed to relatively low, and the weight can be lowered. Since both sides of a plaster plate 301 are covered with a reinforcing layer 4 composed of a phenol resin and a glass fiber, the water resistance and the refractory properties of a constructional material equipped with a plaster plate 301 can be improved.

In particular, according to embodiments shown in Fig. 12 to Fig. 14, since a water-resistant paper layer 80 is further provided on between both sides of a plaster plate 301 and a reinforcing layer 4, the further high strength can be obtained.

In particular, according to embodiments shown in Fig. 11, Fig. 13 and Fig. 14, since a patterned layer 20 obtaining by successively laminating a phenol core layer 27 in which a kraft paper is impregnated with a phenol resin and a pattern paper 28 in which a pattern paper is impregnated with a melamine resin are provided on a reinforcing layer 4, it is not necessary to attach a patterned paper or the like in order to decorate the surface of an attached constructional material, the laying properties can be improved. And in particular, according to an embodiment shown in Fig. 14, since the patterned layer 20 is embossed in order to make the surface shape tile-like, the higher decorating effects can be obtained.

And in particular, according to embodiments shown in Fig. 11, Fig. 13 and Fig. 14, since a patterned layer 20 is provided only on a reinforcing layer of one side of a plaster plate 301 and a backer layer 29 in which a kraft paper as a core material is impregnated with a melamine resin which is the same kind of thermosetting resin as to the thermosetting resin of a pattern layer 28 is provided on a reinforcing layer 4 on an opposite side of the plaster plate 301, the shrinking force upon curing of a patterned layer 20 is counteracted with the shrinking force upon curing of a backer layer 29 and warpage of the constructional material can be prevented from occurring.

The present invention has been explained based on the figures, the present invention is not limited to the aforementioned examples but, as a mineral fiber used in a reinforcing layer, a rock wool, a ceramic fiber and the like can be used in addition to the aforementioned glass fiber. As a thermosetting resin used for a reinforcing or the like, an urea resin, an urethane resin, an epoxy resin and the like can be used in addition to the aforementioned phenol resin.

Upon forming a reinforcing layer, an inorganic filler such as plaster, aluminum hydroxide, calcium carbonate, silica and the like, as well as an organic filler such as rubber, pulp and the like may be added to a mineral fiber, as necessary. Although a patterned layer 28 is composed of a phenol core layer 27 and a pattern layer 28, a patterned layer 20 may be composed of only a pattern layer 28.

### Embodiment 7

This embodiment is a refractory composite floor covering material composed of a porous inorganic core material and a reinforcing layer, characterized in that the content of a thermosetting resin contained in a reinforcing layer is 20% to 200% by weight relative to 100 parts by weight of a mineral fiber.

This is explained by Examples 1 and 2 by comparing with Comparative Examples 1 and 2.

### (Example 1)

In a refractory composite floor covering material of this Example, a reinforcing layer is adhered to both sides of the face side surface and the back side surface of a plasterboard(see Fig. 9). A reinforcing layer is composed of 42 parts of a composite resin and 100 parts by weight of a mineral fiber.

A composite resin contained in a reinforcing layer is composed of 95% by weight of a phenol resin and 5% by weight of an elastic polymer. An elastic polymer is nitrile-butadiene rubber latex.

As a mineral fiber, a glass fiber chopped strand mat (weight 600g/m²) is used. The thickness of a reinforcing t is 0.7 mm.

The specific gravity is 1.2.

A plasterboard is composed of one layer and its thickness is 9.5 mm. The specific gravity of a plasterboard is 1.3.

A plasterboard is a board in which a board base paper 8 is applied to the face side surface and the back side surface of a plaster plate. The reinforcing layer is adhered on a surface of a plasterboard by using a surface adhesive. As the aforementioned board base paper, a cardboard having the thickness of 0.3 to 0.5 mm in which a water-repellent and the like is added to a wastepaper and a pulp as a main raw material.

As a surface adhesive, a phenol resin is used.

A process for manufacturing a refractory composite floor covering material of this Example is explained.
(1) 95% by weight of a phenol resin before curing and 5% by weight of an elastic polymer before cross-linking are mixed to obtain a resin solution.
(2) A plasterboard (specific gravity 1.0, thickness 9.5 mm) in which a board base paper 8 is applied to both sides of a plasterboard 301 was prepared.
(3) A surface adhesive comprising a resin solution of the above (1) with a curing agent added thereto was coated on the surface of a plasterboard 30 at a rate of 250 g/m² (term of solid) and a commercially available glass fiber chopped strand mat (weight 600 g/m², thickness 0.7 mm) was overlaid thereon, which was pressed at a temperature of 80 °C for 20 minutes. Thereby, a reinforcing layer was formed on the surface of a plasterboard.

A refractory composite floor covering material having the thickness of 10.9 mm composed of a plasterboard and a reinforcing layer was obtained.

The resultant refractory composite floor covering material is cut, for example, into a few tens cm² square, a leg is attached to the back side surface, and a plurarity of them are combined, which is used as a substrate for a FA floor.

Then, the action and the effects of the present invention are explained. In a refractory of composite floor covering material of the present invention, a reinforcing layer is adhered to the face side surface and the back side surface of a plasterboard. Thereby, even when the tensile force is applied, a high strength reinforcing layer dose not break. Therefore, a refractory composite floor covering material exerts the excellent tensile strength.

A reinforcing layer is composed of a thermosetting resin and a mineral fiber and excellent in the processing properties.

Since a thermosetting resin contained in a reinforcing layer is excellent in the refractory properties and is not softened even at an elevated temperature different from a thermoplastic resin, the functions as a reinforcing layer is not lost.

Therefore, a reinforcing layer continues to keep the high strength and can impart the durability to a refractory composite floor covering material.

Since a refractory composite floor covering material of this Example is composed of a reinforcing layer formed of a plasterboard as well as a composite resin and a mineral fiber, it is light, excellent in the processing properties and low cost.

Further, since a reinforcing layer contains a thermosetting resin and a mineral fiber at the above blending rate, the material has the mechanical properties such as the high tensile strength, the bending strength and the anti-impact properties.

For that reason, the mechanical properties of a refractory composite floor material is improved.

The thermosetting resin in a reinforcing layer comprises a thermosetting resin and the aforementioned elastic polymer.

An elastic polymer imparts the excellent strength and toughness to a thermosetting resin. For that reason, even when a nail is struck into a reinforcing layer, a crack dose not occur from a nail as an origin. An elastic polymer maintains the anti-impact properties and the anti-frictional properties to a nail and can improve the nail holding force of a nail.

Therefore, the nail endurance force can be imparted to a refractory composite floor covering material.

Although a reinforcing layer is formed on both sides of a plasterboard, it may be formed on either of the face side surface and the back side surface thereof. Also in these cases, when the tensile force is applied, a refractory composite floor covering material can be prevented from breaking.

In a refractory composite floor covering material, a plasterboard is one layer but it may be laminated in the form of two or more layers.

### (Example 2)

In a refractory composite floor covering material of this Example, a reinforcing layer is composed of 100 parts by weight of a mineral fiber and 30 parts by weight. An elastic polymer is not contained in a reinforcing layer.

As a porous inorganic core material, two plasterboards which are laminated and adhered with an adhesive comprising a phenol resin are used. One plasterboard has the thickness of 12.5 mm and its specific gravity is 1.3.

Others are the same as those of Example 1.

### (Comparative Example 1)

In a refractory composite floor covering material of this Example, a reinforcing layer is composed of 100 parts by weight of a mineral fiber and 10 parts by weight of a phenol resin.

Others are the same as those of Example 2.

### (Comparative Example 2)

In a refractory composite floor covering material of this Example, a reinforcing layer is composed of 100 parts by weight of a mineral fiber and 220parts by weight of a phenol resin.

Others are the same as those of Example 2.

### (Experimental Example)

In this Example, regarding reinforcing composite floor covering materials of the aforementioned Example 2 and Comparative Examples 1 and 2, the anti-impact properties and the fireproofing properties were evaluated.

Upon evaluating the anti-impact properties, the impact loading test was performed in which the above refractory composite floor covering materials were brought into 500mm X 500mm size, four corners thereof were supported by a supporting leg having a distance of 400 mm between supporting points and a sand bag having the weight of 30 kg was fallen from a height of 500 mm according to the JIS A 1450 free access floor constituting test method. The results of them are shown in Table 5.

Form the same Table, it can be seen that the refractory composite floor covering material of Example 2 has the excellent anti-impact properties and the temperature elevating rate is low and smoking is small.

**Table 5**

| | | Example 2 | Comparative Example 1 | Comparative Example 2 |
|---|---|---|---|---|
| Porous inorganic core material | | Plasterboard with a board base paper Specific gravity: 1.3 Thickness: 12.5 Number of laminate:2 | ← | ← |
| Reinforcing layer (parts by weight) | Mineral fiber (Glass fiber chopped strand mat) | 100 | ← | ← |
| | Thermosetting resin (Phenol resin) | 30 | 10 | 220 |
| Fireproofing properties | Temperature-time area (td θ) | | 26 | 583 |
| | Smoking coefficient (CA) | 48 | 37 | 146 |
| Final load (kgf) | | 718 | 503 | 741 |

### Embodiment 8

The present embodiment is a refractory composite floor covering material composed of a porous inorganic core material and a reinforcing layer, characterized in that a patterned layer is provided on the uppermost surface of the refractory composite floor covering material. This is explained by Examples 1 to 3.

### (Example 1)

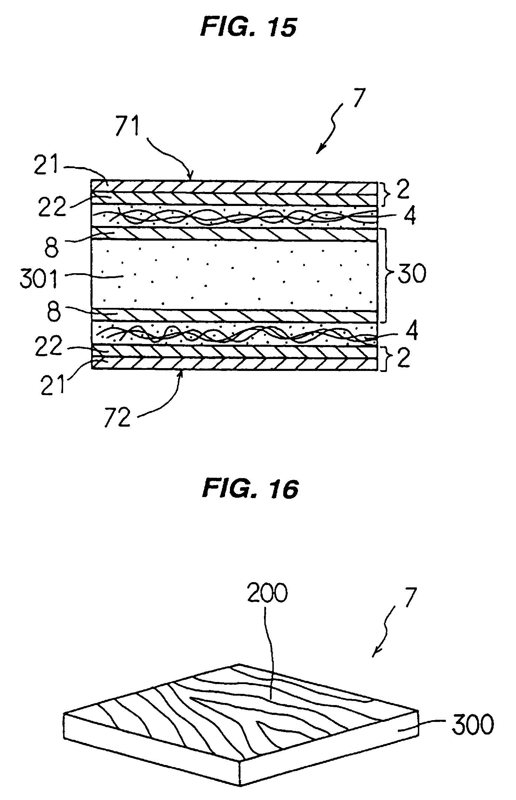

A refractory composite floor covering material of the present invention is explained using Fig. 15 to Fig. 16.

In a refractory composite floor covering material 7, a reinforcing layer 4 composed of a thermosetting resin and a mineral fiber is adhered to both sides of the face side surface 71 and the back side surface 72 of a plasterboard 30. A patterned layer 2 is provided on the uppermost surface of a refractory composite floor covering material 7.

A patterned layer 2 is wood-finish tone and, as shown in Fig. 16, the wood-finish pattern 200 is manifested on the face side surface 71 and the back side surface 72 of a refractory composite floor material 7.

A patterned layer 2 is a melamine patterned plate having the natural wood-finish tone, in which a patterned plate 21 impregnated with a melamine resin is arranged on the face side surface and a paper layer 22 impregnated with a resin called as a melamine backer is arranged on the back side surface and they are laminated and hot-pressed to cure a melamine resin.

A plasterboard 30 is composed of one layer and the thickness thereof is 9.5 mm and the specific gravity thereof is 1.3.

A plasterboard 30 is a board in which a board base paper 8 is applied to the face side surface and the back side surface of a plaster plate 301. As a board base paper 8, a cardboard formed by adding a water-repellent to a wastepaper and a pulp as a raw material is used. The reinforcing layer 4 is adhered to a plasterboard 30 with an adhesive composed of a phenol resin.

A reinforcing layer 4 is composed of 37% by weight of a thermosetting resin and 63% by weight of a mineral fiber. The thermosetting resin, is a phenol resin. As the mineral fiber, a mat-like glass fiber (weight 500g/cm²) is used. The thickness of a reinforcing layer 4 is 2 mm.

A process for manufacturing a refractory composite floor covering material of this Example is explained.
(1) A mixture of a plaster of Paris and water is cast on a board base paper 8, a board base paper 8 is further placed thereon and a plaster is dried and cured. Thereby, a plasterboard 30 in which a board base paper 8 is applied to the face side surface and the back side surface of a plaster plate 301 is made.
(2) A phenol resin solution with a curing agent added thereto was coated on the surface of a board base paper 8 at a rate of 350 g/m² (term of solid), and a commercially available glass fiber chopped strand mat (weight 600 g/m², thickness 0.7 mm) was overlaid thereon, which was pressed at a temperature of 80 °C for 20 minutes. Thereby, a reinforcing layer 4 is formed on the face side surface and the back side surface of the plasterboard 30.
(3) A bleached kraft paper for a patterned layer on which wood-finish was printed (basis weight 80 g/m²) and a bleached kraft paper for a backer layer (basis weight 80 g/m²) were impregnated with a melamine resin at a rate of 80% and 80%, respectively, to obtain a paper impregnated with a melamine resin as a patterned layer. Next, this paper with melamine resin impregnated was placed on the surface of a reinforcing layer 4, which was heat-pressed at a pressure of 1 to 50 kg/cm² and a temperature of 120 to 180 °C for 5 to 300 seconds to integrately mold. Thereby, a refractory composite floor covering material 7 can be obtained.
(4) A refractory composite floor covering material 7 is cut with a disc saw for woodworking into a few tens cm² size, a leg is attached to the back side surface thereof, a plurality of them are combined, which is used as a refractory composite floor covering material.

Then, the action and the effects of the present invention is explained.

Since, in refractory composite floor covering material 7, a patterned layer is provided on the face surface of a reinforcing layer which covers a plasterboard 30, the design properties are high.

Since a plasterboard 30 is low cost and excellent in the refractory properties and the compression strength. By adhering a reinforcing layer 4 to both sides of a plasterboard 30, the tensile strength is improved. For this reason, even when the tensile force is applied to a refractory composite material 7, breakage dose not occur. A reinforcing layer 4 is composed of a thermosetting resin and a mineral fiber and the processing properties are excellent.

Since a thermosetting resin is excellent in the refractory properties and is not softened even at an elevated temperature different from a thermoplastic resin, the function as a reinforcing layer 4 is not lost.

Since a refractory composite floor covering material 7 of this Example is composed of a plasterboard 30, a reinforcing layer 4 composed of a thermosetting resin and a mineral fiber, as well as a patterned layer 2 made of a melamine resin, it is light, excellent in the processing properties and low cost.

Although a reinforcing layer 4 is formed on both sides of a plasterboard 30 in a reinforcing composite floor covering material of this Example as shown in Fig. 15, it may be formed on the back side surface thereof. It may be formed on the face side surface thereof. Also in these cases, when the tensile force is applied, breakage of a refractory composite floor covering material can be prevented.

Although the thickness of a plasterboard is 9.5 mm in a refractory composite floor covering material of this Example, it is not limited thereto but, for example, 12.5 mm and 15.0 mm can be used. Although a plasterboard of one layer is used in this Example, a plurality of, two or more of layers may be used. As shown in Fig. 16, a butt end surface 300 which was exposed by cutting a refractory composite floor covering material 7 may be covered with a covering layer for preventing a plaster powder from flying.

### (Example 2)

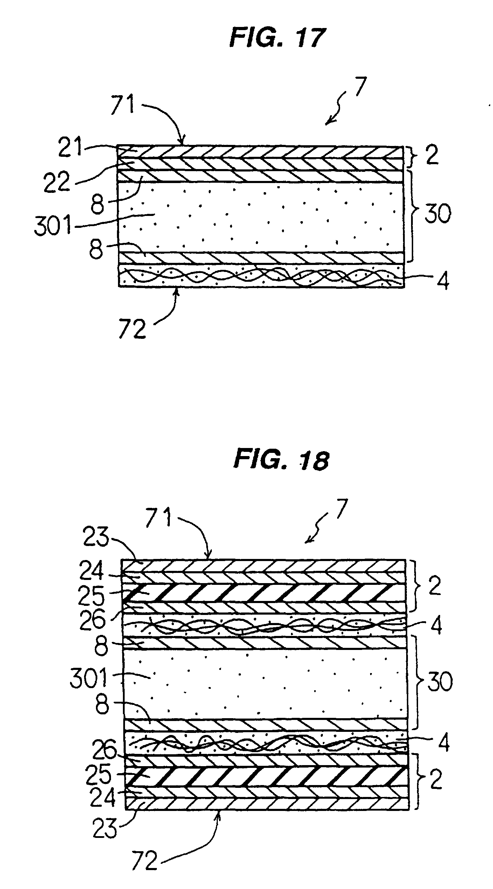

In a refractory composite floor covering material 7 of this Example, as shown in Fig. 17, a patterned layer 2 is provided on the face side surface 71 of a plasterboard 30 and a reinforcing layer 4 is provided on the back side surface 72 thereof.

Others are the same as those of embodiment 1.

In this Example, a reinforcing layer 4 for reinforcing the strength is provided only on the back side surface 72 of a plasterboard 30. The tensile force is applied to the back side surface 72 from the above. For that reason, by covering the back side surface 72 with a reinforcing layer 4, the anti-tensile properties can be imparted to a plasterboard 30.

A patterned layer 2 for decorating the surface is provided on the face side surface 71 of a plasterboard 30 and a refractory composite floor covering material 7 is useful as a floor covering material for the interior decoration.

Also in the present invention, the same effects as those of Example 1 can be obtained.

### (Example 3)

In a refractory composite floor covering material of this Example, as shown in Fig. 18, a patterned layer 2 is composed of an over layer 23 composed of a paper with a melamine resin impregnated therein, a pattern layer 24, core layer 25 in which papers with a phenol resin impregnated therein are laminated, and a backer layer 26 composed of a paper with a resin impregnated therein called as melamine backer. As a pattern layer 24, a substrate for imparting a pattern or a color to a refractory composite floor covering material 7, for example, a plywood, a natural plate, or a patterned and colored kraft paper impregnated with a melamine resin are used.

A patterned layer 2 is adhered to the face side surface 71 and the back side surface 72 of a plasterboard 30.

Upon manufacturing a refractory composite floor covering material of this Example, first, a reinforcing layer 4 is formed on the face side surface and the back side surface of a plasterboard 30 as in embodiment 1. Then, a bleached kraft paper for an over layer (basis weight 25 g/m²), a patterned or colored bleached kraft paper for a pattern layer (basis weight 80g/m²), a bleached kraft paper for a backer layer (basis weight 80 g/m²), and a bleached paper for a core layer (basis weight 120 g/m²) are prepared, and a bleached kraft paper for an over layer, a bleached kraft paper for a pattern layer, and a bleached kraft paper for a backer layer are impregnated with a melamine resin at an impregnation rate of 250%, 80% and 80%. A bleached kraft paper for a core layer is impregnated with phenol resin at an impregnation rate of 100%.

Then, the bleached kraft paper for a backer layer, the bleached kraft paper for a core layer, the bleached kraft paper for a pattern layer and the bleached kraft paper for an over layer are laminated in this order on the surface of a reinforcing layer 4, they are heat-pressed at a pressure of 1 to 50 kg/cm² and a temperature of 120 to 180 °C for 5 to 300 seconds to integraly mold and, thereby, a refractory composite floor covering material 7 shown in Fig. 18 was obtained.

Others are the same as those of Example 1. Also in this Example, the same effects as those of Example 1 can be obtained.

### Embodiment 9

The present embodiment is a refractory composite floor covering material composed of a porous inorganic core material and a reinforcing layer, characterized in that an electromagnetic shielding layer is provided on the uppermost surface of the refractory composite floor covering layer. This is explained by Examples 1 and 2.

### (Example 1)

In a refractory composite floor covering layer 7 of this Example, as shown in Fig.19, a reinforcing layer 4 composed of a thermosetting resin and a mineral fiber is adhered to both sides of the face side surface 71 and the back side surface 72 of a plasterboard 30. An electromagnetic shielding layer 201 is provided on the back side surface 72 of a refractory floor composite material 7.

An electromagnetic shielding layer 201 is a composite sheet composed of 80% by weight of an electrically-conductive filler and 20% by weight of a resin and the thickness is 2 mm. As an electrically-conductive filler, a copper powder is used and, as a resin, a phenol resin is used.

A plasterboard 30 is composed of one layer and the thickness thereof is 9.5 mm and the specific gravity thereof is 1.0 g/cm³.

A reinforcing layer 4 is composed of 18% by weight of a thermosetting resin and 82% by weight of a mineral fiber. A thermosetting resin is a phenol resin. As a mineral fiber, a mat-like glass fiber (weight 1500 g/m²) is used. The thickness of a reinforcing layer 4 is 2 mm.

A plasterboard 30 is a board in which a board base paper 8 is applied to the face side surface and the back side surface of a plaster plate 301. As a board base paper 8, a cardboard formed by adding a water-repellent to a wastepaper and a pulp as a main raw material is used. The above reinforcing layer 4 is adhered to the above board base paper 8 with an adhesive composed of a phenol resin.

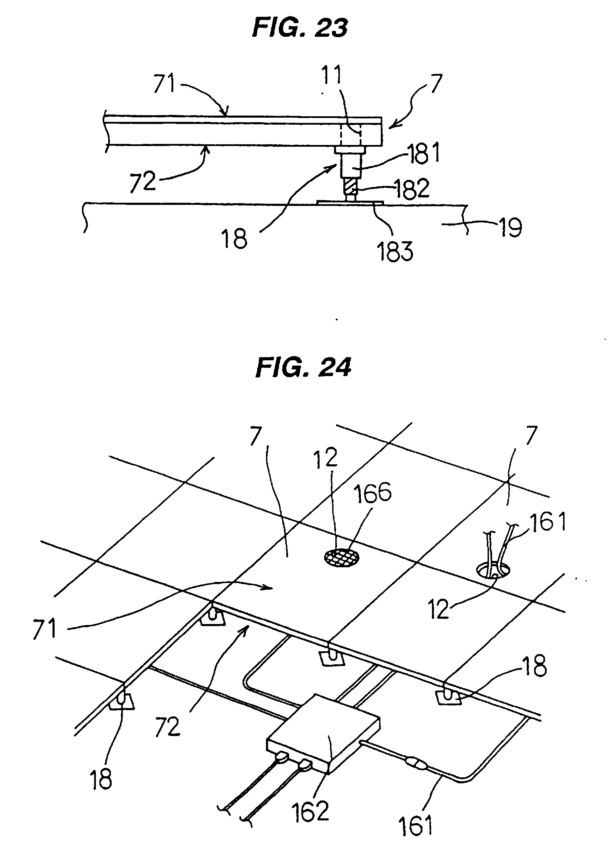

A process for manufacturing a refractory composite floor covering material is explained.
(1) A mat-like glass fiber (1500 g/m²) with an uncured phenol resin attatched thereto (attached amount, term of solid 13%) was pressed at a temperature of 200 °C for 5 minutes to obtain a sheet-like glass fiber having the thickness of 1.5 mm.
(2) This sheet-like glass fiber was impregnated with a phenol resin solution (impregnated amount, term of solid 5%), and the fiber was pressed at a temperature of 80 °C for 20 minutes to obtain a sheet with a phenol resin impregnated having the thickness of 1.5 mm.
(3) A mixture of a plaster of Paris and water was cast on a board base paper 8, a board base paper 8 was further placed thereon, and a plaster was dried and cured. Thereby, a plasterboard 30 in which a board base paper 8 is applied to the face side surface 71 and the back side surface 72 of a plaster plate 301.
(4) A phenol resin solution (adhesive) with a curing agent added thereto was coated on the surface of a plasterboard 30 at a rate of 250 g/m² (term of solid) and the sheet with a phenol resin impregnated therein made in the (2) was overlaid thereon. A phenol resin solution with a curing agent added thereto was coated thereon at a rate of 250 g/m² (term of solid), and a commercially available glass fiber chopped strand mat (weight 450 g/m², thickness 0.5 mm) was overlaid thereon, which was pressed at a temperature of 80 °C for 20 minutes. Thereby, a reinforcing layer 4 was formed on the face side surface 71 and the back side surface 72 of a plasterboard 30.
(5) An electromagnetic shielding layer 201 was adhered to the back side surface 72 of the above plasterboard 30 with an adhesive such as a phenol resin or the like. Thereby, a refractory composite floor covering layer 7 was obtained.
(6) A refractory composite floor covering material 7 was cut with a disc saw for woodwork into a few tens cm² size, a leg was attached to its back side surface 72, a plurality of them were combined, which is used as a floor covering material. When a refractory composite floor covering material 7 is arranged on a floor in a business room, a business apparatus can be provided on the face side surface and a wiring apparatus of a business apparatus and an air-conditioning apparatus can be provided on the back side surface 72 (see Fig. 24). An opening of a refractory composite floor covering material is provided and a wiring apparatus and an air-conditioning apparatus can be taken out through the opening.

Next, the action and the effects of this Example are explained.

In a refractory composite floor covering material of this Example, an electromagnetic wave shielding layer 201 is provided on the surface of a reinforcing layer 4 which covers a plasterboard 30. For that reason, a refractory composite floor covering material 7 of this Example can absorb an electromagnetic wave. In particular, in a business room where many computers are arranged, an electromagnetic wave emitted from computers are effectively absorbed. For that reason, according to a refractory composite floor covering material, an influence of an electromagnetic wave on the human body can be inhibited.

While a plasterboard 30 is low coat and excellent in the refractory properties and the compression strength, the tensile strength is insufficient. Then, in this Example, by adhering a reinforcing layer 4 to both sides of a plasterboard 30, the tensile strength is improved. That is, since the face side surface 71 and the back side surface 72 of a plasterboard 30 are covered with a reinforcing layer 4, even when the tensile force is applied, breakage dose not occur. Since a reinforcing layer 4 is composed of a thermosetting resin and a mineral fiber, the processing properties are excellent.

A thermosetting resin is excellent in the refractory properties and is not softened even at an elevated temperature different from a thermoplastic resin, the function as a reinforcing layer 4 is not lost.

Since a refractory composite floor covering material 7 of this Example, is mainly composed of a reinforcing layer 4 composed of a thermosetting resin and a mineral fiber, it is light, excellent in the processing properties and low cost.

Although an electromagnetic wave shielding layer 201 is provided on the back side surface 72 of a plasterboard 30 in this Example as shown in Fig. 19, it may be provided on the face side surface 71.

Although a reinforcing layer 4 is formed on both sides of a plasterboard 30 in a refractory composite floor covering material 7, it may be provided on either of the face side surface and the back side surface.

Although the thickness of a plasterboard is 9.5 mm in this Example, the thickness is not limited to it but, for example, 12.5 mm and 15.0 mm can be used. Although one layer of plasterboard is used in this Example, a plurality of, two or more layers may be used. A butt end surface which was exposed by cutting a refractory composite floor covering material 7 may be covered with a covering layer for preventing a plaster powder from flying. The face side surface 71 of a refractory composite floor covering material may be covered with a patterned layer.

### (Example 2)

An electromagnetic wave shielding layer 201 is laid between two layers of plasterboards 30 in a refractory composite floor covering material 7 of this Example as shown in Fig. 20. A plasterboard 30 and an electromagnetic wave shielding layer 201 are adhered and fixed with an adhesive or the like.

Others are the same as those of Example 1. Also in this Example, the same effects as those of Example 1 can be obtained.

### Embodiment 10

The present embodiment is a refractory composite floor covering material composed of a porous inorganic core material and a reinforcing layer, characterized in that the reinforcing composite floor covering material is provided with a penetrated hole, a step part and a notch. This is explained by Examples

### 1 to 3. (Example 1)

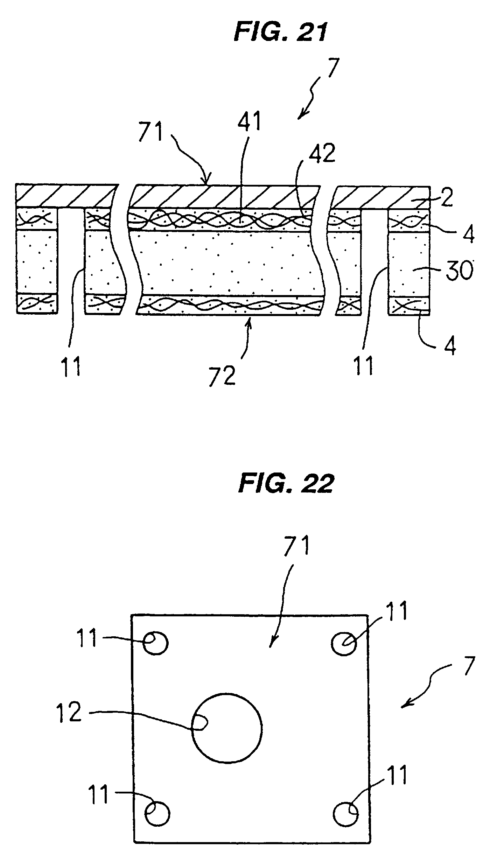

In a refractory composite floor material 7 of this Example, a reinforcing layer 4 composed of a thermosetting resin 41 and a mineral fiber 42 is adhered to both sides of the face side surface 71 and the back side surface 72 of a plasterboard 30 as shown in Fig. 21.

A plasterboard 30 is composed of one layer, the thickness thereof is 12.5 mm and the specific gravity thereof is 1.3.

A reinforcing layer 4 is composed of 420 parts by weight of a thermosetting resin and 600 parts by weight of a mineral fiber.

A thermosetting resin is a phenol resin. As a mineral fiber, a glass fiber chopped strand mat (weight 600 g/m²) is used. The thickness of a reinforcing layer 4 is 0.8 mm.

A patterned layer 2 is provided on the uppermost surface of a refractory composite floor covering material 7. A patterned layer 2 is a carpet.

A refractory composite floor covering material 7 are provided with penetrated holes 11 and 12 as shown in Fig. 21 and Fig. 22. A penetrated hole 11 is a round hole for laying having the diameter of 10 mm as shown in Fig. 23. A supporting leg 18 is fixed to a penetrated hole 11. A supporting leg 18 is composed of a panel nut 181 for inserting into a penetrated hole 11, a volt 182 for adjusting the height which is upwardly and downwardly movably threaded in a panel nut 181 and a supporting stand 183.

A penetrated hole 12 is a round hole having the diameter of 120 mm. This penetrated hole 12 is used, for example, for air-conditioning blow-off and for taking out a wiring as shown in Fig. 24. More particularly, when used for air-conditioning, a penetrated hole 11 is covered with a lid 166 having a vent and an underfloor air-conditioning apparatus is provided thereunder and air-conditioning in a room is performed through a penetrated hole 11. A penetrated hole 12 may be used also as a wiring takeout port for taking out a wiring cord 161 arranged on the back side surface 72 onto the face side surface 71. In Fig.24, a symbol 162 is a relay in a wiring.

A process for manufacturing a refractory composite floor covering material of this Example.
(1) A mixture of a plaster of Paris and water is poured into a mold for forming a plasterboard and a plaster is dried and cured to obtain a plasterboard 30.
(2) A phenol resin solution (adhesive) with a curing agent added thereto was coated on the surface of a plasterboard 30 at a rate of 250 g/m² (term of solid), a commercially available glass fiber chopped strand mat (weight 600 g/m², thickness 0.7 mm) was overlaid thereon, which was pressed at a temperature of 80 °C for 20 minutes. Thereby, a reinforcing layer 4 is formed on the face side surface 71 and the back side surface 72 of a plasterboard 30.
(3) Penetrated holes 11 and 12 are perforated on the above plasterboard 30 by punching process.
(4) A patterned layer 2 composed of a carpet is adhered to the surface of a reinforcing layer 4 of the face side surface 71.
(5) A plasterboard 30, a reinforcing layer 4 and a patterned layer 2 were cut with a disc saw for woodworking to obtain a refractory composite floor covering material 7 having a few tens cm² size.

A supporting leg 18 is attached to the back side surface 72 of the resultant refractory composite floor covering material 7 as shown in Fig. 23 and Fig. 24, a plurality of them are combined, which is used as a floor covering material. When a refractory composite floor covering material 7 is arranged on a floor 19 of a business room, a business apparatus can be provided on the face side surface 71 and a wiring apparatus of a business apparatus and an air-conditioning apparatus can be provided on the back side surface 72. A wiring cord 161 for a wiring apparatus and cooling and warming air blown off from an air-conditioning apparatus can be taken out through a penetrated hole 12 of a refractory composite floor covering material 7.

Then, the action and the effects of the present invention are explained.

Since a refractory composite floor covering material 7 of this Example uses a plasterboard 30, it is low cost and excellent in the refractory properties and the compression properties.

Since the face side surface 71 and the back side surface 72 of a plasterboard 30 are covered with a reinforcing layer 4 having the high strength, even when the tensile force is applied, breakage dose not occur, and the tensile properties are excellent. Since a reinforcing layer 4 is composed of a thermosetting resin and a mineral fiber, the processing properties are excellent.

A thermosetting resin is excellent in the refractory properties and is not softened even at en elevated temperature different from a thermoplastic resin, the function as a reinforcing layer 4 is not lost.

Since a refractory composite floor covering material 7 of this Example is mainly composed of a reinforcing layer 4 composed of a plasterboard 30, a thermosetting resin and a mineral fiber, it is light, excellent in the processing properties and low cost.

Although a reinforcing layer 4 is formed on the face side surface 71 and the back side surface 72 of a plasterboard 30 in a refractory composite floor covering material 7 of this Example, it may be formed on an either side. Although the thickness of a plasterboard is 12.5 mm in this Example, for example, 12.5 mm and 15.0 mm may be used. One layer of a plasterboard is used in this Example, a plurality of, two or more layers may be used.

### (Example 2)

A refractory composite floor covering material 7 of this Example has a step part 13 at a corner of the face side surface 71 as shown in Fig. 25 and Fig. 26. A step part 13 is an arc having the radius of 4 cm, the depth of 2.5 mm. The shape of this step part 13 is the same as that of an upper supporting plate 812 of a supporting leg 18 as shown in Fig. 26. An aric-like notch 14 is provided on an end of the above step part 13 at a corner of a refractory composite floor covering material 7 as shown in Fig. 25 and Fig. 26.

A supporting leg 18 is composed of a panel nut 181 for inserting into a notch 14, a volt 182 for adjusting the height which is threaded upwardly and downwardly movably in a panel nut 181 and a supporting stand 183. A panel nut 181 has an upper supporting plate 185 for holding the face side surface 71 of a refractory composite floor covering material 7, and a lower supporting plate 184 for holding the back side surface 72 of a refractory composite floor covering material 7.

A plurality of refractory composite floor covering materials of which corners are supported by supporting legs 18 can be used as a combined panel floor covering material.

A refractory composite floor covering material of this Example is composed of a plasterboard, a reinforcing layer and a patterned layer as in Example 1 (see Fig. 21).

A refractory composite floor covering material 7 is provided with a step part 13 and a notch 14 for laying. For that reason, the laying is easy as in Example 1. Also in this Example, the same effects as those of Example 1 can be obtained.

### (Example 3)

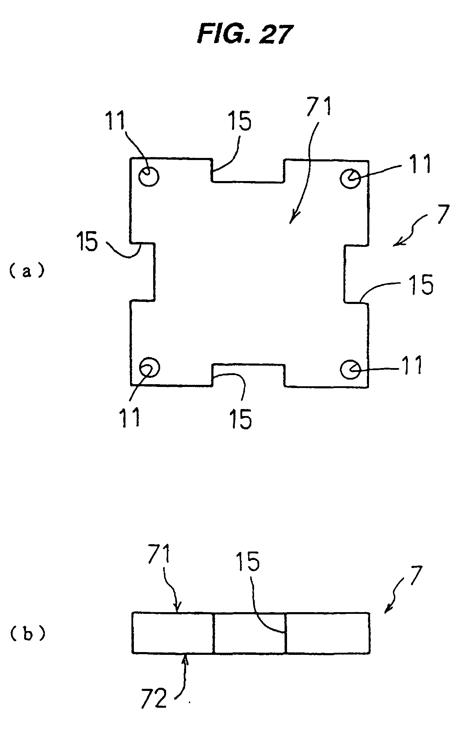

A refractory composite floor covering material of this Example 7 is provided with a notch 15 on its side as shown in Fig. 27.

A notch 15 has the width of 12 cm and the depth of 2 cm. A notch 15 together with a notch 14 of an adjacent refractory composite floor covering material 7 forms a penetrated hole when a refractory composite floor covering materials 7 are combined and the hole is utilized as a port for taking out a wiring.

The back side surface 72 of a refractory composite floor covering material 7 is provided with a penetrated hole 11 for laying for attaching a supporting leg 18 as in Example 1.

A refractory composite floor covering material of this Example is composed of a plasterboard, a reinforcing layer and, a patterned layer as in Example 1 (see Fig. 21).

A refractory composite floor covering material 7 of this Example is provided with a notch 15 for taking out a wiring and a penetrated hole 11 for laying. For that reason, the laying and takeout of a wiring are easy as in Example 1. Also in this Example, the same effects to those of Example 1 can be effected.

### Embodiment 11

This embodiment is characterized in that a covering layer for preventing a plaster powder from flying is provided on a butt end surface of a plasterboard.

That is, a plasterboard 30 of this Example is composed of a plaster plate 301 composed of a plaster and a board base paper 8 applied to at least one of the face side surface and the back side surface thereof as shown in Fig.29 and Fig.30. A covering layer 5 for preventing a plaster powder from flying is provided on a butt end surface 300 of a plasterboard 30.

A plasterboard 301 is one layer. The thickness of a plasterboard 30 is 9.5 mm. The specific gravity of a plasterboard 30 is 1.3.

A covering layer 5 formed on a butt end surface 300 is a water glass and the thickness thereof is 2.5 mm. As shown in Fig. 30, an impregnation layer 50 impregnated with a part of a covering layer 5 may be formed on the surface of a butt end surface 300. As shown in Fig. 31, an impregnation layer 50 impregnated with the entire covering layer may be formed.

A board base paper 8 is applied to the face side surface and the back side surface of a plaster plate 301. As a board base paper 8, a cardboard having the thickness of 0.3 to 0.5 mm obtained by adding a water-repellent to a wastepaper and a pulp is used. As a water-repellent, a paraffin wax is used.

A plasterboard of this Example can be used for a wall material, for example, by adhering a patterned plate to the face side surface which becomes a patterned surface. As a patterned material, there are, for example, a wood-finish plate, a natural wood, a patterned plywood, a natural stone, an artificial stone, a melamine resin and the like.

Upon manufacturing a plasterboard of this Example, first, a mixture of a plaster of Paris and water is cast on a board base paper, a board base paper is further placed therein, and a plaster is dried and cured to obtain a plasterboard. Then, a side surface of this plasterboard is cut with a normal disc saw for woodworking into a 50cm X 50cm. Then, a water glass is coated on a butt end surface of a plasterboard which was exposed by cutting, and dried at a temperature of a normal temperature to 100 °C to form a covering layer. Thus, a plasterboard of this Example is obtained.

The action and the effects of this Example are explained.

In a plasterboard 30 of this Example, a covering layer 5 for preventing a plaster powder from flying is provided on a butt end surface 300. A board base paper 8 is applied to the face side surface and the back side surface of a plaster plate 301 composed of a plaster. For that reason, a butt end surface 300 is not chipped upon laying and there arises no problem that a plaster powder is flied from a butt end surface and stains the surroundings. When a hand is contacted with a plasterboard 30, the hand is not stained with a plaster powder. Therefore, a plasterboard 30 of this Example is excellent in the handling properties. Further, since a plasterboard 30 of this Example is mainly composed of a plaster, it is light, excellent in the processing properties and low cost.

Although the thickness of a plasterboard is 9.5 mm, the thickness is not limited thereto but, for example, 12.5 mm and 15.0 mm may be used. In this Example, although a plasterboard is composed of one layer, a plurality of, two or more layers may be used.

### Embodiment 12

This embodiment is a refractory composite floor covering material composed of a plasterboard and a reinforcing layer composed of a thermosetting resin and a mineral finer, characterized in that a covering layer for preventing a plaster powder from flying on a butt end surface of a plasterboard.

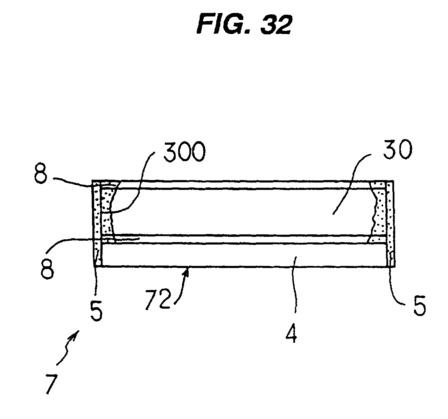

A reinforcing layer 4 composed of a thermosetting resin and a mineral fiber is adhered to the back side surface 72 of a plasterboard 30 as shown in Fig. 32. A covering layer 5 for preventing a plaster powder from flying is formed on a butt end surface 300 of a plasterboard 30.

A covering layer 5 formed on a butt end surface 300 is a layer impregnated with a water glass and the thickness thereof is 2.5 mm. A covering layer 5 is formed by impregnating the surface of a butt end surface 300 with a part or a whole of a covering layer. A covering layer 5 covers the whole surface of a butt end surface 300 of a plasterboard 30.

A plasterboard 30 is composed of one layer and the thickness thereof is 12.5 mm. The specific gravity is 1.3.

A board base paper 8 is applied on the face side surface and the back side surface of a plasterboard 30. As a board base paper 8, a cardboard having the thickness of 0.3 to 0.5 mm obtained by adding a water-repellent or the like to a wastepaper, a pulp and the like as a raw material is used.

A reinforcing layer 4 is composed of 80 parts by weight of a thermosetting resin and 100 parts by weight of a mineral fiber.

A thermosetting resin is a phenol resin. As a mineral fiber, a glass fiber chopped strand mat (weight 900g/m²) is used. The thickness of a reinforcing layer 4 is 1.2mm.

The above reinforcing layer 4 is adhered to a plasterboard 30 via an adhesive composed of a phenol resin.

A process for manufacturing a refractory composite floor covering material is explained.
(1) A plasterboard 30 (specific gravity 1.3, thickness 12.5 mm) in which a board base paper 8 is applied to both sides was prepared.
(2) A phenol resin solution (adhesive) with a curing agent added thereto was coated on the surface of a plasterboard 30 at a rate of 720 g/m², and a commercially available glass chopped strand mat (weight 900 g/m², thickness 1.2 mm) was overlaid thereon, which was pressed at a temperature of 80 °C for 20 minutes. Thereby, a plasterboard 30 with a reinforcing layer 4 covered was obtained.
(3) The above plasterboard 30 was cut with a normal band saw for woodworking into a few tens cm2 size. Then, a water glass solution was coated on a butt end surface 300 which was exposed by cutting, which was dried at 80 °C to form a covering layer 5.

From the above, a refractory composite floor covering material 7 of this Example was obtained.

The resultant refractory composite floor covering material is used as a refractory composite floor covering material for a FA floor, for example, by attaching a leg on the back side surface and combining a plurality of them.

Then, the action and the effects of this Example are explained.

In this Example, a covering layer 5 for preventing a plaster powder from flying is formed on a butt end surface 300 of a plasterboard 30. For that reason, there arises no problem that a plaster powder is flied from a butt end surface 300 upon use and stains the surroundings. The handling properties of a refractory composite floor covering material 7 are improved.

While a plasterboard 30 is low coat and excellent in the compression strength, the tensile strength is insufficient.

Then, in this Example, the tensile strength is improved by adhering a reinforcing layer 4 to both sides of a plasterboard 30. That is, a reinforcing layer 4 is composed of a thermosetting resin and a mineral fiber and is excellent in the processing properties. Since the high strength reinforcing layer 4 is formed on both sides of a plasterboard 30, even when the tensile force is applied, breakage dose not occur.

A thermosetting resin is excellent in the refractory properties and is not softened even at an elevated temperature different from a thermoplastic resin, the function as a reinforcing layer 4 is not lost.

Since a refractory composite floor covering material 7 of this Example is composed of a reinforcing layer 4 and a plasterboard 30 composed of a thermosetting resin and a mineral fiber, as well as a covering layer 5, it is light, excellent in the processing properties and low cost.

Although a reinforcing layer 4 is formed on the back side surface of a plasterboard 30 in a refractory composite floor covering material of this Example as shown in Fig. 32, it may be also formed on the face side surface. It may be formed on both sides. Also these cases, when the tensile force is applied, breakage of a refractory composite floor covering material can be prevented.

Although the thickness of a plasterboard is 9.5 mm in a refractory composite floor covering material of this Example, it is not limited thereto and, for example, 12.5 mm and 15.0 mm can be used. Although an one layered plasterboard is used, a plurality of, two or more layers can be used.

### Embodiment 13

The present embodiment relates to a resin composition for imparting the nail endurance force composed of a thermosetting resin and an elastic polymer, a molded sheet in which a porous substrate or a fibrous substrate is impregnated with the resin composition cured, and a molded plate in which a molded sheet is laminated on at least one side of a core material. These are explained based on Examples 1 to 3 by comparing with Comparative Examples 1 to 3.

### (Example 1)

The present Example is a resin composition for imparting the nail endurance force composed of a thermosetting resin and an elastic polymer. A process for manufacturing the same and the nail endurance force performance are explained using Tables 6 and 7.

First, a commercially available phenol resin solution and an emulsion solution of a latex which is an elastic polymer (NBR) latex solid weight 41% in Test Examples 1 to 4, 8 and 9, SBR latex solid weight 49% in Test Example 5, acrylate latex solid 55% in Test example 6, and urethane latex solid 53% in Test Example 7) are mixed at a rate shown in Table 6 at a normal temperature to obtain a liquid resin composition 341 for imparting the nail endurance force.

As a NBR latex, Nipol 1562 manufactured by Nihonzeon K.K. was used and, as a SBR latex, Nipol LX-436 manufactured by Nihonzeon K.K. was used.

A fibrous substrate 342 having the bulk specific gravity of 0.5 g/cm³ and the thickness of 3 mm composed of a glass fiber was impregnated with this resin composition, which was dried at 70 to 100 °C, held between stainless plates 343, and heated at a temperature of 150 to 160 °C to cure a phenol resin to obtain a molded sheet 34 of the present invention.

Regarding a molded sheet 34 thus obtained of the present invention, the nail endurance force performance was measured according to a nail pulling out test prescribed in Nihonnorin Specification for a structural panel and the results are shown in Table 6.

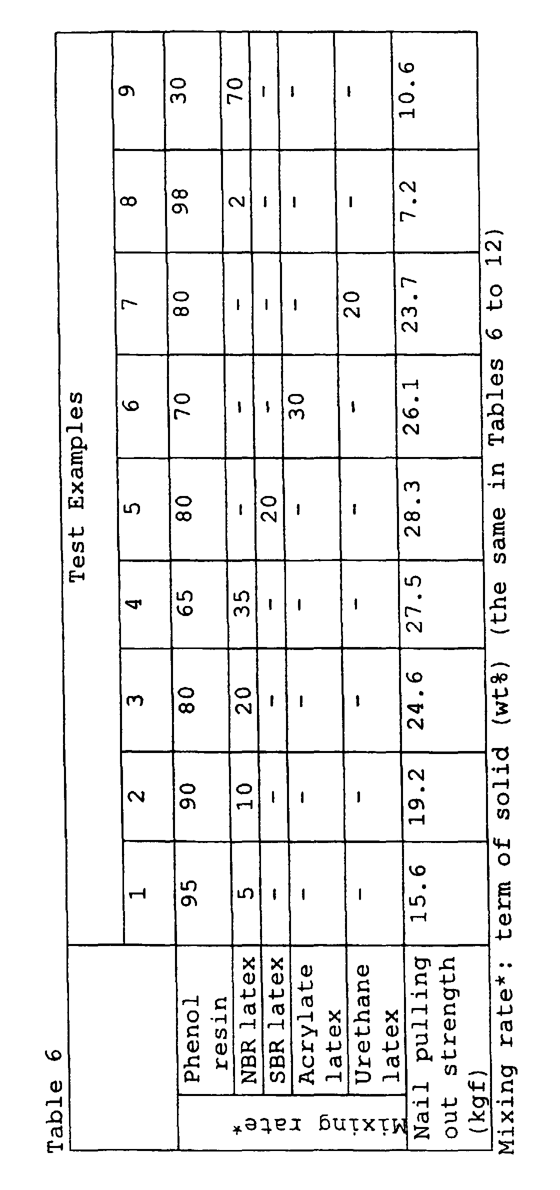

### (Comparative Example 1)

According to the same manner as that of Example, molded sheet using a resin composition of Test Examples 1 and 2 of Comparative Example were made, the nail endurance force performance was measured according to the same manner as that of Example and the results are shown in Table 7.

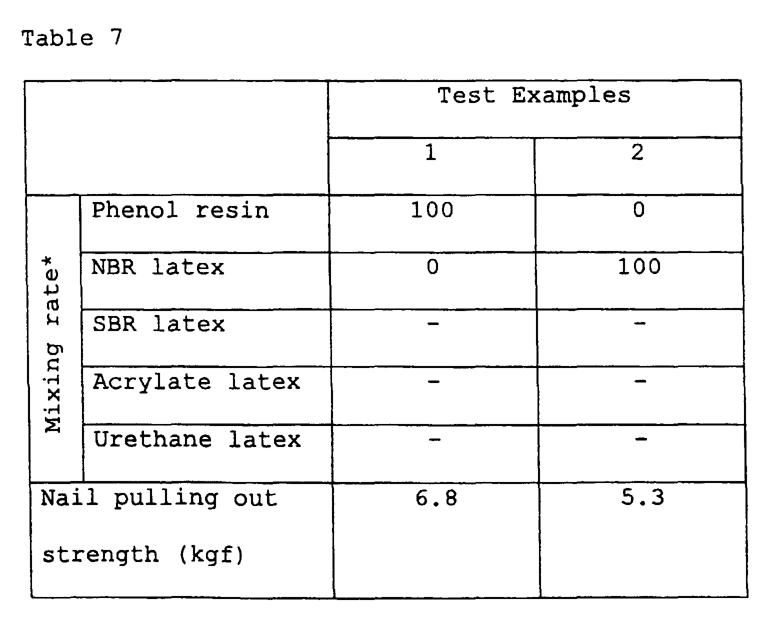

As seen from Table 7, a thermosetting resin alone can not exert the effects of the present invention and an elastic polymer alone can not exert the effects of the present invention.

Further, it can be seen that the nail pulling out strength is raised in a range of a thermosetting resin/elastic polymer = 95/5 to 65/35.

### (Example 2)

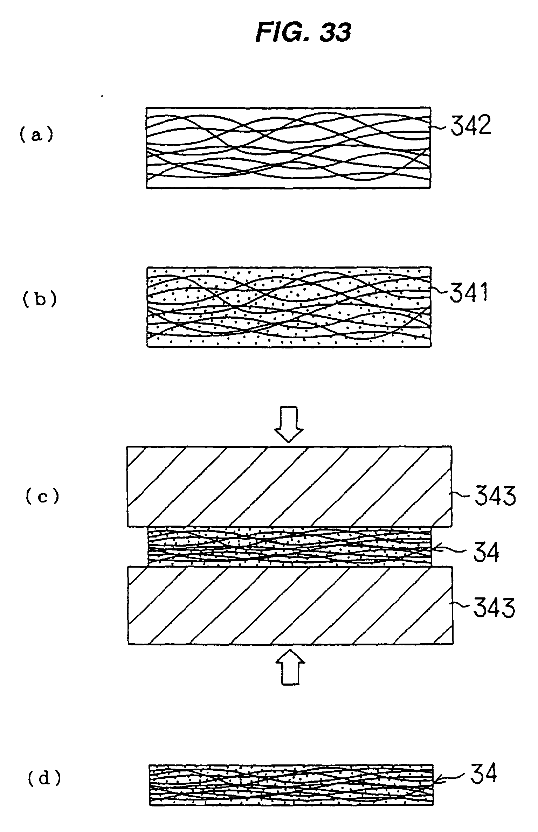

As shown in Fig. 33, this Example is a molded sheet 34 in which a porous substrate or a fibrous substrate 342 is impregnated with resin composition 341 cured for imparting the nail endurance force composed of a thermosetting resin and an elastic polymer. A process for manufacturing the same and the nail endurance force performance are explained using Table 8 and 9.

A commercially available phenol resin solution and an emulsion solution of a latex which is an elastic polymer (NBR latex solid weight 41% in Test Examples 1-4, 8-11, SBR latex solid weight 49% in Test Example 5, acrylate latex solid weight 55% in Test Example 6, urethane latex solid 53% in Test Example 7) were mixed at a rate shown in Table 4 at a normal temperature to obtain a liquid resin composition 341 for imparting the nail endurance force.

As a NBR latex, Nipol 1562 manufactured by Nihonzeon K.K. was used and, as a SBR latex, Nipol LX-436 manufactured by Nihonzeon K.K. was used.

Various substrates and fibrous substrate materials 342 shown in Table 8 were impregnated with this resin composition, which was dried at 70 to 100 °C, and heated at a temperature of 150 to 160 °C using a hot press to cure a phenol resin, to obtain a molded sheet 34 of this Example.

By the way, as a glass fiber, a short fiber mat obtained by converting a short fiber of a glass fiber into a sheet, a chopped strand mat which is a non-woven cloth of a long fiber of a glass fiber and a roving cloth obtained by weaving a long fiber of a glass fiber were used.

As a ceramic fiber, a silica-alumina fiber was used.

Regarding a molded sheet thus obtained of this Example, the nail endurance force performance was measured according to a nail pulling out test prescribed in Nihonnorin Specification for a structural panel and the results are shown in Tables 8 and 9.

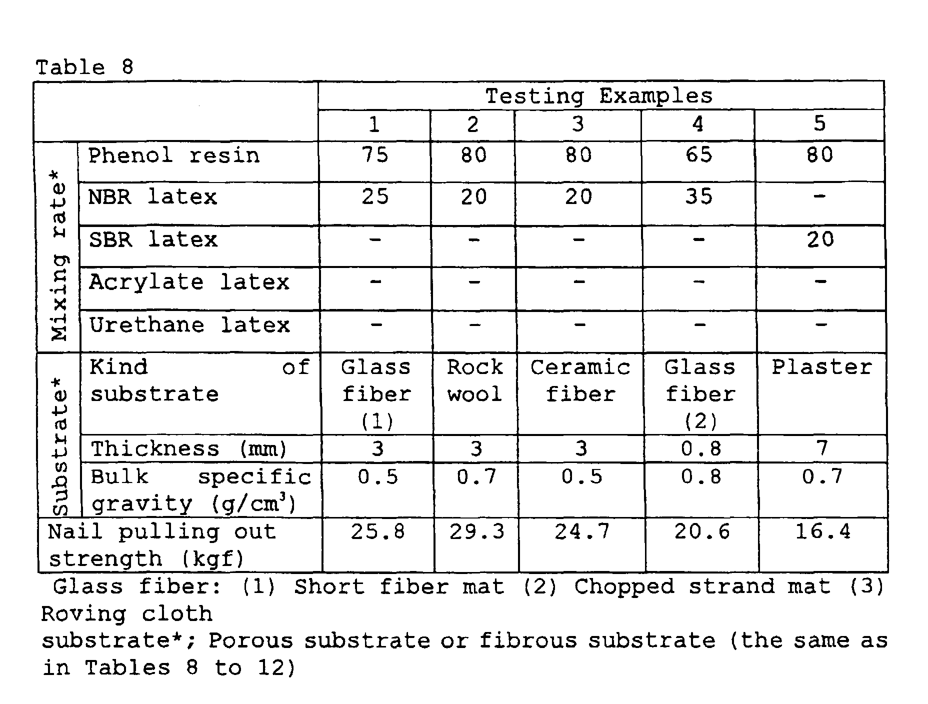

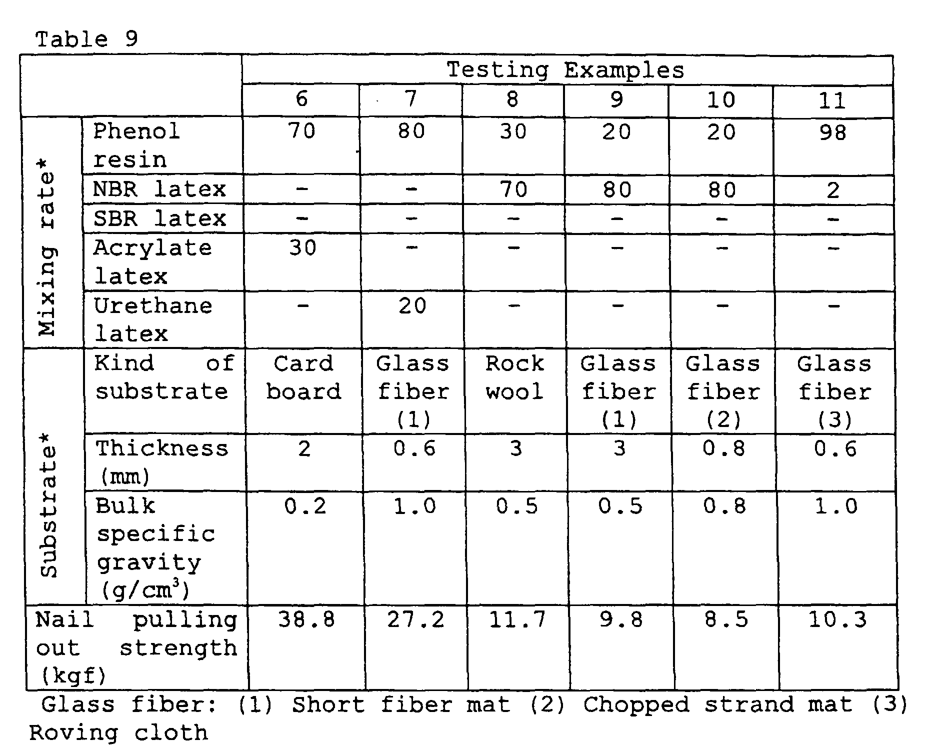

### (Comparative example 2)

According to the same manner as that of Example except that a resin composition was not used. a molded sheet was made, the nail endurance force performance was measured according to the same manner as that of Example and the results are shown in Table 10.

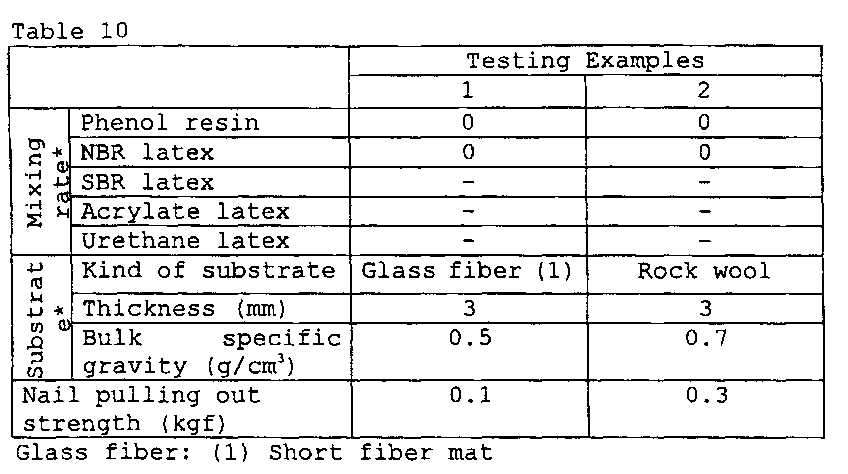

As seen from Tables 8 to 10, a molded sheet of the present invention is more excellent in the nail endurance force than that of prior fibrous material. It can also be seen that the nail pulling out strength is raised in a range of a thermosetting resin/an elastic polymer = 80/20 to 65/35.

### (Example 3) Molded plate

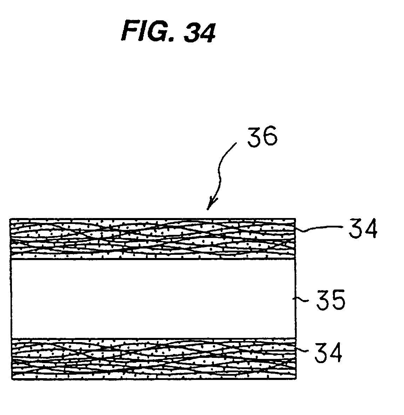

As shown in Fig. 34, this Example is a molded plate 36 which is a laminate of a molded sheet 34 in which a porous substrate or a fibrous substrate is impregnated with a resin composition cured for imparting the nail endurance force, and a core material 35. A process for manufacturing the same and the nail endurance force performance are explained using Tables 11 and 12.

### (i) Test Example 1 and 2

A commercially available phenol resin solution and an emulsion solution of a latex which is an elastic polymer (NBR latex solid weight 41% in Test Examples 1 and 2) were mixed at a rate shown in Table 11-1,2 at a normal temperature to obtain a liquid resin composition 341 for imparting the nail endurance force.

As a NBR latex, Nipol 1562 manufactured by Nihonzeon K.K. was used.

Various porous substrates, fibrous substrates 342 shown in Table 11-1,2 were impregnated with this resin composition, which was dried at 70 to 100 °C, and heated at a temperature of 150 to 160 °C using a hot press to cure a phenol resin, to obtain a molded sheet 34 of this Example.

A molded sheet 34 thus obtained was applied to both sides of a commercially available mineral core material 35 shown in Table 11-1,2 with a phenol resin, which was heated at a temperature of 80 to 100 °C for 15 minutes using a hot press to obtain a molded plate 36 of this Example.

### (ii) Test Examples 3 and 4

A commercially available phenol resin solution and an emulsion solution of a latex which is an elastic polymer (NBR latex solid weight 41%, SBR latex solid weight 49% in Test Examples 3 and 4) were mixed at a rate shown in Table 11-1,2 at a normal temperature to obtain a liquid resin composition 341 for imparting the nail endurance force.

As a NBR latex, Nipol 1562 manufactured by Nihonzeon K.K. was used and, as a SBR latex, Nipol LX-436 manufactured by Nihonzeon K.K. was used.

Various porous substrates, fibrous substrates 342 shown in Table 11-1,2 were impregnated with this resin composition, which was dried at 70 to 100 °C to obtain a molded sheet 34.

A molded sheet thus obtained was applied to both sides of a commercially available mineral core material 35 shown in Table 10 with a phenol resin, which was heated at a temperature of 80 to 100 °C for 15 minutes using a hot press to obtain a molded plate 36 of the present invention.

### iii)Test Examples 5 and 6

A commercially available phenol resin solution and an emulsion solution of a latex which is an elastic polymer (SBR) latex solid weight 49% in Test Examples 5 and 6) were mixed at a rate shown in Table 11-1,2 at a normal temperature to obtain a liquid resin composition 341 for imparting the nail endurance force.

As a SBR latex, Nipol LX-436 manufactured by Nihonzeon K.K. was used.

Various porous substrates, fibrous substrates 342 shown in Table 8 were impregnated with this resin composition.

This undried sheet was applied to both sides of a commercially available core material 35 shown in Table 10, which was heated at a temperature of 150 to 160 °C for 15 to 30 minutes using a hot press to obtain a molded plate of this Example.

### iv) Test Examples 7 and 8

A commercially available phenol resin solution and an emulsion solution of a latex which is an elastic polymer (NBR latex solid weight 41% in Test Examples 1 and 2) were mixed at a rate shown in Table 11-1,2 at a normal temperature to obtain a liquid resin composition 341 for imparting the nail endurance force.

As a NBR latex, Nipol 1562 manufactured by Nihonzeon K.K. was used.

Various porous substrates, fibrous substrates 342 shown in Table 11-1,2 were impregnated with this resin composition 341, which was dried at 70 to 100 °C and heated at a temperature of 150 to 160 °C using a hot press to cure a phenol resin, to obtain a molded plate of the present invention.

A molded sheet thus obtained was applied to one side of a commercially available mineral core material 35 shown in Table 10, which was heated at a temperature of 80 to 100 °C for 15 minutes using a hot press to obtain molded plate 36 of this Example.

Regarding molded plates obtained from the above of the present invention, the nail endurance force performance was measured according to a nail pulling out test prescribed in Nihonnorin Specification for a structural panel and the results are shown Table 11-1,2.

The bending strength at the dry state and the bending strength in the state where water is absorbed in water for 24 hours were measured according to JIS A6901 and the results are shown in Table 11-1,2.

### (Comparative Example 3)

According to the same manner as that of Example except that a resin composition was not used, a molded sheet was made, the nail endurance force performance was measured according to the same manner as that of Example and the results are shown in Table 12.

The bending strength at the dry state and the bending strength in the state where water is absorbed in water for 24 hours were measured and the results are shown in Table 12.

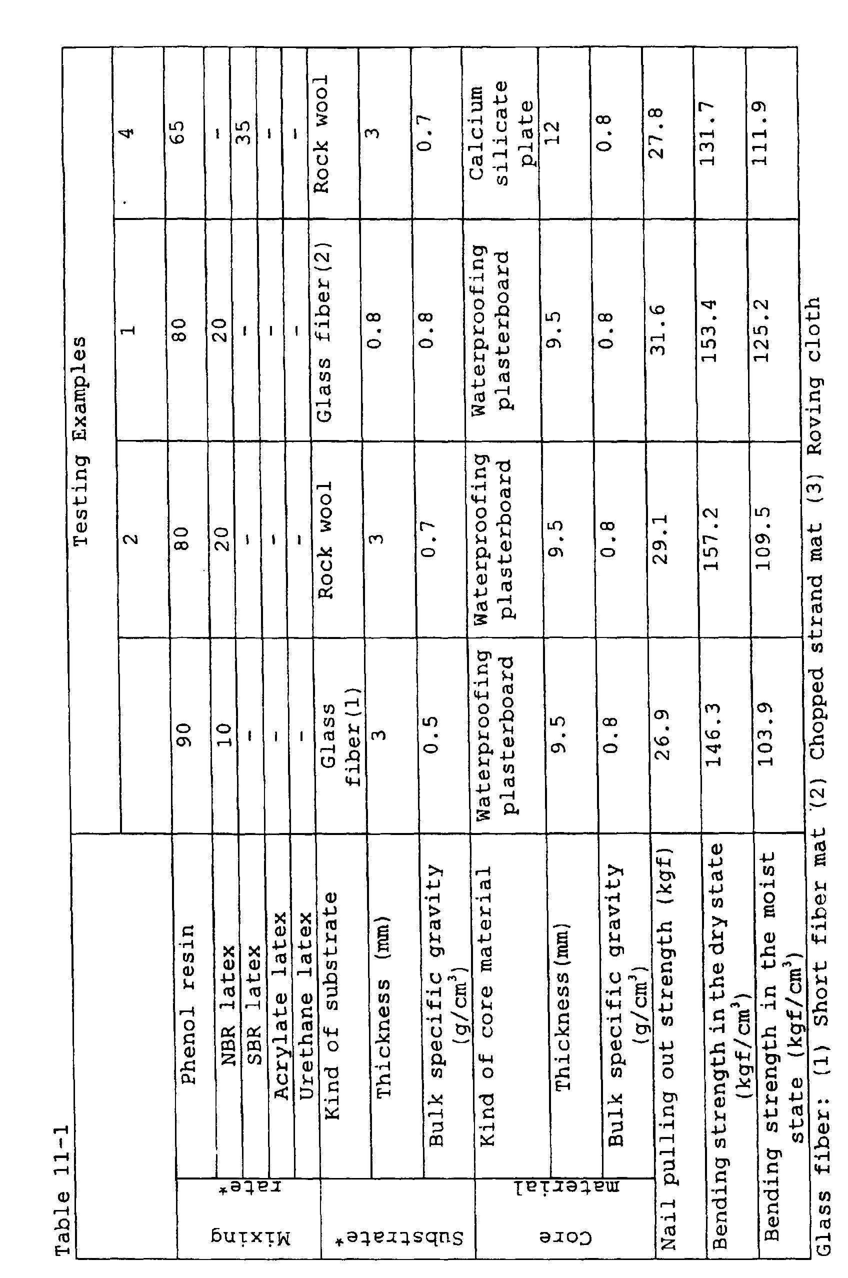

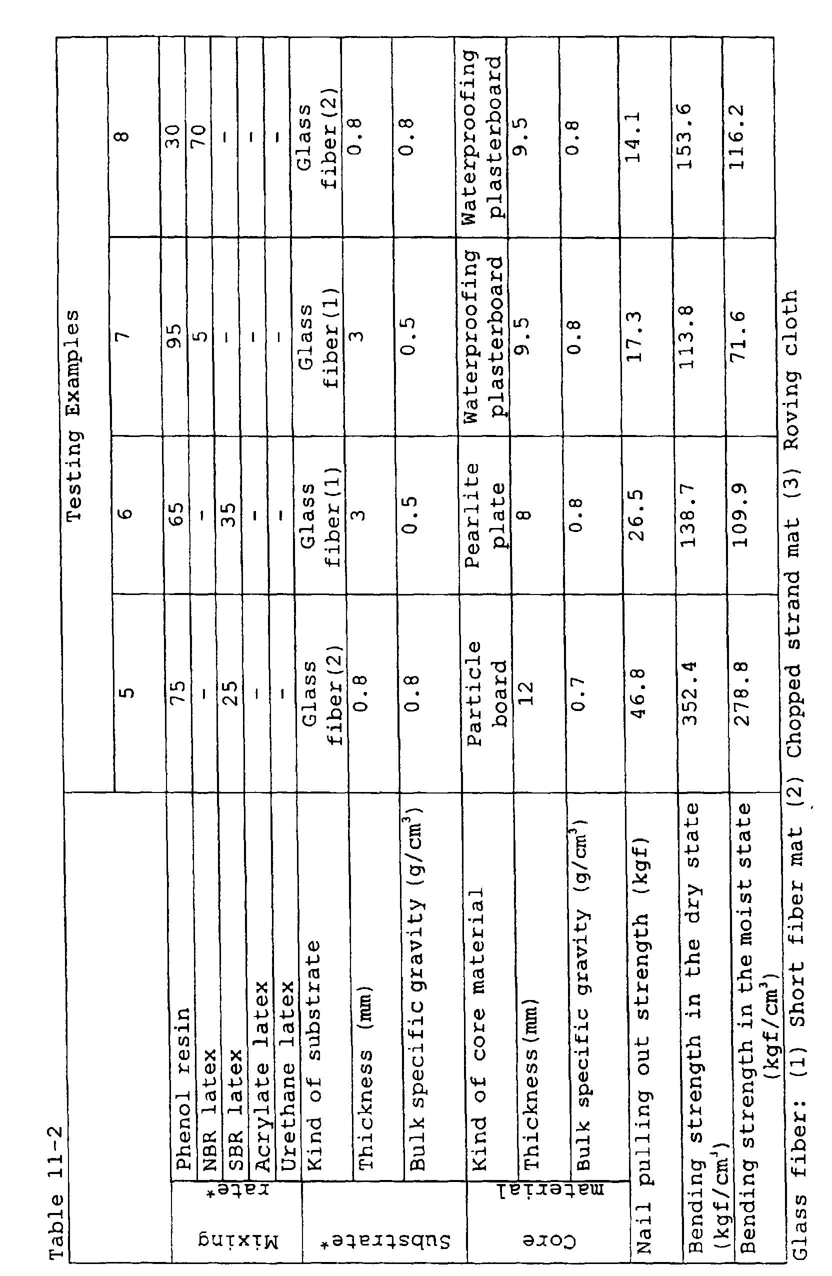

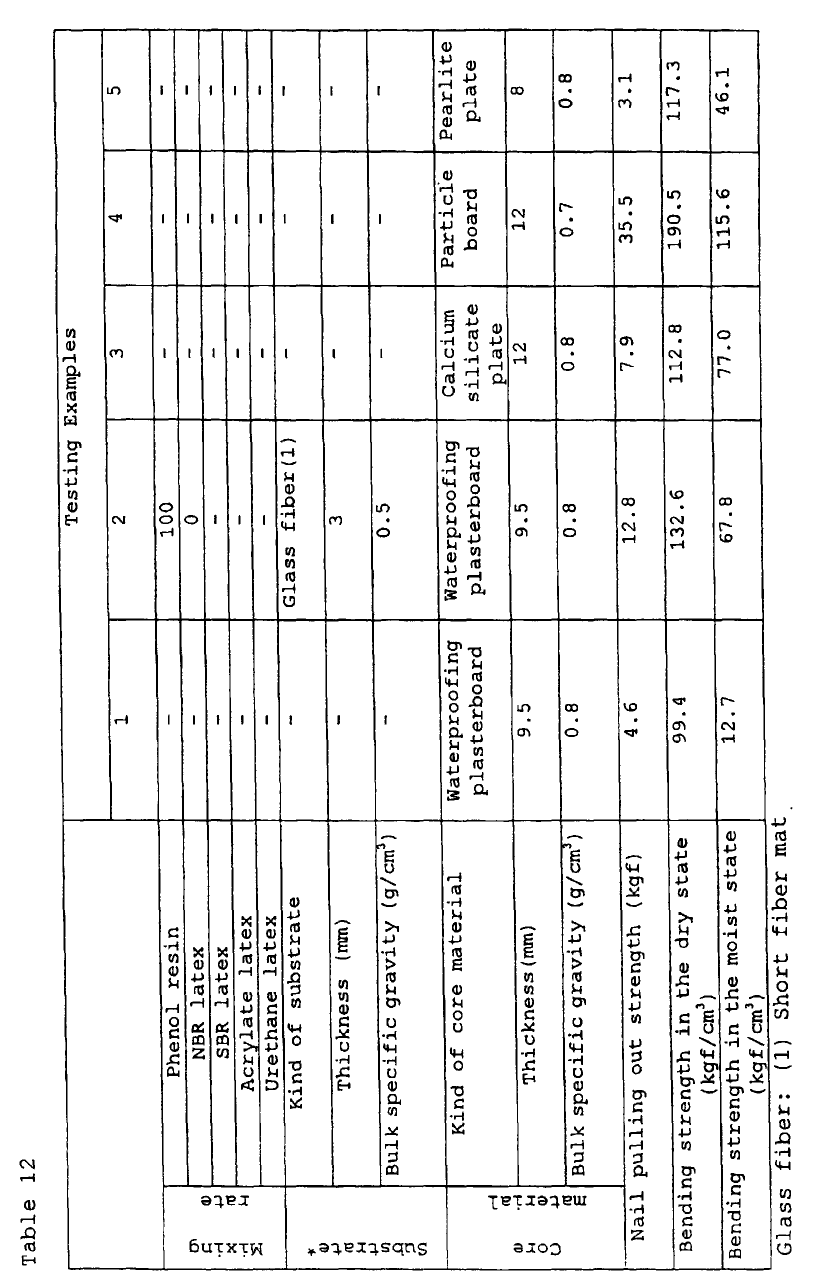

As shown in Table 11-1,2 and Table 12, a molded sheet of the present invention is excellent in the mechanical strength, the water resistance and the nail endurance force as compared with the previous porous substrate and fibrous substrate. The nail pulling out strength is excellent as compared with the case where impregnated with only a thermosetting resin.

### Embodiment 14

This embodiment is a composite constructional material using a core material having the predetermined specific gravity composed of a thermosetting resin and a mineral fiber. This is explained based on Example 5 by comparing with Comparative Example 1.

### (Example 1)

(1) A mat-like glass fiber (weight 1500 g/m²) (manufactured by Central Glass Wool, trade name: Uncured Mat) with an uncured phenol resin attached thereto (attached amount, term of solid 10%) was pressed at a temperature of 200 °C for 5 minutes to obtain a sheet-like glass fiber having the thickness of 3 mm.
(2) The sheet-like glass fiber was impregnated with a phenol resin solution with a curing agent added thereto (impregnation amount, term of solid 8%), which was laminated and pressed at a temperature of 80 °C for 20 minutes to obtain a core material having the thickness of 3 mm and the specific gravity of 0.54. An amount of a mineral fiber of a core material was 83% by weight.
(3) A paper with a melamine resin impregnated was laminated on the surface of this core material, which was pressed at a temperature of 170 °C for 10 minutes to form a patterned layer, to obtain a composite constructional material composed of a core material and a patterned layer.

### (Example 2)

(1) A commercially available chopped strand mat (weight 900 g/m2) was impregnated with a phenol resin solution containing a curing agent and 41% by weight of a NBR latex (Nipol 1562 manufactured by Nihonzeon K.K.) (impregnation amount, term of solid 6%), which was pressed at a temperature of 80 °C for 20 minutes to obtain a core material impregnated with a phenol resin having the thickness of 2 mm and the specific gravity of 0.45. An amount of a mineral fiber of a core material was 90% by weight.
(2) A natural wood single plate (kind of wood; zelkova tree, thickness 0.3 mm) was laminated on one side of a core material using a vinyl acetate resin to form a patterned layer to obtain a composite constructional material composed of a core material and a patterned layer.

### (Example 3)

(1) A mat-like glass fiber (weight 2000 g/m²) (manufactured by Central Glass Wool, trade name: Uncured Mat) with an uncured phenol resin attached thereto (attached amount, term of solid 13%) was pressed at a temperature of 200 °C of 5 minutes to obtain a sheet-like glass fiber having the thickness of 5 mm.
(2) A sheet-glass fiber made in (1) was impregnated with a solution obtained by adding a 0.5% surfactant to a solution of a commercially available aluminum hydroxide powder (particle size 3 µm) dispersed in water (solid concentration 67% by weight) (impregnation amount, term of solid 80%), which was dried to make a sheet impregnated with aluminum hydroxide.
(3) A sheet made in (2) was impregnated with a phenol resin solution with a curing agent added (impregnation amount, term of solid 5% by weight), which was pressed at a temperature of 80 °C for 20 minutes to obtain a core material (specific gravity 0.8). An amount of a mineral fiber of a core material was 46% by weight.
(4) A silicone resin paint was coated on one side of a core material at a rate of 100 g/m² to form a patterned layer to obtain a composite constructional material composed of a core material and a patterned layer.

### (Example 4)

(1) A mat-like glass fiber (weight 1000g/m²) (manufactured by Central Glass Wool, trade name: Uncured Mat) with an uncured phenol resin attached thereto (attached amount, term of solid 10%) was pressed at a temperature of 200 °C for 5 minutes to obtain a sheet-like glass fiber having the thickness of 4 mm.
(2) This sheet-like glass fiber was impregnated with a phenol resin solution with a curing agent added thereto (impregnation amount, term of solid 10%), which was laminated at a temperature of 80 °C for 20 minutes to obtain a core material composed of a material impregnated with a phenol having the thickness of 4 mm and the specific gravity of 0.3. An mount of a mineral fiber of a core material was 82% by weight.
(3) A commercially available glass chopped fiber strand mat (weight 900 g/m²) was impregnated with a phenol resin solution (amount of impregnation, term of solid 15%) containing a curing agent and 41% by weight of a NBR latex (Nipol 1562 manufactured by Nihonzeon K.K.), which was laminated on a core material, and pressed at a temperature of 80 °C for 20 minutes to form a reinforcing layer composed of a material impregnated with a phenol resin having the thickness of 1 mm and the specific gravity of 1.0.
(4) On this surface, a polyester resin paint was coated at a rate of 180 g/m² to form a patterned layer, to obtain a composite constructional material composed of a core material and a patterned layer.

### (Example 5)

(1) A mat-like glass fiber (weight 1000 g/m² (manufactured by Central Glass Wool, trade name: Uncured Mat) with uncured phenol resin attached thereto (attached amount, term of solid 13%) was pressed at a temperature of 200 °C for 5 minutes to obtain a sheet-like glass fiber having the thickness of 3 mm and the specific gravity of 0.3.
(2) A sheet-like glass fiber made in (1) was impregnated with a solution obtained by adding a 0.5% surfactant to a solution of a commercially available aluminum hydroxide powder (particle size 3 µm) dispersed in water (solid concentration 67% by weight) (impregnation amount, term of solid 75%), which was dried to make a sheet.
(3) A sheet made in (2) was impregnated with a phenol resin solution with a curing agent added thereto (impregnation amount, term of solid 8% by weight), which was pressed at a temperature of 80 °C for 20 minutes to form a core material composed of aluminum impregnated with a resin (specific gravity 0.7).
(4) A commercially available glass fiber chopped strand mat (weight 900 g/m²) was impregnated with a phenol resin solution containing a curing agent (impregnation amount, term of solid 15%), which was pressed at a temperature of 80 °C for 20 minutes to obtain a reinforcing layer composed of a material containing a phenol resin having the thickness of 1 mm and the specific gravity of 0.9. An amount of a mineral fiber of a reinforcing layer was 80% by weight. This reinforcing layer was formed into a core material using an adhesive.
(5) A paper impregnated with a diallylphthalate resin was laminated on one side of this press substrate, which was pressed at a temperature of 160 °C to obtain a composite constructional material composed of a core material and a reinforcing layer.

### (Comparative Example 1)

A composite constructional material was manufactured according to Example of JU-B 2-17867. That is, the material is a core material having the specific gravity of 1.8 composed of 80% by weight of aluminum hydroxide, 2 % by weight of a glass fiber chop and 5% by weight of a phenol resin binding agent on which a layer with a melamine resin impregnated is formed.

Regarding composite constructional material of Examples 1 to 5 and Comparative Example 1 thus made, a bending strength test, an impact test, fireproofing test and a processing test were performed and the properties were compared.

### (i) Bending strength test

The bending strength test was performed according to JIS A6901.

### (ii) Impact test

An impact loading test was performed in which a steel ball having the weight of 1 kg was fallen from a height of 1 mm.

### (iii) Fireproofing test

A fireproofing test was performed according to a surface heating test prescribed in JIS A1321.

### (iv) Processing properties

Whether cut with a cutter knife or not was confirmed. The measurement results are shown in Table 13.

**Table 13**

| | Density | | Bending strength (kg/cm²) | Anti-impact strength | Fireproofing properties | | Processing properties |
|---|---|---|---|---|---|---|---|
| | Core material | Reinforcing layer | | | a | b | |
| Example 1 | 0.54 | - | 273 | No breakage | 38 | 41 | Better |
| Example 2 | 0.45 | - | 286 | No breakage | 29 | 39 | Better |
| Example 3 | 0.8 | - | 257 | No breakage | 17 | 48 | Better |
| Example 4 | 0.3 | 1 | 248 | No breakage | 34 | 45 | Better |
| Example 5 | 0.7 | 0.9 | 291 | No breakage | 26 | 47 | Better |
| Comparative Example 1 | 1.8 | - | 315 | Breakage | 21 | 46 | Worse |

| | | | | | | | |
|---|---|---|---|---|---|---|---|
| a: Temperature-time area (tdθ) | | | | | | | |
| b: Smoking coefficient (CA) | | | | | | | |

From the same Table, it can be seen that composite constructional material of Examples 1 to 5 have the low specific gravity, light and have the excellent strength and the refractory properties as compared with Comparative Example.

## Claims

1. A refractory composite constructional material, which comprises a reinforcing layer composed of a thermosetting resin and a mineral fiber provided on at least one side of a porous inorganic core material.

2. The refractory composite constructional material according to claim 1, wherein the porous inorganic core material is any one of a plasterboard, a calcium silicate plate, a slag plaster plate, a cement plate, a pearlite plate, an asbestos cement plate, a light foamed concrete plate, a particle board, an imtermediate quality fiber plate, OSB (Orient Strand Board) and a plywood.

3. The refractory composite constructional material according to claim 1, wherein the thermosetting resin is at least one selected from an epoxy resin, a phenol resin, a melamine resin, a polyimide resin, and an urea resin.

4. The refractory composite constructional material according to claim 1, wherein the reinforcing layer comprises a mineral fiber composing a glass fiber sheet impregnated with a thermosetting resin cured.

5. The refractory composite constructional material according to claim 1, wherein the refractory composite constructional material is a floor covering material.

6. A process for manufacturing a refractory composite constructional material in which a reinforcing layer composed of a thermosetting resin and a mineral fiber is provided on at least one of the face side surface and the back side surface of a porous inorganic core material, which comprises:
a step of impregnating a mat composed of mineral fiber with a thermosetting resin and a curing agent in advance and drying to make a mat with a resin impregnated, and
a step of laminating the mat with a resin impregnated on at least one of the face side surface and the back side surface of a porous inorganic core material, which is pressed under heating.

7. The process for manufacturing a refractory composite constructional material according to claim 6, wherein the mineral fiber is one or more selected from a glass fiber, a rock wool and a ceramic fiber.

8. The process for manufacturing a refractory composite constructional material according to claim 6, wherein the thermosetting resin is one or more selected from the group of a phenol resin, a melamine resin, an epoxy resin, a polyimide resin and an urea resin.

9. The process for manufacturing a refractory composite constructional material according to claim 6, wherein the content of the thermosetting resin in the reinforcing layer is 20 to 200 parts by weight relative to 100 parts by weight of the mineral fiber.

10. The process for manufacturing a refractory composite constructional material according to claim 6, wherein the porous inorganic core material is a plasterboard.

11. The process for manufacturing a refractory composite constructional material according to claim 6, which comprises a step of attaching and drying an uncured thermosetting resin solution on the reinforcing layer forming surface of the porous inorganic core material in advance between the step of making the mat with a resin impregnated and the step of laminating the mat with a resin impregnated on the porous inorganic core material.

12. The refractory composite constructional material according to claim 1, wherein the porous inorganic core material comprises a plurality of plasterboards laminated and adhered.

13. The refractory composite constructional material according to claim 12, wherein the thickness of the porous inorganic core material is 9.5 to 30.0 mm.

14. The refractory composite constructional material according to claim 12, wherein the specific gravity of the porous inorganic core material is 0.9 to 1.5.

15. The refractory composite constructional material according to claim 12, wherein a plurality of layers of plaster plates are adhered with an interlayer adhesive, and the interlayer adhesive comprises one or more selected from a phenol resin, an epoxy resin, an urethane resin, a melamine resin, a resorcinol resin and a vinyl acetate resin.

16. The refractory composite constructional material according to claim 12, wherein the reinforcing layer is adhered to the porous inorganic core material with a surface adhesive.

17. The refractory composite constructional material according to claim 16, wherein the surface adhesive is one or more selected from a phenol resin, an epoxy resin, a resorcinol resin and a melamine resin.

18. The refractory composite constructional material according to claim 12, wherein the porous inorganic core material comprises a board base paper stuck to at least one of the face side surface and the back side surface of the porous inorganic core material.

19. The refractory composite constructional material according to claim 1, wherein the porous inorganic core material is a plasterboard or a plaster plate having the thickness of 9.5 to 25.0 mm.

20. The refractory composite constructional material according to 19, wherein the specific gravity of the plasterboard or the plaster plate is 0.9 to 1.5.

21. The refractory composite constructional material according to 19, wherein the plasterboard has the bending strength of 80 to 350 kgf/cm² and the bending Young's modulus of 35,000 to 70,000 kgf/cm².

22. The refractory composite constructional material according to 1, wherein the porous inorganic core material is a plasterboard or a plaster plate having the specific gravity of 0.9 to 1.5.

23. The refractory composite constructional material according to 22, wherein the thickness of the plasterboard or the plaster plate is 9.5 to 25.0 mm.

24. The refractory composite constructional material according to 22, wherein the plasterboard has the bending strength of 80 to 350 kgf/cm² and the bending Young's modulus is 35,000 to 70,000 jgf/cm².

25. The refractory composite constructional material according to claim 1, wherein the porous inorganic core material is a plasterboard and the plasterboard has the bending strength of 80 to 350 kgf/cm² and the bending Young's modulus of 35,000 to 70,000 kgf/cm².

26. The refractory composite constructional material according to claim 25, wherein the thickness of the plasterboard is 9.5 to 25.0 mm.

27. The refractory composite constructional material according to claim 25, wherein the specific gravity of the plasterboard is 0.9 to 1.5.

28. The refractory composite constructional material according to claim 1, wherein the content of a thermosetting resin in the reinforcing layer is not greater than 20% by weight.

29. The refractory composite constructional material according to claim 28, wherein a water-resistant paper layer is provided between the porous inorganic core material and the reinforcing layer.

30. The refractory composite constructional material according to claim 28, further comprising a mineral layer in which a mineral fiber composed of a patterned paper impregnated with a thermosetting resin, or a core material impregnated with a thermosetting resin and a patterned paper impregnated with a thermosetting resin are successively laminated on the reinforcing layer.

31. The refractory composite constructional material according to claim 30, wherein the mineral fiber is embossed.

32. The refractory composite constructional material according to claim 30, wherein the mineral fiber is provided on the reinforcing layer on one side of the plaster plate and a backer layer composed of a core material impregnated with a thermosetting resin is further provided on the reinforcing layer on an opposite surface of the plaster plate.

33. A process for manufacturing a refractory composite constructional material, which comprises heat-pressing a mineral fiber mat in which a thermosetting resin is attached to a mineral fiber and, thereby, forming a reinforcing layer containing a mineral fiber and not greater than 20% by weight of a thermosetting resin on both sides of a plasterboard, respectively.

34. The refractory composite constructional material according to claim 1, wherein the content of the thermosetting resin is 20 to 200 parts by weight relative to 100 parts by weight of the mineral fiber.

35. The refractory composite constructional material according to claim 34, wherein the thickness of the reinforcing layer is 0.3 to 3.5 mm.

36. The refractory composite constructional material according to claim 34, wherein a ratio (t/T) of the thickness of the reinforcing layer t relative to that of the porous inorganic core material T is 0.01 to 0.7.

37. The refractory composite constructional material according to claim 34, wherein the specific gravity of the porous reinforcing layer is 0.5 to 4.0.

38. The refractory composite constructional material according to claim 34, wherein the porous inorganic material is a plasterboard.

39. The refractory composite material according to claim 1, wherein the reinforcing layer contains a composite resin composed of a thermosetting resin and an elastic polymer, and a mineral fiber.

40. The refractory composite constructional material according to claim 39, wherein the content of the elastic polymer in the composite resin is 5 to 35% by weight.

41. The refractory composite constructional material according to claim 1, wherein a patterned layer is formed on the uppermost surface of the refractory composite constructional material.

42. The refractory composite constructional material according to claim 41, wherein the patterned layer is a melamine patterned plate, a carpet, a natural wood, a patterned plywood, a natural stone, an artificial stone or a tatami.

43. The refractory composite constructional material according to claim 1, wherein the refractory composite constructional material has an electromagnetic wave shielding layer.

44. The refractory composite constructional material according to claim 43, wherein the electromagnetic wave shielding layer is a metal foil.

45. The refractory composite constructional material according to claim 44, wherein the metal foil is one or more selected from an aluminum foil, a copper foil, a zinc foil, a stainless foil, a gold foil and a silver foil.

46. The refractory composite constructional material according to claim 43, wherein the electromagnetic wave shielding layer is a composite sheet composed of an electrically-conductive filler and a resin.

47. The refractory composite constructional material according to claim 46, wherein the electrically-conductive filler is one or more selected from the group of iron, copper, aluminum, stainless, brass, zinc and carbon.

48. The refractory composite constructional material according to claim 1, wherein the refractory composite constructional material, wherein the refractory composite constructional material has a penetrated hole.

49. The refractory composite constructional material according to claim 1, wherein the refractory composite constructional material has a step.

50. The refractory composite constructional material according to claim 1, wherein the refractory composite constructional material has a notch.

51. A plasterboard comprising a plaster plate comprising a plaster and a board base paper which is stuck to at least one of the face side surface and the back side surface thereof,
wherein a covering layer for preventing a plaster powder from flying is formed on a butt end surface of the plasterboard.

52. The plasterboard according to claim 51, wherein the plaster plate is laminated in the form of two or more layers and the layers are adhered.

53. The plasterboard according to claim 51, wherein two or more layers of the plaster plate are laminated and adhered with intervening a board base paper.

54. The plasterboard according to claim 51, wherein the specific gravity of the plasterboard is 0.9 to 1.5.

55. The plasterboard according to claim 51, wherein the plasterboard is used for a refractory composite constructional material.

56. The plasterboard according to claim 51, wherein a reinforcing layer composed of a thermosetting resin and a mineral fiber is adhered to at least one of the face side surface and the back side surface of the plasterboard.

57. The plasterboard according to claim 51, wherein the covering layer is composed of an inorganic material.

58. The plasterboard according to claim 51, wherein the covering layer is composed of an organic material.

59. The plasterboard according to claim 51, wherein the covering layer forms an impregnated layer impregnated into the surface of the butt end surface.

60. A resin composition for imparting the nail endurance force which comprises a thermosetting resin and an elastic polymer.

61. The resin composition for imparting the nail endurance force according to claim 60, wherein the elastic polymer is a rubber latex, an acrylate latex, an acrylate latex, or an urethane latex.

62. The resin composition for imparting the nail endurance force according to claim 60, wherein the elastic polymer is dispersed as an emulsion solution in an uncured thermosetting resin.

63. The resin composition for imparting the nail force according to claim 60, wherein a weight ratio of a solid of a thermosetting resin and that of an elastic polymer is 95/5 to 65/35.

64. A molded sheet which comprises a porous substrate or a fibrous substrate impregnated with a cured resin composition composed of a thermosetting resin and an elastic polymer.

65. The molded sheet according to claim 64, wherein the porous substrate is a plaster plate, a porous ceramic or an urethane foam.

66. The molded sheet according to claim 64, wherein the fibrous substrate is a glass fiber, a rock wool, a ceramic fiber, a paper or a wood.

67. A molded plate which comprises a molded sheet comprising a porous substrate or a fibrous substrate impregnated with a cured resin composition composed of a thermosetting resin and an elastic polymer which is laminated on at least one side of a porous core material.

68. The molded plate according to claim 67, wherein the porous core material is a calcium silicate plate, a plasterboard, a cement plate, a pearlite plate, an asbestos cement plate, a light foamed concrete plate, a particle board, an intermediate quality fiber plate, OSB or a plywood.

69. The molded plate according to claim 67, wherein the molded plate is used for a refractory composite constructional material.

70. A composite constructional material which comprises having a core material composed of a thermosetting resin and a mineral fiber.

71. The composite constructional material according to claim 70, wherein the thermosetting resin is at least one selected from an epoxy resin, a phenol resin, a polyimide resin and melanin resin an urea resin.

72. The composite constructional material according to claim 70, wherein the mineral fiber is at least one selected from a glass fiber, a rock wool and a ceramic fiber.

73. The composite constructional material according to claim 70, wherein the composite constructional material is a wall material.

74. The composite constructional material according to claim 70, wherein the specific gravity of the core material is 0.2 to 1.0.

75. The composite constructional material according to claim 70, wherein a reinforcing layer composed of a thermosetting resin or a mineral fiber is provided on at least one side of the core material.

76. The composite constructional material according to claim 75, wherein the thermosetting resin contained in the core material or the reinforcing layer is at least one selected from an epoxy resin, a phenol resin, a polyimide resin, a melamine resin and an urea resin.

77. The composite constructional material according to claim 75, the mineral fiber contained in the core material and the reinforcing layer is at least one selected from a glass fiber, a rock wool and a ceramic fiber.

78. The composite constructional material according to claim 75, wherein the specific gravity of the core material is 0.2 to 1.0 and the specific gravity of the reinforcing layer is 0.1 to 0.5.

79. The composite constructional material according to claim 75, wherein the constructional material is a wall material.
